# EUROPEAN PATENT SPECIFICATION

(11) **EP 4 118 848 B1**
(45) Date of publication and mention of the grant of the patent: **26.11.2025**
(21) Application number: 21768137.8
(22) Date of filing: 08.03.2021
(51) Int. Cl.: H04W 4/38, H04W 48/10, H04W 84/12, H04W 64/00, H04W 12/06, H04W 4/029, H04W 4/80, H04W 88/08

(54) **PASSIVE SENSOR TRACKING USING OBSERVATIONS OF WI-FI ACCESS POINTS**
PASSIVE SENSORVERFOLGUNG MITHILFE VON BEOBACHTUNGEN VON WI-FI-ZUGANGSPUNKTEN
SUIVI DE CAPTEUR PASSIF UTILISANT DES OBSERVATIONS DE POINTS D'ACCÈS WI-FI

(30) Priority: 09.03.2020 US 202016812471; 09.03.2020 US 202016812612; 22.06.2020 US 202016907806; 17.08.2020 WO PCT/US2020/046657; 17.08.2020 WO PCT/US2020/046662; 17.08.2020 WO PCT/US2020/046667; 16.11.2020 US 202017099749; 23.11.2020 US 202017102151; 23.11.2020 US 202017102429
(43) Date of publication of application: 18.01.2023
(73) Proprietor: Troverlo, Inc., Anderson, Texas 77830 (US)
(72) Inventor: CATALENA, Cody, College Station, Texas 77845 (US)
(74) Representative: Strachan, Victoria Jane
(86) International application number: PCT/US2021/021387
(87) International publication number: WO 2021/183447

(56) References cited:
- US-A1- 2014 204 926
- US-A1- 2015 312 404
- US-A1- 2016 307 154
- US-A1- 2018 069 650
- US-A1- 2018 070 311
- US-A1- 2019 050 806
- US-A1- 2019 174 289
- US-B1- 10 111 069
- US-B1- 10 728 709

## Description

### BACKGROUND OF THE INVENTION

Wireless networking refers to the wireless exchange of information between network nodes with electromagnetic signaling. Standards setting organizations, such as the Institute of Electrical and Electronics Engineers ("IEEE"), coordinate, develop, promulgate, and maintain technical standards that facilitate implementation of wireless network standards that ensure compatibility between competing original equipment manufacturers and thereby seek to achieve widespread adoption of their respective technologies. The ubiquitous IEEE 802.11 standard specifies a Wireless Local Area Network ("WLAN") technology, commonly referred to as Wi-Fi, that facilitates wireless communication between devices and often serves as a bridge to a network carrying Internet Protocol traffic. Wi-Fi typically operates at either the 2.4 GHz or 5 GHz frequency bands in the radio portion of the electromagnetic spectrum.

In its first iterations, the IEEE 802.11a/b standards specified transfer rates of up to 11 Mbps at a range of up to 150 feet. The IEEE 802.11g amendment implemented various improvements, including Orthogonal Frequency Division Multiplexing ("OFDM"), to increase transfer rates to up to 54 Mbps while maintaining backward compatibility with IEEE 802.11b. The IEEE 802.11n amendment added Multiple Input Multiple Output ("MIMO") functionality where multiple transmitters and receivers operate simultaneously at one or both ends of the link to facilitate transfer rates of up to 300 Mbps and even higher if additional antennae are used. The IEEE 802.11ac amendment added support for spatial streams and increased channel widths to substantially increase transfer rates from 433 Mbps to several Gbps and works exclusively in the less crowded 5 GHz frequency band and at a range of up to 300 feet or more.

The IEEE 802.11 standard remains an evolving technical standard and future amendments will likely seek to increase transfer rates, improve connectivity in challenging environments, and enhance security. As such, Wi-Fi remains the most widely adopted wireless networking standard in the world.

US Patent Application Publication No. US10111069 describes a system and method for transmitting occupancy-related data from sensors to a remote server using smart phones instead of a gateway. Sensors in a building or other location collect and buffer occupancy-related data. Each sensor periodically generates an advertisement beacon with an identifier and a data payload that includes buffered occupancy-related data. The sensors wirelessly broadcast the advertisement beacons. A plurality of mobile devices (e.g., smartphones) execute an application that scans for advertisement beacons with the above-referenced identifier. In response to a mobile device with the application being in the vicinity of a sensor and detecting an advertisement beacon with the identifier, the mobile device forwards the advertisement beacon to a remote server, which uses the beacon's data payload to calculate the occupancy of a building or location.

US Patent Application Publication No. US2016/307154 describes an asset tag apparatus and method of monitoring assets uses a wireless communication protocol to generate and transmit output values of sensors coupled to a beacon within a transmission range to a computing device. The advertising message of the wireless communication protocol is transmitted when a sensor output exceeds a threshold or on periodic time basis. Historic sensor data occurring at consecutive sensor threshold exceeding events is interleaved with live sensor output data in consecutive advertising packets.

US Patent Application Publication No. US2018/070311 describes a system of saving battery power in a battery powered Wi-Fi device. The system includes a battery powered Wi-Fi device configured to transmit a customized beacon frame from the battery powered Wi-Fi device to a Wi-Fi enabled device. The customized beacon frame includes battery status information. In another form, a method of saving battery power in a battery powered Wi-Fi device. The method includes transmitting a customized beacon frame from the battery powered Wi-Fi device to a Wi-Fi enabled device. The customized beacon frame includes battery status information. In another form, a system for saving sensor battery power includes a battery powered sensor configured to transmit a customized beacon frame from the battery powered sensor to a Wi-Fi enabled device. The customized beacon frame includes sensor data. Customized beacon frame may be sent from the Wi-Fi enabled device to a wireless network.

### BRIEF SUMMARY OF THE INVENTION

According to one aspect of one or more embodiments of the present invention, a method of passive sensor tracking includes using a Wi-Fi access point that transmits a management frame comprising sensor data of a sensor as part of Wi-Fi wireless network discovery and is not required to provide any network connectivity of any kind at any time, associating unique identifying information of the Wi-Fi access point with the sensor in a sensor tracking database, receiving observation data of the Wi-Fi access point from a Wi-Fi AP Database, without requiring any particular wireless devices to authenticate to, associate with, or establish connectivity with any particular Wi-Fi access point, the observation data including the unique identifying information of the Wi-Fi access point and the sensor data of the sensor, and storing the sensor data in the sensor tracking database. The Wi-Fi AP Database receives one or more reports comprising observation data from one or more wireless devices that encounter the Wi-Fi access point.

According to one aspect of one or more embodiments of the present invention, a method of passive sensor tracking includes using a Wi-Fi access point that transmits a management frame including sensor data of a sensor as part of Wi-Fi wireless network discovery and is not required to provide any network connectivity of any kind at any time, associating unique identifying information of the Wi-Fi access point with the sensor in a sensor tracking database, receiving first observation data of the Wi-Fi access point from one or more direct reporting wireless devices that encounter the Wi-Fi access point, the first observation data including the unique identifying information of the Wi-Fi access point and first sensor data of the sensor, receiving second observation data of the Wi-Fi access point from a Wi-Fi AP Database, without requiring any particular wireless device to authenticate to, associate with, or establish connectivity withy any particular Wi-Fi access point, the second observation data including the unique identifying information of the Wi-Fi access point and second sensor data of the sensor, and storing first sensor data and second sensor data in the sensor tracking database. There is no communication between the sensor tracking database and one or more wireless devices that report their respective encounters with the Wi-Fi access point, including second observation data, to the Wi-Fi AP Database.

Other aspects of the present invention will be apparent from the following description and claims.

### BRIEF DESCRIPTION OF THE DRAWINGS

FIG. **1** shows a conventional Wi-Fi wireless network.
FIG. **2A** shows a passive scanning mode as part of the IEEE 802.11 Wi-Fi wireless network discovery process.
FIG. **2B** shows an active scanning mode as part of the IEEE 802.11 Wi-Fi wireless network discovery process.
FIG. **2C** shows a sequence of IEEE 802.11 management frames typically exchanged between a wireless device and a Wi-Fi access point as part of Wi-Fi wireless network discovery process.
FIG. **3A** shows the subtypes of IEEE 802.11 management frames.
FIG. **3B** shows the structure of a conventional IEEE 802.11 management frame representative of the type of management frames transferred between a wireless device and a Wi-Fi access point.
FIG. **4A** shows various technologies that may be used to determine a location of a wireless device and one or more Wi-Fi access points.
FIG. **4B** shows a diagram of a wireless device reporting observations of one or more Wi-Fi access points it encounters to a Wi-Fi AP Database.
FIG. **5** shows a block diagram of a conventional Wi-Fi access point.
FIG. **6** shows a block diagram of a pseudo Wi-Fi access point in accordance with one or more embodiments of the present invention.
FIG. **7A** shows a block diagram of a Wi-Fi access point-coupled sensor device in accordance with one or more embodiments of the present invention.
FIG. **7B** shows an example of a management frame transmitted by a conventional Wi-Fi access point or a pseudo Wi-Fi access point in accordance with one or more embodiments of the present invention
FIG. **8** shows a sequence of management frames exchanged between a wireless device or a pseudo Wi-Fi access point as part of Wi-Fi wireless network discovery in accordance with one or more embodiments of the present invention.
FIG. **9A** shows an example of an application of passive sensor tracking in accordance with one or more embodiments of the present invention.
FIG. **9B** shows an example of a management frame including sensor data in accordance with one or more embodiments of the present invention.
FIG. **9C** shows an example of observation data reported by a wireless device based on an encounter in accordance with one or more embodiments of the present invention.
FIG. **9D** shows an example of sensor data stored or generated by a sensor tracking database in accordance with one or more embodiments of the present invention.
FIG. 10A shows an example of an application of passive sensor tracking using observations of one or more pseudo Wi-Fi access points in accordance with one or more embodiments of the present invention.
FIG. 10B shows an example of observation data of one or more Wi-Fi access points reported by a wireless device based on an encounter in accordance with one or more embodiments of the present invention.
FIG. 10C shows an example of sensor data stored or generated by a sensor and/or asset tracking database in accordance with one or more embodiments of the present invention.
FIG. 10D shows an example of a client portal to a sensor and/or asset tracking database in accordance with one or more embodiments of the present invention.
FIG. **11** shows a system for passive sensor tracking in accordance with one or more embodiments of the present invention.
FIG. **12** shows a computing system in accordance with one or more embodiments of the present invention.

### DETAILED DESCRIPTION OF THE INVENTION

One or more embodiments of the present invention are described in detail with reference to the accompanying figures. For consistency, like elements in the various figures are denoted by like reference numerals. In the following detailed description of the present invention, specific details are described in order to provide a thorough understanding of the present invention. In other instances, aspects that are well-known to one of ordinary skill in the art are not described to avoid obscuring the description of the present invention.

Conventional asset tracking systems use dedicated and complicated hardware and software systems to track physical assets, typically within the confines of a fixed location (*e.g*., within a warehouse) or from portal-to-portal of one or more fixed locations (*e.g*., tracking departures from a warehouse and arrivals at a distributor). Some asset tracking systems use simple printed asset tracking tags configured to be optically read by a reading device, such as, for example, a barcode reader or Quick Response ("QR") reader. Other asset tracking systems use asset tracking tags configured to be read by short-range communication devices in the immediate vicinity of the tag using, for example, Near-Field Communication ("NFC"), Bluetooth Low Energy ("BLE"), Radio-Frequency Identification ("RFID"), or other short-range communication technologies. Still other asset tracking systems use asset tracking tags configured to be read at a distance using Long Range ("LoRa") networks or cellular communications. In some cases, the asset tracking system uses asset tracking tags capable of determining their own location using the Global Positioning System ("GPS") and directly reporting their own location to the asset tracking system over a communication network. However, such systems require substantial power, unobstructed access to satellite signals, and communications capabilities to self-report their location.

These conventional asset tracking systems may be referred to as closed-network systems because dedicated hardware and software systems are purposefully deployed and engaged in the asset tracking task. The asset tags must be directly read by a reader or short-range communication device in the immediate vicinity of the tag or the asset tag must be capable of determining its own location and directly reporting its own location to the asset tracking system. Thus, an inherent limitation in conventional closed-network asset tracking systems is the requirement that the tagging, tracking, hardware, and software systems must be intentionally deployed, span the zone of coverage, and purposefully perform and manage the asset tracking task. This requires extensive investment in expensive hardware and software systems and in hiring and training personnel on its usage. Moreover, in a widespread deployment of assets across many sites, perhaps even around the world, it is exceptionally difficult, if even possible, and cost prohibitive to deploy and manage a conventional closed network asset tracking system.

Accordingly, in one or more embodiments of the present invention, a method and system of passive sensor tracking uses observations of one or more Wi-Fi access points to passively track one or more sensors and associated sensor data. A Wi-Fi access point may be used that transmits a management frame including sensor data of a sensor as part of Wi-Fi wireless network discovery. The Wi-Fi access point and/or associated sensor may be disposed on, attached to, or integrated with an asset or placed in a location where sensing is desired. In contrast to closed-network tracking systems, the sensor is passively tracked only when the Wi-Fi access point, that is logically associated with the sensor in the sensor and/or asset tracking database, is encountered by a Wi-Fi enabled wireless device, without requiring an awareness on the part of the user of the wireless device that he or she is participating in the sensor tracking task. In certain embodiments, when one or more wireless devices come into Wi-Fi signaling range of a Wi-Fi access point associated with a sensor, a wireless device reports its encounter with the Wi-Fi access point to a Wi-Fi AP Database, the content of the report and the purpose of the report is typically used to improve location services. The report includes observation data including at least unique identifying information of the Wi-Fi access point encountered and sensor data of the sensor embedded in the management frame transmitted as part of Wi-Fi wireless network discovery. In other embodiments, the sensor and/or asset tracking database may receive observation data directly from one or more direct reporting wireless devices that encounter the Wi-Fi access point and indirectly from a Wi-Fi AP Database that receives observation data from one or more indirect reporting wireless devices that encounter the Wi-Fi access point and report observation data to the Wi-Fi AP Database. In still other embodiments, the sensor and/or tracking database may receive observation data directly from one or more direct reporting wireless devices that encounter the Wi-Fi access point and report the observation data to the sensor and/or tracking databases. The sensor data may be stored in the sensor and/or asset tracking database. In certain embodiments, the sensor and/or asset tracking database may also determine a location of the sensor based, at least in part, on observation data of the associated Wi-Fi access point. The observation data may further include location information of the Wi-Fi access point. In this way, a sensor may be deployed anywhere in the world with a Wi-Fi access point that is not required to associate with any wireless device or provide any network connectivity of any kind. Every smartphone in the world that merely happens to come into Wi-Fi signaling range of the Wi-Fi access point, even if only temporarily, may anonymously and without awareness participate in the sensor tracking task by reporting observation data of the Wi-Fi access point to the sensor and/or tracking database.

The method and system of passive sensor tracking is open-network because it leverages existing infrastructure inherent in smartphones and smartphone operating systems to report the unique identifying information of Wi-Fi access points they encounter as well as their location for improving the accuracy of location-based services. Advantageously, the Wi-Fi wireless network discovery protocol as well as the inherent Wi-Fi access point reporting feature of smartphones may be cooperatively used to passively track sensors associated with Wi-Fi access points, without requiring that the reporting wireless devices authenticate to, associate with, or establish connectivity with the Wi-Fi access point, using publicly accessibly Wi-Fi signals, and in passive scanning applications, completely anonymously with respect to the sensor tracking task. The sensors and associated Wi-Fi access points may be disposed with no inherent communication capabilities and in areas where there are no communication capabilities, relying on the self-reporting feature of one or more wireless devices that merely happen to encounter one or more Wi-Fi access points associated with one or more sensors. Thus, one or more sensors may be deployed and their sensor data may be reported and maintained in a sensor and/or asset tracking database in an open network that relies on one or more wireless devices that merely encounter associated Wi-Fi access points to report the sensor data.

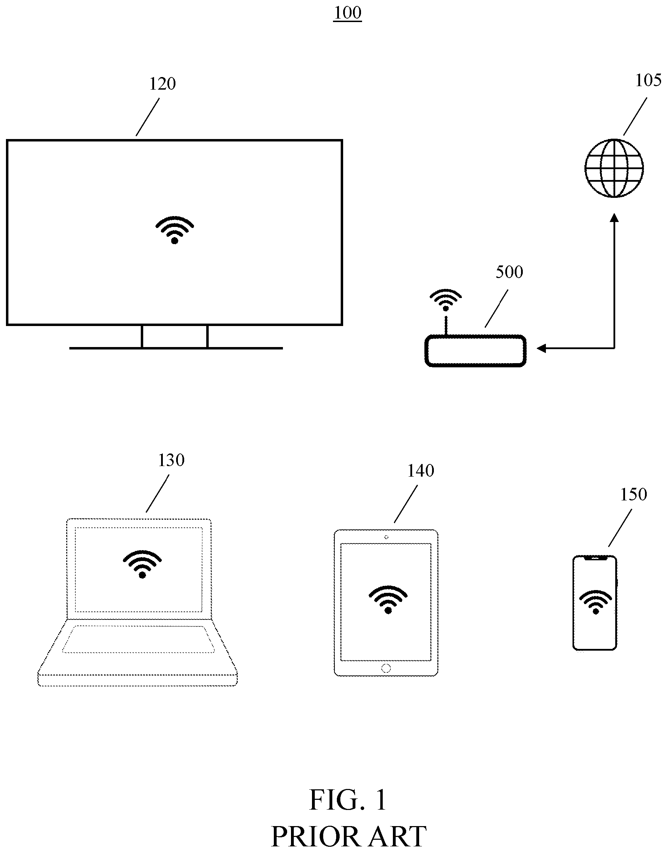

FIG. **1** shows a conventional Wi-Fi wireless network **100.** A Wi-Fi access point **500** facilitates wireless connectivity between one or more of the wireless devices and, in configurations that include an integrated router, may serve as the bridge between the wireless devices (*e.g.,* **120, 130, 140, 150)** and an upstream network connection, such as, for example, the Internet connection provided by broadband modem **105.** In conventional use, a wireless connection may be established between one or more wireless devices (*e.g.,* **120, 130, 140, 150),** including, for example, television **120,** computer **130,** tablet computer **140,** smartphone **150,** or any other wireless device, and a conventional Wi-Fi access point **500,** thereby allowing the wireless devices (*e.g.,* **120, 130, 140, 150)** to communicate with one another and/or access the Internet via broadband modem **105.** Wi-Fi access points **500** are commonly found in homes, offices, and public places, where they are often referred to as Wi-Fi hotspots. While the number of Wi-Fi access points **500** has not been definitively counted, there are believed to be in excess of thirteen billion Wi-Fi access points (*e.g.,* **500**) deployed around the world. Efforts to map Wi-Fi signal coverage suggest that most modern cities are blanketed with publicly accessible Wi-Fi signals. Notwithstanding the above, one of ordinary skill in the art will recognize that a conventional Wi-Fi wireless network **100** does not require a broadband modem **105,** Internet connectivity, or any upstream network connectivity and may be used as a purely wireless network to facilitate wireless communications between one or more wireless devices (*e.g.,* **120, 130, 140, 150**).

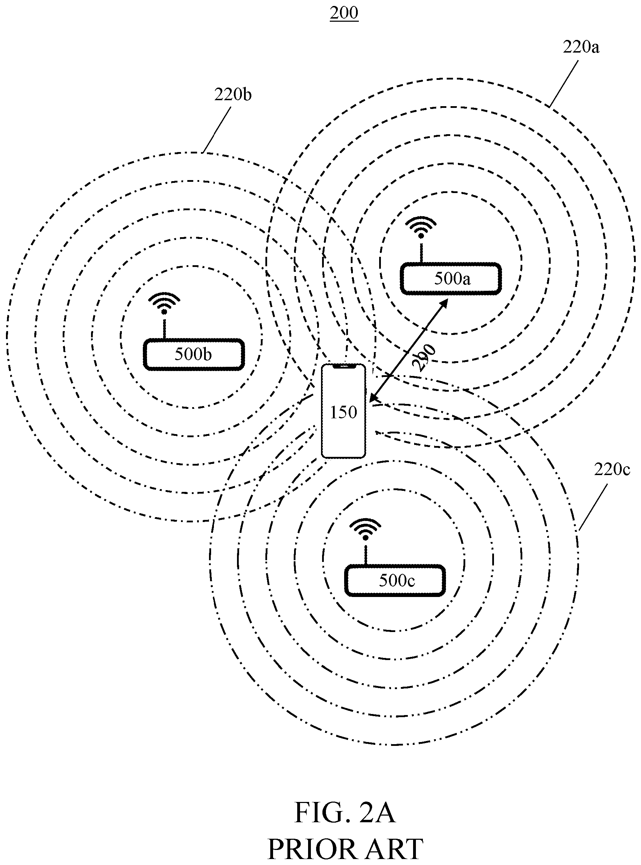

FIG. **2A** shows a passive scanning mode **200** as part of the IEEE 802.11 Wi-Fi wireless network discovery process. Wi-Fi wireless network discovery is the process by which a wireless device identifies a Wi-Fi wireless network and potentially authenticates to, associates with, and establishes data-exchanging connectivity with an in-range Wi-Fi access point (*e.g.,* **500**). In passive scanning mode, one or more wireless devices (*e.g.,* **150**) listen for beacon frames (*e.g.,* **220a**, **220b, 220c**) broadcast at periodic intervals by one or more in-range Wi-Fi access points (*e.g.,* **500a, 500b, 500c**) to announce the presence of their respective Wi-Fi wireless networks. A beacon frame (*e.g.,* **220a, 220b, 220c**) is a type of Wi-Fi management frame that includes information regarding the broadcasting Wi-Fi access point (*e.g.,* **500a, 500b, 500c**) to facilitate potential authentication, association, and connectivity. Each beacon frame (*e.g.,* **220**) includes a Service Set Identifier ("SSID"), which is typically a user-given name for the broadcasting Wi-Fi wireless network, and information that uniquely identifies the Wi-Fi access point (*e.g.,* **500a, 500b, 500c**) including, but not limited to, a unique Basic Service Set Identifier ("BSSID") or Media Access Control ("MAC") address of the Wi-Fi access point (*e.g.,* **500a, 500b, 500c**) or a broadcasting band thereof. Multiple Wi-Fi access points (*e.g.,* **500a, 500b, 500c**) may share the same SSID as part of the same wireless network, but each Wi-Fi access point (*e.g.,* **500a, 500b, 500c**) will have unique identifying information including, for example, a unique BSSID. Moreover, dual, or multi-band, Wi-Fi access points (*e.g.,* **500**) that broadcast on multiple frequency bands, may have a unique BSSID for each frequency band that they broadcast on. Manufacturers are typically assigned blocks of BSSIDs from a governing authority that the manufacturer is allowed to use for the equipment they produce. As such, the BSSID of each and every Wi-Fi access point (*e.g.,* **500**), or band thereof, should truly be unique and distinguishable from all others.

In the example depicted in the figure, a wireless device **150** such as, for example, a smartphone, may be located, even if only temporarily, within the broadcast range of one or more Wi-Fi access points **500a, 500b, 500c.** Each Wi-Fi access point **500a, 500b, 500c** may periodically broadcast their respective beacon frames **220a, 220b, 220c** announcing the presence of their respective Wi-Fi wireless networks. Wireless device **150** may listen to, and receive, beacon frames **220a, 220b, 220c** from the in-range Wi-Fi access points **500a, 500b, 500c.** In conventional applications, a user of wireless device **150** wishing to join a Wi-Fi wireless network may optionally select the SSID, sometimes referred to as the network name, of the Wi-Fi wireless network that they wish to join through the operating system of their device. Sometimes, the wireless device **150** may automatically connect to a previously joined Wi-Fi wireless network automatically based on a user preference. Once authenticated, associated, and connectivity is established, wireless device **150** may communicate **290** with Wi-Fi access point **500a,** exchanging data and potentially accessing other networks such as, for example, an upstream Internet connection (*e.g.,* **105** of FIG. **1**) through the Wi-Fi access point **500a.** It is important to note that, passive scanning **200** is completely anonymous with respect to wireless devices (*e.g.,* **150)** that receive beacon frames (*e.g.,* **220a, 220b, 220c**) of in-range Wi-Fi access points (*e.g.,* **500a, 500b, 500c**) until such time that they choose to authenticate to, and associate with, a particular Wi-Fi access point (*e.g.,* **500a**). Unless and until a user of a wireless device **150** selects a specific Wi-Fi access point (*e.g.,* **500a**) and Wi-Fi wireless network thereof to authenticate to, associate with, and establish data connectivity with, a wireless device (*e.g.,* **150**) may passively receive the Wi-Fi signals being publicly broadcast by in-range Wi-Fi access points (*e.g.,* **500a, 500b, 500c**) and any others that it may encounter while remaining completely anonymous. However, wireless devices (*e.g*., **150**) record information relating to all the Wi-Fi access points (*e.g.,* **500**) they encounter, even if they do not join a wireless network, typically without awareness on the part of the user, which may be leveraged for the asset tracking task as discussed in more detail herein.

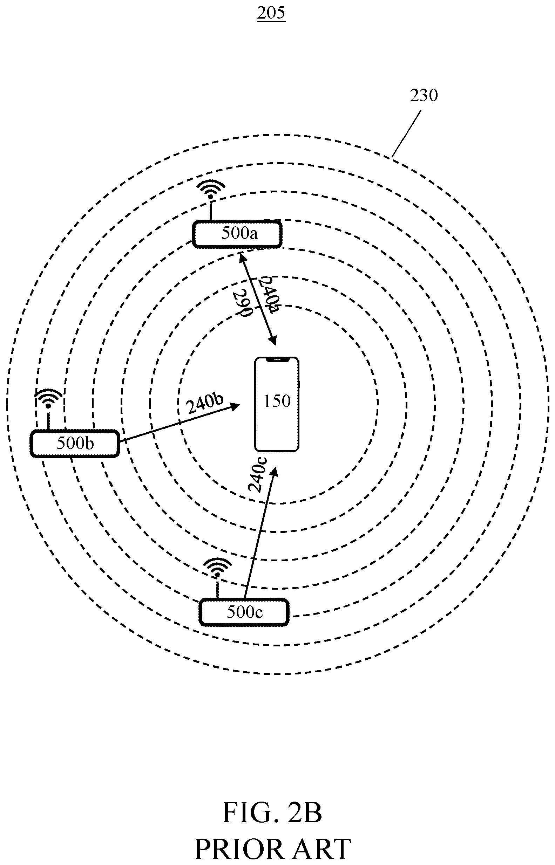

FIG. **2B** shows active scanning mode **205** as part of IEEE 802.11 Wi-Fi wireless network discovery. In contrast to passive scanning mode (*e.g.,* **200** of FIG. **2A**), active scanning mode **205** is a type of Wi-Fi wireless network discovery process where a wireless device **150** broadcasts a probe request frame **230** to a specific (*e.g.,* **500a**) or all Wi-Fi access points (*e.g.,* **500a, 500b, 500c**) that are within Wi-Fi signaling range. A probe request frame **230** is a type of Wi-Fi management frame that may include information about the specific Wi-Fi access point (*e.g.,* **500a**) that the wireless device **150** wishes to associate with, sometimes referred to as a directed probe request, or may be a probe request for all available Wi-Fi access points (*e.g.,* **500a, 500b, 500c**) within Wi-Fi signaling range, sometimes referred to as a null probe request. Responding in-range Wi-Fi access points **500a, 500b, 500c** transmit a probe response frame **240a, 240b, 240c** that includes information substantially similar to a beacon frame (*e.g.,* **220** of FIG. **2A**) including their unique BSSID and respective SSID.

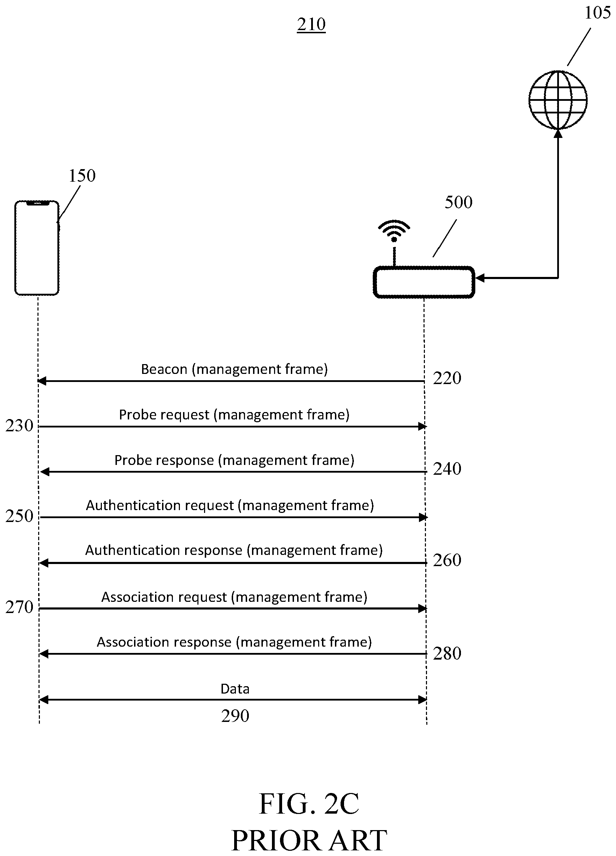

In contrast to passive scanning (*e.g*., **200** of FIG. **2A**) where each Wi-Fi access point (*e.g.,* **500**) broadcasts its respective beacon frames (*e.g.,* **220** of FIG. **2A**) on a specific channel, in active scanning mode **205,** wireless device **150** may broadcast probe request frames **230** across all available channels for the associated frequency band. In this way, wireless device **150** may, for example, select a Wi-Fi access point (*e.g.,* **500a**) that provides the strongest received signal strength and quality for the time being. However, even when a particular wireless device **150** is authenticated to, and associated with, a specific Wi-Fi access point (*e.g.,* **500a**), wireless device **150** may go off channel and continue to send probe request frames (*e.g.,* **230**) on other channels. By continuing to actively probe for Wi-Fi access points (*e.g.,* **500a, 500b, 500c**), wireless device **150** may maintain a list of known Wi-Fi access points (*e.g.,* **500a, 500b, 500c**) that may facilitate roaming should the wireless device **150** move out of range of the currently associated Wi-Fi access point (*e.g.,* **500a**) or require a better connection. In contrast to passive scanning mode (*e.g.,* **200** of FIG. **2A**), active scanning mode **205** only requires a wireless device **150** to send a probe request frame **230** on a specific channel within the designated frequency band and then listen for a comparatively smaller amount of time as compared to passive scanning (*e.g*., **200** of FIG. **2**). As such, active scanning **205** presents a more direct and targeted approach to Wi-Fi wireless network discovery process as compared to the broadcast nature of passive scanning operations (*e.g*., **200** of FIG. **2A**).

FIG. **2C** shows a sequence of IEEE 802.11 management frames **210** typically exchanged between a wireless device **150** and a Wi-Fi access point **500** as part of Wi-Fi wireless network discovery process. A wireless device **150** must successfully identify (*e.g.,* **220, 230, 240**), authenticate to (*e.g.,* **250, 260**), and associate with (*e.g.,* **270, 280**) a Wi-Fi access point **500** in order to transmit data frames (*e.g.,* **290**) containing data under the protocol. As previously discussed, Wi-Fi wireless network discovery refers to the process by which a wireless device **150** typically identifies a Wi-Fi wireless network, authenticates to (*e.g.,* **250, 260**), associates with (*e.g.,* **270**, **280**), and established data connectivity (*e.g*., **290**) with an in-range Wi-Fi access point **500** to enable data transfer with other devices and an upstream network connection, such as, for example, the Internet **105.**

The IEEE 802.11 standard specifies three different types of frames: management frames, data frames, and control frames, each of which serves a specific purpose under the protocol. For example, management frames are used for supervisory functions including Wi-Fi wireless network discovery, data frames are used to transmit data once authenticated and associated, and control frames are used to control the transmission of data. As noted above, the IEEE 802.11 standard specifies two different scenarios by which a wireless device **150** may identify, authenticate to, associate with, and establish data connectivity with a Wi-Fi access point **500** as part of the Wi-Fi wireless network discovery process.

In passive scanning mode, a wireless device **150** listens for beacon frames **220,** a type of management frame, that is broadcast at periodic intervals by in-range Wi-Fi access points **500.** The beacon frame **220** announces the presence of the Wi-Fi wireless network and associated Wi-Fi access point **500** and includes information that facilitates potential authentication to, association with, and ultimately data transmission. The information includes, for example, the BSSID and the SSID of the broadcasting Wi-Fi access point **500.** For example, the user of a wireless device **150,** in this example a smartphone, may open a wireless application on their device, see a list of SSIDs corresponding to in-range Wi-Fi access points (*e.g.,* **500**) that are broadcasting their respective beacon frames (*e.g.,* **220**), and select a specific SSID of the Wi-Fi wireless network and associated Wi-Fi access point **500** they wish to join. When the user selects the SSID of a specific Wi-Fi access point **500,** the wireless device **150** transmits a probe request frame **230,** another type of management frame, to the particular Wi-Fi access point **500** that includes the capabilities of the wireless device **150.** In the active scanning mode, without necessarily having received a beacon frame **220,** the wireless device **150** may transmit a probe request frame **230** that includes the capabilities of the wireless device **150** to a specific Wi-Fi access point **500** or all Wi-Fi access points (*e.g.,* **500**) in range. As such, the Wi-Fi wireless network discovery process may be initiated by a Wi-Fi access point **500** that broadcasts beacon frames **220** or a wireless device **150** that transmits a probe request frame **230.** Regardless of which, the remainder of the authentication and association protocol is substantially the same.

Subsequent to receipt of the probe request frame **230,** if the Wi-Fi access point **500** has compatible parameters, the Wi-Fi access point **500** transmits a probe response frame **240,** another type of management frame, to the wireless device **150.** The probe response frame **240** includes the parameters typically included in the beacon frame **220** including unique identifying information and capabilities of the Wi-Fi access point **500.** It is important to note that, at this stage of the process, the wireless device **150** is unauthenticated to, and unassociated with, the Wi-Fi access point **500,** and is not capable of transmitting data in data frames **290** under the protocol. Subsequent to receipt of the probe response frame **240,** the wireless device **150** transmits an authentication request frame **250,** another type of management frame, to the Wi-Fi access point **500.** The authentication protocol establishes whether the wireless device **150** is authenticated to the Wi-Fi access point **500,** *i.e.,* ensuring permission or access with respect to encryption (open or shared key encryption). Without discussing the details of the authentication protocol, which is unnecessary for the purpose of describing the claimed invention, it is important to note that a wireless device **150** typically cannot proceed to association and data transfer until it is has been successfully authenticated to the Wi-Fi access point **500,** as signified by an authentication response frame **260,** another type of management frame, acknowledging successful authentication.

Once authenticated to Wi-Fi access point **500,** wireless device **150** transmits an association request frame **270,** another type of management frame, to Wi-Fi access point **500.** The association request frame **270** signifies a request by the authenticated, but as yet unassociated wireless device **150** to associate with the Wi-Fi access point **500** and enable data transfer via data frames **290.** The association request **270** includes information including, for example, capabilities of the wireless device **150.** After receipt of the association request **270,** the Wi-Fi access point **500** compares the capabilities set out in the association request **270** with the capabilities of the Wi-Fi access point **500** to determine if they match. If there is a mismatch, the Wi-Fi access point **500** determines whether the differences are an issue that prevents association and data transfer. If the differences are not substantive, the Wi-Fi access point **500** transmits an association response **280,** another type of management frame, acknowledging successful association. Once the association response **280,** signifying successful association with Wi-Fi access point **500,** is received, wireless device **150** may exchange data **290** with Wi-Fi access point **500** in data frames under the protocol that are routed over a bridged network connection, typically the Internet **105,** to its final destination. It is important to note that, in order for a wireless device **150** to transmit data with Wi-Fi access point **500,** other than management frames, the wireless device **150** must authenticate to, and associate with, Wi-Fi access point **500,** thereby enabling wireless device **150** to transmit and receive data **290.** And similarly, Wi-Fi access point **500** cannot transfer data in data frames **290** to wireless device **150** until wireless device **150** has authenticated to, and associated with, Wi-Fi access point **500.**

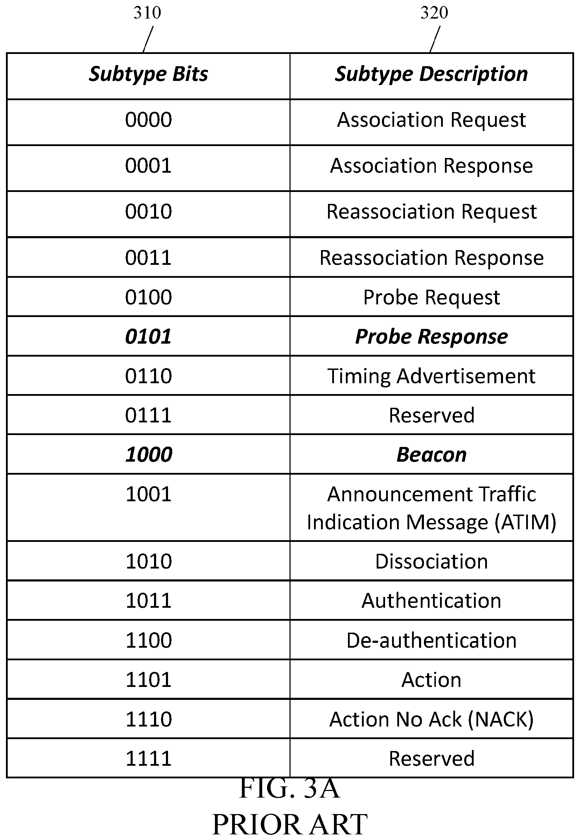

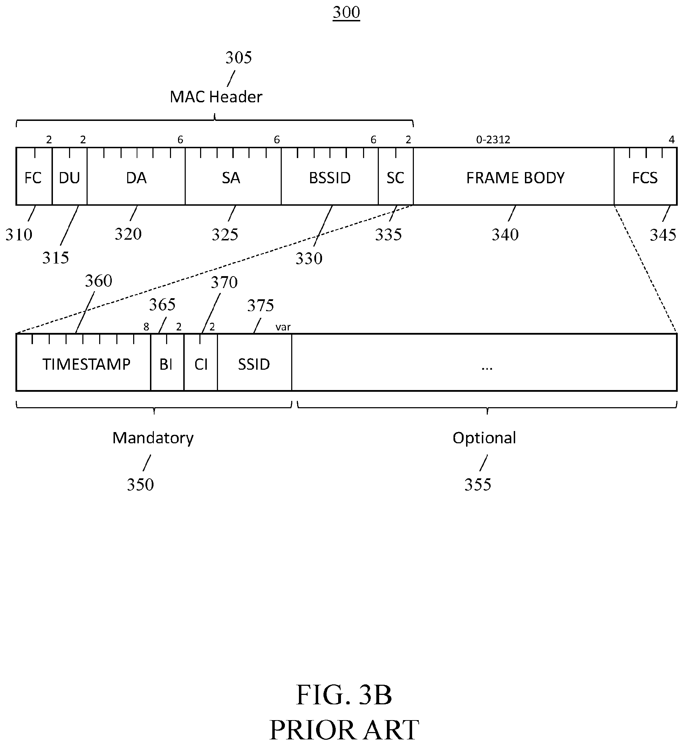

FIG. **3A** shows the subtypes of IEEE 802.11 management frames. In a conventional management frame (*e.g.,* **300** of FIG. **3B**), the first octet is defined as the Frame Control field (*e.g.,* **310** of FIG. **3B**). The first three subfields of the Frame Control field (*e.g.,* **310** of FIG. **3B**) are present in all IEEE 802.11 frames and include the protocol version (not shown), the type of frame, and the subtype of frame. The type of frame subfield indicates whether the frame is a management frame, data frame, or control frame. The subtype of frame subfield indicates the particular subtype of frame within the type. In the figure, the various subtypes of management frames are shown. The subtype bits **310** represent the binary encoded subtype described by the subtype description **320.** For purposes of the discussion that follows, emphasis will be placed on the beacon frame and probe response frame subtypes of management frames. Notwithstanding, as can be seen by the enumerated list of management frames, other management frames used for supervisory purposes relating to identification, authentication, and association by Wi-Fi wireless devices (*e.g.,* **150**) may be used in accordance with one or more embodiments of the present invention.

FIG. **3B** shows the structure of a conventional IEEE 802.11 management frame **300** representative of the type of management frames transferred between a wireless device (*e.g.,* **150**) and a Wi-Fi access point (*e.g.,* **500**)*.* The conventional management frame **300** includes a number of predetermined fields that are defined by the specification for their protocol-defined purpose. For example, MAC header **305** of management frame **300,** includes Frame Control ("FC") field **310,** Duration ("DU") field **315,** Destination Address ("DA") field **320,** Source Address ("SA") field **325,** BSSID **330,** and Sequence Control ("SC") field **335.** Management frame **300** further includes the Frame Body field **340** that includes a number of subfields, including some that may vary based on the subtype (*e.g.,* **310** of FIG. **3A**) of management frame **300.** For example, Frame Body **340** includes mandatory subfields **350** including Timestamp subfield **360,** Beacon Interval ("BI") subfield **365,** Compatibility Information ("CI") subfield **370,** SSID subfield **375,** and potentially Supported Rates subfield (not shown). Frame Body field **340** may also include one or more optional subfields **355** that also may vary based on the subtype (*e.g.,* **310** of FIG. **3A**) of management frame **300.** The end of management frame **300** includes a Frame Check Sequence ("FCS") field **345** that includes an errordetecting code. During Wi-Fi wireless network discovery, beacon frames, probe response frames, and other management frames are in the form of conventional management frame **300,** for the purpose of furthering identification, authentication to, and association with, a Wi-Fi access point (*e.g.,* **500)***.*

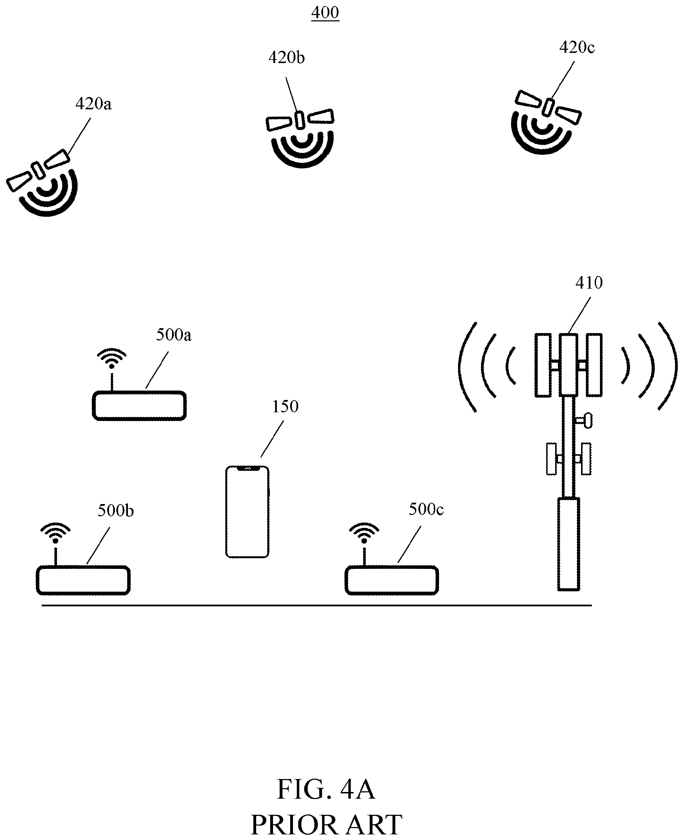

FIG. **4A** shows various technologies that may be used to determine a location of a wireless device (*e.g.,* **150)** and one or more Wi-Fi access points (*e.g.,* **500a, 500b, 500c**). A wireless device **150,** which may be a smartphone as depicted in the example or any other type or kind of wireless device, may establish a cellular connection with one or more cell towers **410** providing cellular network connectivity (if the wireless device it possesses cellular capabilities). An established connection to a particular cell tower **410** may, in some circumstances, be used to establish a location of wireless device **150** within a determinable radius of the particular cellular tower **410.** Further, patterns of connectivity to one or more cell towers **410** may be used to establish a location or potentially even the movement of wireless device **150** within a determinable radius. However, these techniques are rarely used outside of law enforcement. Instead, wireless devices **150** typically rely on GPS signals to determine their own location. Most wireless devices **150** include a GPS receiver (not independently shown) capable of receiving one or more GPS signals (not shown) from one or more GPS satellites (*e.g*., **420a, 420b, 420c)** in Earth orbit. Typically, there are at least four GPS satellites (*e.g*., **420**) visible overhead to a wireless device (*e.g.,* **150**) no matter where it is located, anywhere around the globe. Each GPS satellite **420a, 420b, 420c** transmits a GPS signal (not shown) that includes information about the satellite's current position and the current time at regular intervals. The GPS receiver of wireless device **150** receives one or more of these GPS signals and calculates how far away it is from each satellite **420a, 420b, 420c** based in part on how long it took for each respective GPS signal to arrive. If the wireless device **150** receives the GPS signal from at least three GPS satellites **420a, 420b, 420c,** the location of the wireless device **150** may be determined with a high degree of accuracy by the process referred to as trilateration. The GPS-derived location of wireless device **150** may be determined continuously, periodically, or upon the execution of software that requires location services, such as, for example, navigation software or a web browser used to search nearby places. The accuracy of GPS is within a radius of approximately 16 feet under open skies and good conditions but worsens near structures and obstructions.

In some cases, a wireless device **150** may use one or more in-range Wi-Fi access points **500a, 500b, 500c** to improve the accuracy of the GPS location determination and, in instances when GPS is not available, determine its location based on Wi-Fi positioning alone. As part of the Wi-Fi wireless network discovery process, wireless device **150** typically determines the received signal strength, sometimes referred to as Received Signal Strength Indication ("RSSI"), of the Wi-Fi signals broadcast by the in-range Wi-Fi access points **500a, 500b, 500c.** Assuming, for the purpose of this discussion, that the location of one or more Wi-Fi access points **500a, 500b, 500c** are already known to a certain degree of accuracy, the identified Wi-Fi access points **500a, 500b, 500c** and received signal strengths may be used to refine the accuracy of the GPS location determination and, in instances when GPS is not available, determine the location of the wireless device **150** based on Wi-Fi positioning alone. For example, the known location of a Wi-Fi access point **500a** and/or the received signal strength of the Wi-Fi signal received from it may be used alone or in combination with the known location and/or received signal strength of other Wi-Fi access points **500b, 500c** to refine or determine the location of wireless device .**150** by one or more processes such as, for example, RSSI, fingerprinting, angle of arrival, time of flight, or other positioning techniques including trilateration and triangulation. It is important to note that the received signal strength of the Wi-Fi signals received by wireless device **150** from one or more Wi-Fi access points **500a, 500b, 500c** are determined without requiring wireless device **150** to authenticate to, associate with, or otherwise establish connectivity with any particular Wi-Fi access point **500a, 500b, 500c.** As such, a wireless device (*e.g.,* **150**) may receive publicly broadcast Wi-Fi signals of in-range Wi-Fi access points (*e.g.,* **500a, 500b, 500c**) that it does not use or otherwise associate with in any way.

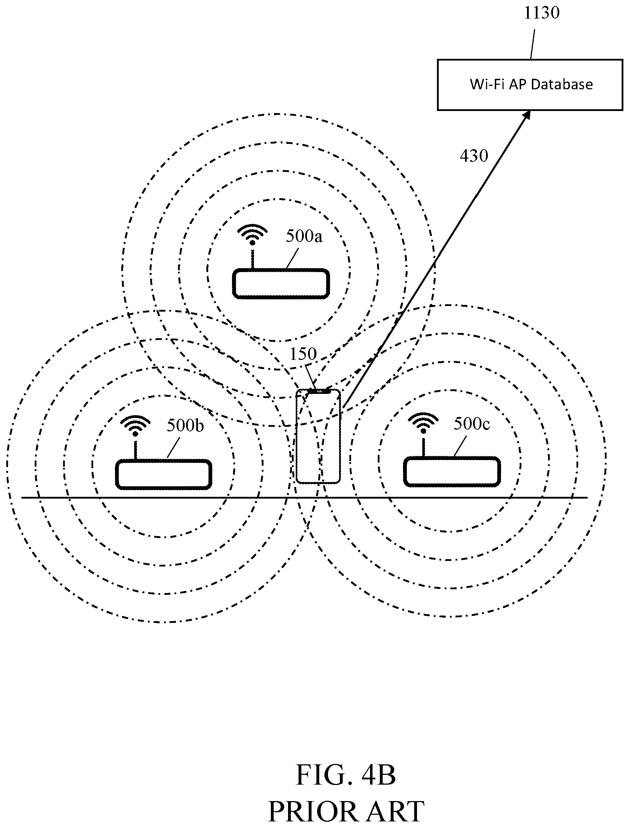

Continuing, FIG. **4B** shows a diagram of a wireless device **150** reporting observations of Wi-Fi access points **500a, 500b, 500c** it encounters to a Wi-Fi AP Database **1030.** In the discussion of FIG. **4A**, an assumption was made that the location of one or more Wi-Fi access points (*e.g.,* **500a, 500b, 500c**) were known to a certain degree of accuracy. This assumption holds true because wireless devices (*e.g.,* **150**) report any in-range Wi-Fi access points (*e.g.,* **500**) they encounter as well as location information to the original equipment manufacturer, operating system developer, and/or third-party software developer who maintain a database, referred to herein as a Wi-Fi AP Database **1130,** of observations of Wi-Fi access points (*e.g.,* **500a, 500b, 500c**). The Wi-Fi AP Database **1030** stores reported observation data **430** of Wi-Fi access points (*e.g.,* **500a, 500b, 500c**) that are conventionally used to enhance location services (*e.g*^{.}, significant locations, location-based suggestions, location-based alerts, popular near me, and the like) of end users. While this benefits the user of the wireless device **150** in providing improved services, each wireless device (*e.g.,* **150**) reports information relating to the location of one or more Wi-Fi access points (*e.g.,* **500**) it encounters on an ongoing and continuous basis, typically without awareness on the part of the user. For example, this is commonly performed in the background as part of, for example, Apple^{®} iOS^{®}, Google^{™} Android^{®}, or Microsoft^{®} location-based services and it is typically made available to third-party software developers for commercial use. In addition, many third-party software companies maintain their own Wi-Fi AP Database **1130** of observation data including the unique identifying information and location information of one or more Wi-Fi access points (*e.g.,* **500**), some of which commercially offer access to their database for a fee. For example, Cisco Systems^{®}, Facebook^{®}, WhatsApp^{®}, X-Mode^{®}, Ruckus^{®}, and Skyhook^{®} offer commercial versions of a Wi-Fi AP Database **1130.** It is important to note that the information stored in such databases is typically obtained anonymously through publicly accessible Wi-Fi access point (*e.g.,* **500**) signals and in accordance with the terms and conditions of use of most smartphones, that typically provide the user with the option of opting-out of participation in such services. Further, the reports of observation data are typically anonymous, and no record of the reporting wireless device **150** is maintained. Thus, every user of a wireless device **150,** such as a smartphone, reports observation data of Wi-Fi access points (*e.g.,* **500**) they encounter to a Wi-Fi AP Database **1130** on an ongoing and continuous basis, often without an awareness on the part of the user they are doing so, however, the user benefits from the enhanced location determination when browsing the web for nearby offerings or other location services. This behavior may be leveraged to use the existing infrastructure inherent in smartphones to report sensor data in accordance with one or more embodiments of the present invention, described in more detail herein.

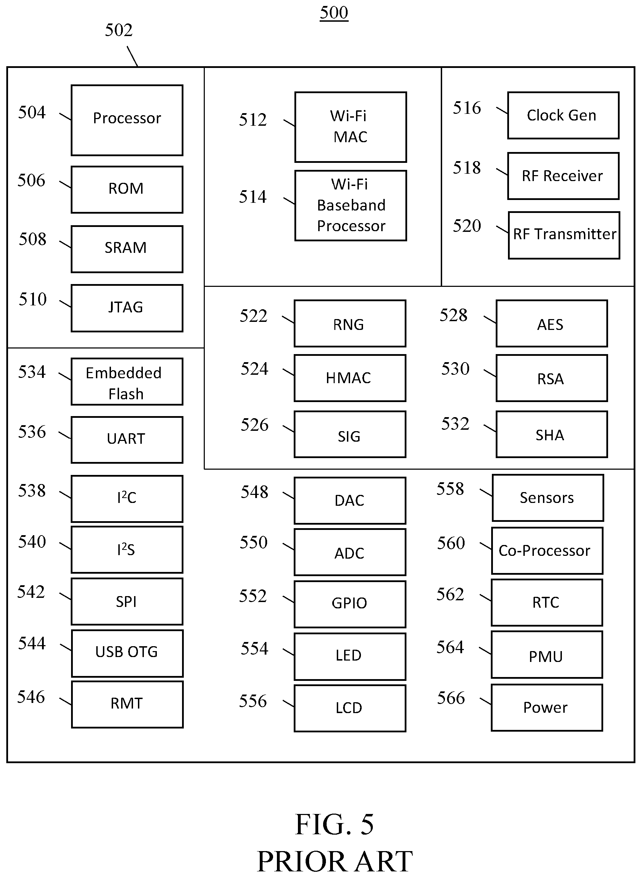

FIG. **5** shows a block diagram of a conventional Wi-Fi access point **500.** A conventional Wi-Fi access point **500** includes one or more rigid Printed Circuit Boards ("PCBs") **502** on which a plurality of components are disposed. Wi-Fi access point **500** typically includes a processor **504** that serves as the primary computational and processing engine of the device, read-only memory ("ROM") **506** that includes software instructions that governs boot up and core functionality of the device, Static Random Access Memory ("SRAM") **508** that stores data and instructions during runtime, and a Joint Test Action Group ("JTAG") **510** interface for debugging the device. Wi-Fi access point **500** includes a Wi-Fi MAC **512** that implements the full IEEE 802.11 Wi-Fi MAC protocol and a Wi-Fi baseband processor **514** that manages radio functionality of the device. Wi-Fi access point **500** includes a radio frequency ("RF") receiver **518** that demodulates RF signals to baseband signals and converts them to the digital domain, a RF transmitter **520** that modulates baseband signals to RF signals and drives the RF signals onto an antenna (not shown), and a clock generator **516** that generates clock signals for the receiver **518** and transmitter **520.** For security and implementation of authentication (*e.g.*, **250, 260** of FIG. **2C**) under the protocol, Wi-Fi access point **500** includes a random number generator ("RNG") **522,** Hash-based Message Authentication Code ("HMAC") **524,** Advanced Encryption Standard ("AES") cryptographic encryption accelerator **528,** Rivest-Shamir-Adleman ("RSA") cryptographic encryption accelerator **530,** and Secure Hash Algorithm ("SHA") **532** cryptographic encryption accelerator, and potentially others. Digital signatures **526,** as well as flash encryption and secure boot signatures **534** may be used to protect the integrity of the software of the device at boot up or during runtime.

Wi-Fi access point **500** typically includes a plurality of peripheral interfaces that are used to flash, program, debug, control, or operate the device including, Universal Asynchronous Receiver-Transmitter ("UART") **536,** I²C **538,** I²S **540,** Serial Peripheral Interface ("SPI") **543,** Universal Serial Bus ("USB") On the Go ("OTG") **544,** and infrared remote control ("RMT") **546.** In addition, Wi-Fi access point **500** includes an Digital-to-Analog Converter ("DAC") **548,** a Analog-to-Digital Converter ("ADC") **550,** a plurality of General Purpose Inputs and Outputs ("GPIOs") **552,** a Light Emitting Diode ("LED") interface **554,** a Liquid Crystal Display ("LCD") interface **556,** and one or more sensors **558.** In addition, Wi-Fi access point **500** includes various housekeeping components, including, for example, a co-processor **560** typically used to wake the device up from a low power state, a real time clock ("RTC") **562** to keep time, a Power Management Unit ("PMU") **564** to control the power state of the device, and a power supply **566** that powers the device. The assembled PCB **502,** and components disposed thereon, are typically disposed within a mechanical case (not shown) that includes one or more external antennae (not shown).

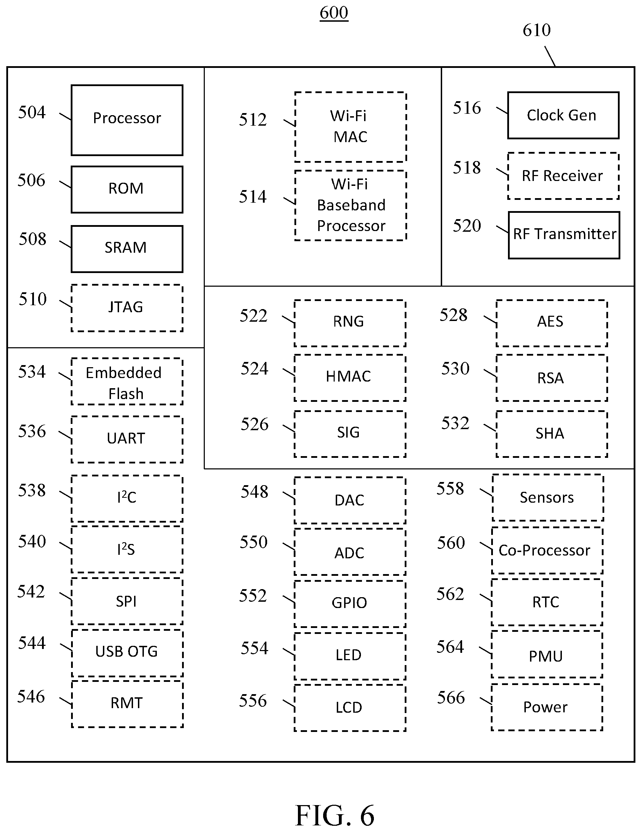

FIG. **6** shows a block diagram of a pseudo Wi-Fi access point **600** in accordance with one or more embodiments of the present invention. In recognition of the fact that the full functionality of a conventional Wi-Fi access point (*e.g.,* **500** of FIG. **5**) may not be not necessary for the sensor tracking task and in further recognition of the fact that many sensor tracking applications may benefit from a device having reduced power consumption in a smaller and potentially unique footprint, a pseudo, or dummy, Wi-Fi access point **600** may be used for the sensor tracking task in accordance with one or more embodiments of the present invention.

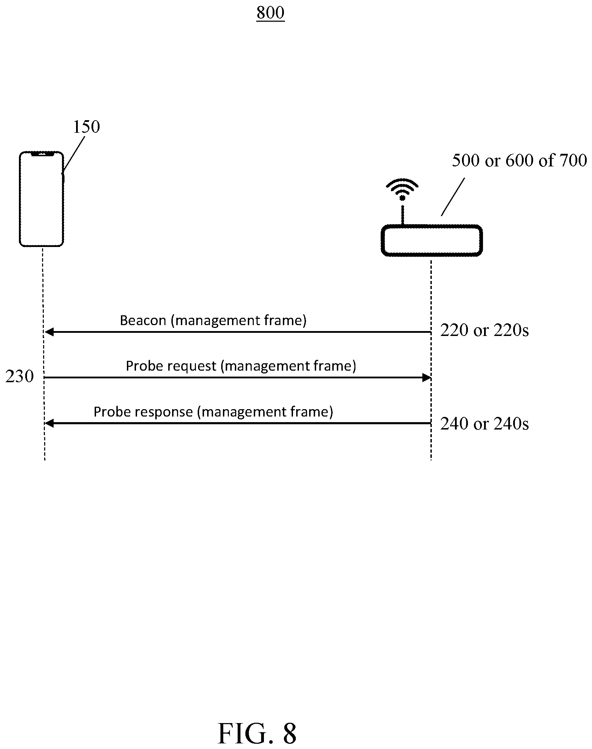

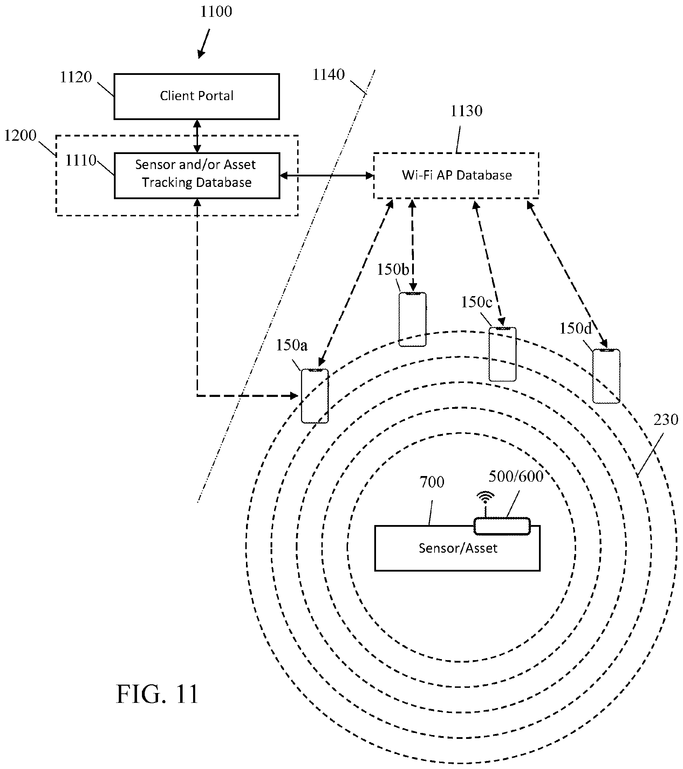

For the purpose of this disclosure, a pseudo Wi-Fi access point **600** is any device that is capable of participating in at least part of the Wi-Fi wireless network discovery process by broadcasting beacon frames (*e.g.,* **220** of FIG. **2C** or **220s** of FIG. **8**), probe response frames (*e.g.,* **240** of FIG. **2C** or **240s** of FIG. **8**), or other management frames (not shown) including its unique identifying information and additional information, but is not required to participate in authentication (*e.g*., **250***,* **260** of FIG. **2C**), association (*e.g.,* **270, 280** of FIG. **2C**), or data transfer (*e.g.,* **290** of FIG. **2C**) under the protocol. In essence, a pseudo Wi-Fi access point **600** is only required to participate in a portion of the Wi-Fi wireless network discovery process that enables one or more wireless devices (*e.g.,* **150** of FIG. **11**) to observe a pseudo Wi-Fi access point **600** and report the encounter with the pseudo Wi-Fi access point **600** as if it were a bona fide conventional Wi-Fi access point (*e.g.,* **500** of FIG. **5**). From the perspective of the one or more wireless devices (*e.g.,* **150** of FIG. **11**) that encounter a pseudo Wi-Fi access point **600,** it may appear to be a bona fide conventional Wi-Fi access point (*e.g.,* **500** of FIG. *5*), at least with respect to identification. As such, a pseudo Wi-Fi access point **600** may communicate at least the unique identifying information (*e.g*., BSSID) of the pseudo Wi-Fi access point **600** and additional data to one or more wireless devices (*e.g.,* **150** of FIG. **11**) in a similar manner to the way a conventional Wi-Fi access point (*e.g.,* **500** of FIG. **5**) would convey its own unique identifying information (*e.g*., its BSSID) as part of the Wi-Fi wireless network discovery process, thereby enabling the sensor tracking task, without requiring more.

In certain embodiments, a pseudo Wi-Fi access point **600** may not require one or more components or features to reduce the size, complexity, and power consumption of the device for use in the sensor and/or asset tracking task. For example, a pseudo Wi-Fi access point **600** may not require various cryptographic encryption accelerators (*e.g.,* **522, 524, 526, 528, 530, 532** of FIG. **5**) that are used for authentication (*e.g*., **250, 260** of FIG. **2C**), since pseudo Wi-Fi access point **600** is not required to authenticate any wireless device (*e.g.,* **150** of FIG. **11**). In addition, a pseudo Wi-Fi access point 600 may not require one or more interfaces including, for example, embedded flash **534,** UART **536,** I²C **540,** I²S **540, SPI 542,** USB OTG **544,** RMT **546,** GPIO **552,** LED **554,** LCD **556,** or sensors **558.** In addition, a pseudo Wi-Fi access point **600** may not require one or more coprocessors **560,** RTC **562,** PMU **564,** or external power supply **566.** As such, in such embodiments, a pseudo Wi-Fi access point **600** may exclude one or more of the above-noted components or features that are not required for the sensor tracking task.

In other embodiments, a pseudo Wi-Fi access point **600** may be implemented by incorporating only those components or features necessary for the sensor and/or asset tracking task in a System On a Chip ("SOC") **610,** Field Programmable Gate Array ("FPGA") (not shown), configurable processor (not shown), or Application Specific Integrated Circuit ("ASIC") or other highly integrated device. In such embodiments, any one or more of the components or features of a conventional Wi-Fi access point (*e.g.,* **500** of FIG. **5**) required to enable the sensor and/or asset tracking task may be integrated as part of the SOC **610.** The reduced complexity of a pseudo Wi-Fi access point **600** allows for greater integration and reduced power consumption, enabling new small form factors that are advantageous to the sensor and/or asset tracking task, including the use of flexible substrates and/or integration with other devices or systems. As such, in such embodiments, a pseudo Wi-Fi access point **600** may exclude one or more of the above-noted components or features that are not required for the sensor tracking task.

In still other embodiments, a pseudo Wi-Fi access point **600** may be a modified version of a conventional Wi-Fi access point (*e.g.,* **500** of FIG. **5**) or SOC (not shown) where any one or more of the above-noted components or features may be disabled or turned off. As such, in such embodiments, a pseudo Wi-Fi access point **600** may disable one or more of the above-noted components or features a conventional Wi-Fi access point (*e.g.,* **500** of FIG. **5**) that are not required for the sensor tracking task.

One of ordinary skill in the art will recognize that any pseudo Wi-Fi access point **600,** or variation thereof, capable of participating in at least part of the Wi-Fi wireless network discovery protocol as if it were a bona fide conventional Wi-Fi access point *(e.g.,* **500** of FIG. **5**) may be used in the sensor tracking task in accordance with one or more embodiments of the present invention. Further, in certain embodiments, a pseudo Wi-Fi access point **600** may be said to spoof, or emulate, beacon frames (*e.g.,* **220s** of FIG. **8**), probe response frames (*e.g.,* **240s** of FIG. **8**), or other management frames (not shown) since a pseudo Wi-Fi access point **600** is not a bona fide conventional Wi-Fi access point (*e.g.,* **500** of FIG. **5**) capable of authenticating to, associating with, and performing data transfer under the protocol. In a given application, a combination of one or more conventional Wi-Fi access points (*e.g.,* **500** of FIG. **5**) and/or one or more pseudo Wi-Fi access points **600** may be used in the sensor and/or asset tracking task. For example, in certain embodiments, only pseudo Wi-Fi access points **600** may be used as part of one or more methods of passive sensor tracking. In other embodiments, only conventional Wi-Fi access points (*e.g.,* **500** of FIG. **5**) may be used as part of one or more methods of passive sensor tracking. In still other embodiments, one or more conventional Wi-Fi access points (*e.g.,* **500** of FIG. **5**) and one or more pseudo Wi-Fi access points **600** may be used as part of one or more methods of passive sensor tracking. One of ordinary skill in the art will recognize that the methods of passive sensor tracking disclosed herein may be flexibly adapted for a given application or design in accordance with one or more embodiments of the present invention.

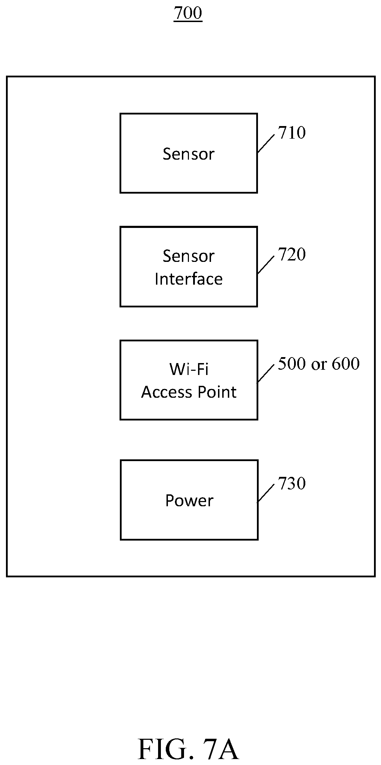

One of ordinary skill in the art, having the benefit of this disclosure, will appreciate that one or more wireless devices (*e.g.,* **150** of FIG. **11**) that encounter a pseudo Wi-Fi access point (*e.g.,* **600** of FIG. **7A**) will not be able to distinguish it from a conventional Wi-Fi access point (*e.g.,* **500** of FIG. **7A**) for the purposes of the identification portions of the Wi-Fi wireless network discovery process in accordance with one or more embodiments of the present invention. As such, a pseudo Wi-Fi access point (*e.g.,* **600** of FIG. **7A**) will appear, and be reported, as if it is a conventional Wi-Fi access point (*e.g.,* **500** of FIG. **7A**). One of ordinary skill in the art will further recognize that, for the sensor tracking task, either a conventional Wi-Fi access point (*e.g.,* **500** of FIG. **7A**) or pseudo Wi-Fi access point (*e.g.,* **600** of FIG. **7A**) may be used in accordance with one or more embodiments of the present invention.

FIG. **7A** shows a block diagram of a Wi-Fi access point-coupled sensor system **700** in accordance with one or more embodiments of the present invention. A Wi-Fi access point-coupled sensor system **700** may include one or more sensors **710,** a sensor interface **720,** and a conventional Wi-Fi access point (*e.g.,* **500** of FIG. **5**) or a pseudo Wi-Fi access point (*e.g.,* **600** of FIG. **6**). One of ordinary skill in the art will recognize that these components and the functions they perform may be flexibly configured based on an application or design. As such, the description that follows is to facilitate understanding, but is not intended to be limiting. For the sake of clarity, any device or system that facilitates a Wi-Fi access point transmitting a management frame comprising sensor data may constitute a Wi-Fi access point-coupled sensor system **700** for use in the sensor tracking task in accordance with one or more embodiments of the present invention.

A sensor **710** may be any type or kind of sensor that senses a physical property of its environment and generates output (not independently illustrated) corresponding to the physical property sensed. The output generated by a sensor **710** may vary based on the type or kind of sensor or sensors **710** used based on an application or design. In certain embodiments, one or more sensors **710** may be integrated with the Wi-Fi access point (*e.g.,* **500** or **600** of FIG. **7A**) or another component of Wi-Fi access point-coupled sensor system **700.** In other embodiments, sensor **710** may be a discrete device configured to interface with a Wi-Fi access point (*e.g.,* **500** or **600** of FIG. **7A**) by way of sensor interface **720.**

In one or more embodiments of the present invention, a sensor **710** may be, for example, an acoustic sensor, an ultrasonic sensor, an infrared sensor, a light sensor, a color sensor, an electric sensor, a continuity sensor, a resistance sensor, an inductance sensor, a capacitance sensor, an electric field sensor, a magnetic sensor, a temperature sensor, a thermal sensor, a mechanical sensor, a pressure sensor, a humidity sensor, a proximity sensor, a contact sensor, a tilt sensor, a chemical sensor, a moisture sensor, a smoke sensor, a gas sensor, an alcohol sensor, a seismic sensor, a distance sensor, a touch sensor, a GPS receiver, or combinations of one or more thereof. One of ordinary skill in the art will recognize that any type or kind of sensor, or combinations thereof, capable of outputting sensed data may be used in accordance with one or more embodiments of the present invention.

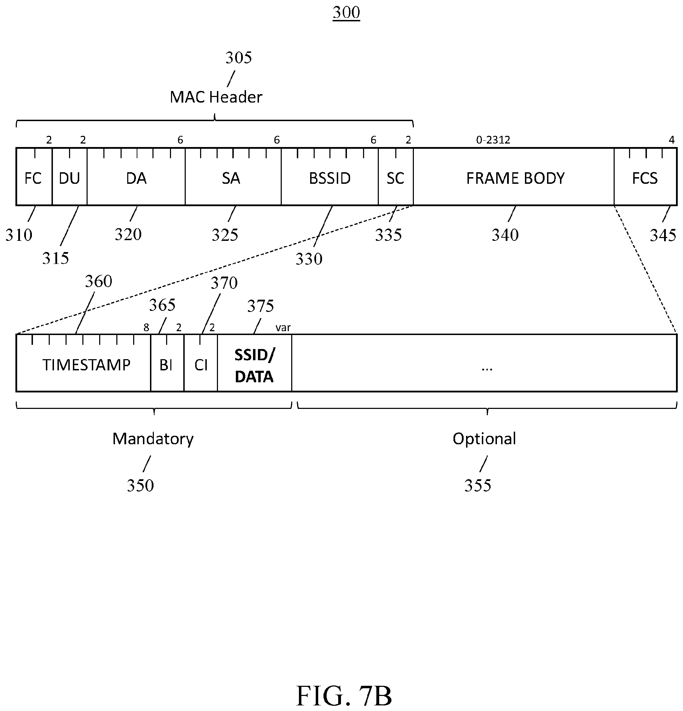

Sensor interface **720** may convert output of one or more sensors **710** into sensor data (not shown) suitable for being disposed in a management frame (*e.g.,* **300** of FIG. **7B**) transmitted by the Wi-Fi access point (*e.g.,* **500** or **600** of FIG. **7A**) of the Wi-Fi access point-coupled sensor system **700.** Sensor interface **720** make take output of one or more sensors **710,** the form or format of which may vary based on the type or kind of sensor or sensors **710** used, and produce sensor data in a form or format capable of being disposed in a management frame (*e.g.,* **300** of FIG. **7B**) transmitted by the Wi-Fi access point (*e.g.,* **500** or **600** of FIG. **7A**) of the Wi-Fi access point-coupled sensor system **700** as part of Wi-Fi wireless network discovery. For example, a temperature sensor **710** may sense the temperature and output an electrical signal corresponding to temperature. Sensor interface **720** may input this electrical signal and generate sensor data (not shown) corresponding to the sensed temperature. In one or more embodiments of the present invention, sensor interface **720** may generate sensor data (not shown) continuously, periodically, upon predetermined intervals, at a specific time or date, or upon a predetermined triggering condition. One of ordinary skill in the art will appreciate that the timing of updates to sensor data (not shown) may vary based on the application or design and the corresponding type or kind of power supply **730** used. For example, if sensor system **700** is powered **730** by a battery-powered supply, the timing of updates to sensor data (not shown) may be adjusted to achieve maximum operating life under battery power. In non-battery powered **730** applications, where available power is not constrained, the timing of updates to sensor data (not shown) may vary based on the application or design. One of ordinary skill in the art will recognize that the manner and frequency of updating sensor data (not shown) may vary based on an application or design in accordance with one or more embodiments of the present invention. In addition, one of ordinary skill in the art will recognize that sensor interface **720** facilitates disposing data in a management frame *(e.g.,* **300** of FIG. **7B**) transmitted by the Wi-Fi access point *(e.g.,* **500** or **600** of FIG. 7A) of the Wi-Fi access point-coupled sensor system **700.** As such, sensor interface **720,** and the function it performs, may be integrated or distributed among other components of the system **700.**

Wi-Fi access point-coupled sensor system **700** may use a conventional Wi-Fi access point (*e.g.,* **500** of FIG. **5**) or a pseudo Wi-Fi access point (*e.g.,* **600** of FIG. **6**) that may be coupled to sensor **710** by way of sensor interface **720.** The conventional Wi-Fi access point (*e.g.,* **500** of FIG. **5**) or pseudo Wi-Fi access point (*e.g.,* **600** of FIG. **6**) of sensor system **700** may transmit one or more beacon frames (*e.g.,* **220** of FIG. **2C** or **220s** of FIG. **8**), probe response frames (*e.g.,* **240** of FIG. **2C** or **240s** of FIG. **8**), or other management frames comprising the sensor data (not shown) of sensor **710** as part of Wi-Fi wireless network discovery. As such, whenever one or more wireless devices (*e.g.,* **150** of FIG. **11**) merely happen to come into Wi-Fi signaling range of the Wi-Fi access point (*e.g.,* **500** or **600** of FIG. **7A**) of sensor system **700,** one or more wireless devices (*e.g.,* **150** of FIG. **11**) may receive one or more management frames (*e.g.,* **300** of FIG. **7B**) from the Wi-Fi access point (*e.g.,* **500** or **600** of FIG. **7A**) comprising sensor data (not shown). The one or more wireless devices (*e.g.,* **150** of FIG. **11**) may report observation data relating to their encounter with the Wi-Fi access point (*e.g.,* **500** or **600** of FIG. **7A**), including the unique identifying information of the Wi-Fi access point (*e.g.,* **500** or **600** of FIG. **7A**), sensor data (not shown) of sensor **710,** and potentially additional information obtained from one or more management frames (*e.g.,* **300** of FIG. **7B**) transmitted by the Wi-Fi access point (*e.g.,* **500** or **600** of FIG. **7A**), without requiring an awareness on the part of a user of a wireless device (*e.g.,* **150** of FIG. **11**) that it even received, and reported, sensor data (not shown).

In certain embodiments, sensor system **700** may be a conventional Wi-Fi access point (*e.g.,* **500** of FIG. **5**) or a pseudo Wi-Fi access point (*e.g.,* **600** of FIG. **6**) that includes one or more integrated sensors **710** (*e.g.,* **558** of **FIG. 5** or **FIG. 6**) and software modified to place the sensor data (not shown) in a management frame (*e.g.,* **300** of FIG. **7B****)** transmitted by the conventional Wi-Fi access point (*e.g.,* **500** of FIG. **5****)** or pseudo Wi-Fi access point (*e.g.,* **600** of FIG. **6**) of the Wi-Fi access point-coupled sensor system **700.** In other embodiments, a conventional Wi-Fi access point (*e.g.,* **500** of FIG. **5**) or a pseudo Wi-Fi access point (*e.g.,* **600** of FIG. **6**) may receive output of a discrete sensor **710** via one or more interfaces, including, for example, GPIOs (*e.g.,* **552** of FIG. **5** or FIG. **6**). In such embodiments, the software (*e.g*., **506** of FIG. **5** or FIG. **6**) executing thereon, in combination with the processor (e.g*.,* **504** of FIG. **5** or FIG. **6**), and potentially an ADC (*e.g.,* **550** of FIG. **5** or FIG. **6**) or DAC (*e.g.,* **548** of FIG. **5** or FIG. **6**) may serve as the sensor interface **720** and the software (*e.g*., **506** of FIG. **5** or FIG. **6**) may be modified to place the sensor data (not shown) in a management frame (*e.g.,* **300** of FIG. **7B**) transmitted by the conventional Wi-Fi access point (*e.g.,* **500** of FIG. **5**) or pseudo Wi-Fi access point (*e.g.,* **600** of FIG. **6**). In still other embodiments, sensor system **700** may be implemented by incorporating one or more of the above-noted components or features, including a conventional Wi-Fi access point (*e.g.,* **500** of FIG. **5**) or a pseudo Wi-Fi access point (*e.g.,* **600** of FIG. **6**), in a SOC, FPGA, configurable processor, or ASIC, or other type of system not shown, potentially with one or more discrete sensors **710.** One of ordinary skill in the art will recognize any combination of components or features, in any configuration or form factor, capable of placing sensor data (not shown) in a management frame (*e.g.,* **300** of FIG. **7B**) broadcast by a Wi-Fi access point (*e.g.,* **500** or **600** of FIG. **7A**) may be used as a Wi-Fi access point-coupled sensor system **700** in accordance with one or more embodiments of the present invention.

Continuing, FIG. **7B** shows an example of a management frame **300** transmitted by a Wi-Fi access point (*e.g.,* **500** or **600** of FIG. **7A**) of a Wi-Fi access point-coupled sensor system (*e.g*., **700** of FIG. **7A**) in accordance with one or more embodiments of the present invention. Since the Wi-Fi access point (*e.g.,* **500** or **600** of FIG. **7A**) is only required to participate in, at least part of, Wi-Fi wireless network discovery in order to transmit unique identifying information, sensor data, and potentially location information, a beacon frame (*e.g.,* **220** of FIG. **2C** or **220s** of FIG. **8**), probe response frame (*e.g.,* **240** of FIG. **2C** or **240s** of FIG. **8**), or other management frame, having the same format as a conventional management frame (*e.g.,* **300** of FIG. **3B**) may be used. However, the beacon frame (*e.g.,* **220** of FIG. **2C** or 220s of FIG. 8), probe response frame *(e.g.,* 240 of FIG. 2C or 240s of FIG. 8), or other management frame may include sensor data in one or more fields of a management frame 300 transmitted as part of Wi-Fi wireless network discovery.

In the example depicted in the figure, sensor data may be disposed in the SSID field 375. The SSID field 375 may advantageously be used because both beacon frames *(e.g.,* 220 of FIG. 2C or 220s of FIG. 8) and probe response frames *(e.g.,* 240 of FIG. 2C or 240s of FIG. 8) transmitted as part of Wi-Fi wireless network discovery include unique identifying information of the Wi-Fi access point *(e.g.,* 500 or 600 of FIG. 7A), including BSSID 330, and SSID 375, which in this example, may include sensor data rather than the name of a wireless network. In this way, additional information may be disposed in certain fields, in either numeric or alphanumeric form, with or without encoding of a beacon frame (*e.g.,* **220** of FIG. **2C** or **220s** of FIG. **8**), probe response frame (*e.g.,* **240** of FIG. **2C** or **240s** of FIG. **8**), or other management frame. While any field of management frame **300** may potentially be used, the one or more fields selected to dispose additional information, such as, for example, sensor data, may be selected such that they are field or fields reported by a wireless device (*e.g.,* **150** of FIG. **11**) that encounters the Wi-Fi access point (*e.g.,* **500** or **600** of FIG. **7A**), typically as part of the inherent reporting feature used for improving location services. Continuing the example depicted in the figure, BSSID field **330** may be used to uniquely identify the Wi-Fi access point (*e.g.,* **500** or **600** of FIG. **7A**) and sensor data may be obtained from SSID field **375.**

When a wireless device (*e.g.,* **150** of FIG. **11**) encounters the Wi-Fi access point (*e.g.,* **500** or **600** of FIG. **7A**), the wireless device (*e.g.,* **150** of FIG. **11**) reports observation data including, at least, BSSID **330** and SSID **375** of the Wi-Fi access point (*e.g.,* **500** or **600** of FIG. **7A**) it encountered. The beacon frame (*e.g.,* **220** of FIG. **2C** or **220s** of FIG. **8**), probe response frame (*e.g.,* **240** of FIG. **2C** or **240s** of FIG. **8**) or other management frame (not shown) transmitted by the Wi-Fi access point (*e.g.,* **500** or **600** of FIG. **7A**) may include additional data, such as, for example, sensor data, in the SSID field **375**. The wireless device (*e.g.,* **150** of FIG. **11**) may report observation data including the unique identifying information, BSSID **330,** of the Wi-Fi access point (*e.g.,* **500** or **600** of FIG. **7A**) and additional data, such as, for example, sensor data, stored within the SSID **375,** to a sensor and/or asset tracking database (*e.g*., **1110** of FIG. **11**) and/or a Wi-Fi AP Database *(e.g.,* 1130 of FIG. 11), which may then be used as part of the sensor or asset tracking task. One of ordinary skill in the art will appreciate that the use of the SSID field 375 is merely exemplary and other fields may be used in accordance with one or more embodiments of the present invention.

FIG. 8 shows a sequence of management frames exchanged between a wireless device 150 and a Wi-Fi access point *(e.g.,* 500 or 600 of FIG. 7A) as part of Wi-Fi wireless network discovery in accordance with one or more embodiments of the present invention. As previously discussed, a Wi-Fi access point (*e.g.,* 500 or 600 of FIG. 7A) of a Wi-Fi access point-coupled sensor system (*e.g*., 700 of FIG. 7A) is only required to participate, in a limited manner, in the Wi-Fi wireless network discovery process. The Wi-Fi access point (*e.g.,* **500** or **600** of FIG. **7A**) may transmit a beacon frame **220** or pseudo, spoofed, or emulated beacon frame **220s,** probe response frame **240** or pseudo, spoofed, or emulated probe response frame **240s,** or other management frame (not shown) that appear to be a bona fide management frame (*e.g.,* **300** of FIG. **3B**) to the receiving wireless device **150,** but may be non-traditional management frame (*e.g.,* **300** of FIG. **7B**) including additional data, such as sensor data (*e.g.,* **375**). However, the Wi-Fi access point (*e.g.,* **500** or **600** of FIG. **7A**) is not required to allow a wireless device **150** to authenticate to (*e.g.,* **250, 260** of FIG. **2C**), associate with (*e.g.,* **270, 280** of FIG. **2C**), or transfer data (*e.g.,* **290** of FIG. **2C**) under the protocol with the Wi-Fi access point (*e.g.,* **500** or **600** of FIG. **7A**). In addition, the Wi-Fi access point (*e.g.,* **500** or **600** of FIG. **7A**) is not required to provide any upstream network connectivity or any network connectivity of any kind. As such, in certain embodiments, the Wi-Fi access point (*e.g.,* **500** or **600** of FIG. **7A**) does not allow a wireless device **150** to authenticate to (*e.g.,* **250, 260** of FIG. **2C**), associate with (*e.g.,* **270, 280** of FIG. **2C**), or transfer data (*e.g.,* **290** of FIG. **2C**) under the protocol with the Wi-Fi access point (*e.g.,* **500** or **600** of FIG. **7A**) and the Wi-Fi access point (*e.g.,* **500** or **600** of FIG. **7A**) does not provide upstream network connectivity. In such embodiments, a wireless device **150** cannot proceed to authentication or association and, in certain embodiments, will not receive anything from the Wi-Fi access point (*e.g.,* **500** or **600** of FIG. **7A**) other than one or more beacon frames **220** or **220s,** probe response frames **240** or **240s,** or other management frames (not shown) that include sensor data. One of ordinary skill in the art will recognize that, in certain embodiments, only portions of the Wi-Fi wireless network discovery process may be required for the sensor or asset tracking task when using a Wi-Fi access point (*e.g.,* **500** or **600** of FIG. **7A**) in accordance with one or more embodiments of the present invention.

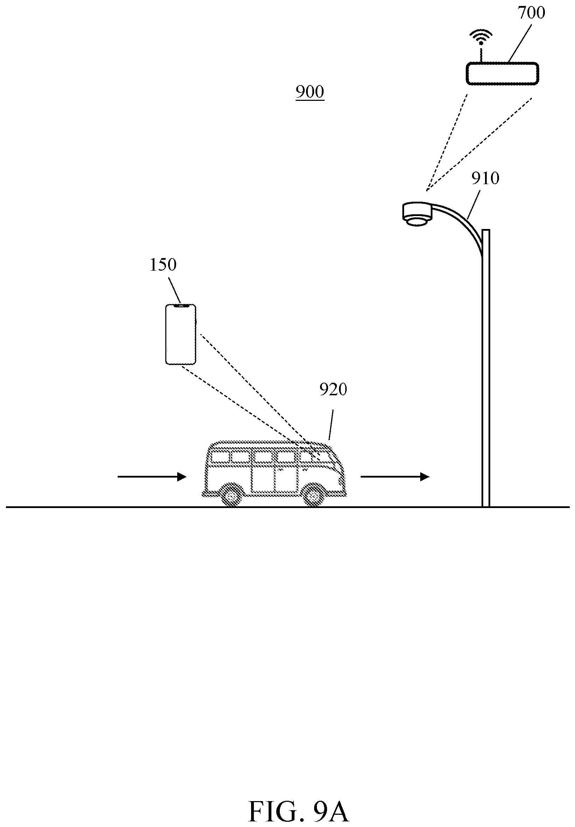

FIG. **9A** shows an example of an application of passive sensor tracking in accordance with one or more embodiments of the present invention. For the purposes of illustration, consider the example of a streetlight fixture **910** with a Wi-Fi access point-coupled sensor system **700** disposed thereon, attached thereto, or integrated therewith. A sensor (*e.g.,* **710** of FIG. **7A**) may be configured to sense the condition of a light bulb of the streetlight **910.** In such a configuration, for the purpose of example only, the sensor (*e.g.,* **710** of FIG. **7A**) may be a continuity sensor, where the lack of electrical continuity may indicate that the light bulb of streetlight **910** is burned out. It is important to recognize that Wi-Fi access point-coupled sensor system **700** has no communication capabilities, is not required to provide a wireless network, or upstream network connectivity of any kind. Notwithstanding, when a passenger vehicle **920** drives by the streetlight **910,** the driver's smartphone, wireless device **150,** may receive a beacon frame (*e.g.,* **220** of FIG. **2C** or **220s** of FIG. **8**), probe response frame (*e.g.,* **240** of FIG. **2C** or **240s** of FIG. **8**), or other management frame from the Wi-Fi access point (*e.g.,* **500** or **600** of FIG. **7A**) of system **700.** In certain embodiments, wireless device **150** is not required to authenticate to, or associate with, the Wi-Fi access point (*e.g.,* **500** or **600** of FIG. **7A**) of system **700** and the Wi-Fi access point (*e.g.,* **500** or **600** of FIG. **7A**) of system **700** is not required to provide any upstream network connectivity. In other embodiments, wireless device **150** cannot authenticate to, or associate with, the Wi-Fi access point (*e.g.,* **500** or **600** of FIG. **7A**) of system **700** and the Wi-Fi access point (*e.g.,* **500** or **600** of FIG. **7A**) of system **700** does not provide any upstream network connectivity. By simply coming within Wi-Fi signaling range, wireless device **150** has received, potentially without awareness, sensor data in a beacon frame (*e.g.,* **220** of FIG. **2C** or **220s** of FIG. **8**), probe response frame (*e.g.,* **240** of FIG. **2C** or **240s** of FIG. **8**), or other management frame transmitted by the Wi-Fi access point (*e.g.,* **500** or **600** of FIG. **7A**) of system **700.**

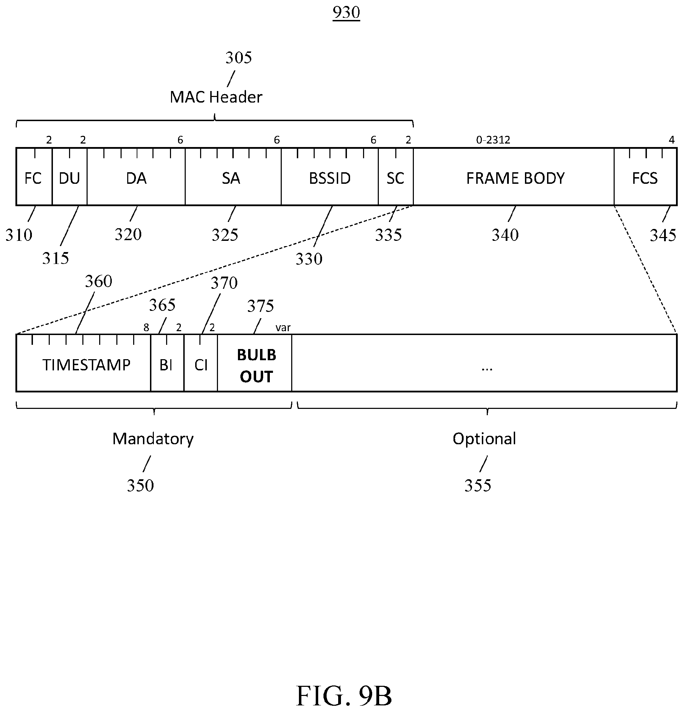

Continuing, FIG. **9B** shows an example of a management frame **300** including sensor data (*e.g.,* **375**) transmitted by a Wi-Fi access point (*e.g.,* **500** or **600** of FIG. **7A**) of system (*e.g*., **700** of FIG. **9A**) in accordance with one or more embodiments of the present invention. As shown in the example depicted in the figure, SSID subfield **375** may contain sensor data, in this instance, a textual indicator of whether the light bulb of streetlight (*e.g*., **910** of FIG. **9A**) is functional or burned out. In the example, continuity may indicate the light bulb is functional and a lack of continuity may indicate the light bulb is burned out. Here, for purposes of illustration, we will assume that the sensor data includes an indication that the light bulb is burned out. The sensor data may be numeric or alphanumeric, explicit or encoded, and may be customized based on the type or kind of sensor and the type of sensed data it provides. Here, since the SSID is a textual field **375,** an alphanumeric representation of the sensor output, "BULB OUT", may be placed in SSID subfield **375.** One of ordinary skill in the art will recognize that sensor system (*e.g*., **700** of FIG. **9A**) may include hardware and software, such as firmware that allows for the customizable presentation of sensor data based on a sensed physical property. In the example, the firmware may place the appropriate alphanumeric data corresponding to the binary continuity state of the light bulb in SSID subfield **375.** One of ordinary skill in the art will recognize that the representation of data constituting sensor data may vary based on the type or kind of sensor, the field or fields used in the management frame, the encoding, if any, the encryption, if any, and any other factor that may influence the representation of the data in accordance with one or more embodiments of the present invention. In addition, as previously discussed, one of ordinary skill in the art will recognize that other field or fields may be used in accordance with one or more embodiments of the present invention.

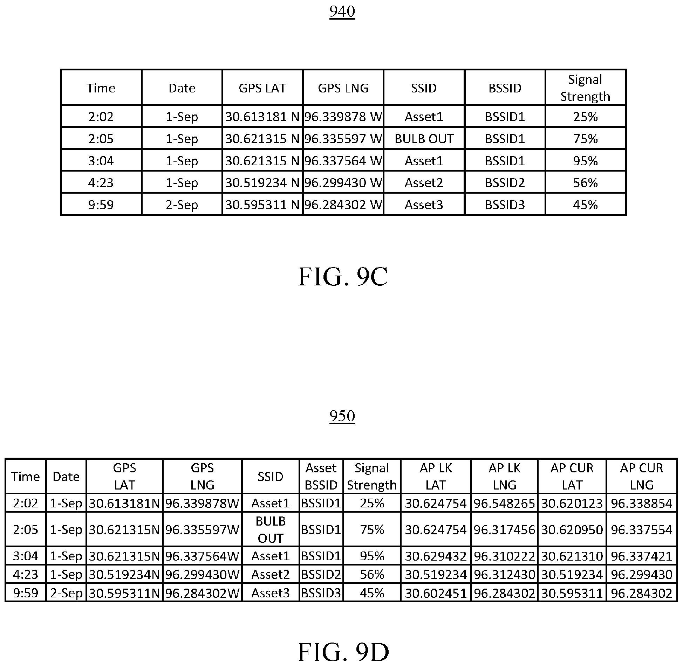

Continuing, FIG. **9C** shows an example of observation data of one or more Wi-Fi access points (*e.g.,* **500** or **600** of FIG. **7A**) reported by one or more wireless devices (*e.g.,* **150**) based on an encounter in accordance with one or more embodiments of the present invention. As previously discussed, one or more wireless devices (*e.g.,* **150a** of FIG. **9A**) may report, via a cellular or any other network connection, observation data relating to one or more Wi-Fi access points (*e.g.,* **500** or **600** of FIG. **7A**) they encounter. Each report of observation data may include, at least, unique identifying information, such as, for example, the BSSID, of a Wi-Fi access point (*e.g.,* **500** or **600** of FIG. **7A**) encountered, sensor data, and in some embodiments, location information. In certain embodiments, the observation data for a given Wi-Fi access point (*e.g.,* **500** or **600** of FIG. **7A**) may include the unique identifying information of the Wi-Fi access point Wi-Fi access point (*e.g.,* **500** or **600** of FIG. **7A**) and sensor data of the corresponding sensor (*e.g.,* **710** of FIG. **7A**) associated therewith. In the example depicted in the figure, the sensor data may be disposed in the SSID field (*e.g.,* **375** of FIG. **9B**) and may include data corresponding to an operational state of a lightbulb of a streetlight (*e.g*., **910** of FIG. **9A**). For purposes of illustration, the sensor data includes an indication that the lightbulb of the streetlight (*e.g.,* **910** of FIG. **9A**) is burned out, *i.e.,* BULB OUT. It is important to recognize that the one or more reporting wireless devices (*e.g.,* **150** of FIG. **9A**) may not have any awareness that they are participating in the sensor and/or asset tracking task. From the perspective of the one or more wireless devices (*e.g.,* **150** of FIG. **9A**), they merely record information relating to one or more Wi-Fi access points that encounter, in this example, Wi-Fi access point (*e.g.,* **500** or **600** of FIG. **7A**) of a sensor system (*e.g*., **700** of FIG. **9A**), and report observation data to a Wi-Fi AP Database (*e.g*., **1130** of FIG. **11**), typically for the purpose of enhancing location services, and/or to a sensor and/or tracking database (*e.g.,* **1110** of FIG. **11**) in accordance with one or more embodiments of the present invention. Because the sensor data may be placed in a field that is typically used for a different purpose, but is reported as part of typical observation data, the Wi-Fi AP Database (*e.g*., **1130** of FIG. **11**) may receive and store sensor data, without even knowing that they are doing so. From the perspective of the Wi-Fi AP Database (*e.g.,* **1130** of FIG. **11**), the sensor data stored in the SSID, may be assumed to be the actual name of the wireless network of the Wi-Fi access point, however, the sensor and/or asset tracking database (*e.g*., **1110** of FIG. **11**) recognizes the contents of the field to be sensor data.

Continuing, FIG. **9D** shows an example of sensor data stored or generated by a sensor tracking database in accordance with one or more embodiments of the present invention. A sensor and/or tracking database (*e.g*., **1110** of FIG. **11**) may receive observation data of a Wi-Fi access point (*e.g.,* **500** or **600** of FIG. **7A**) from a Wi-Fi AP Database (*e.g*., **1130** of FIG. **11**) and/or directly from one or more reporting wireless devices (*e.g.,* **150a** of FIG. **11**). Because the sensor tracking database (*e.g.*, **1110** of FIG. **11**) has associated the unique identifying information of a Wi-Fi access point (*e.g.,* **500** or **600** of FIG. **7A**) with a sensor (*e.g.,* **710** of FIG. **7A**), the sensor and/or tracking database (*e.g.*, **1110** of FIG. **11**) may receive observation data including the unique identifying information of a Wi-Fi access point Wi-Fi access point (*e.g.,* **500** or **600** of FIG. **7A**) and know that they sensor data is disposed in, in this example, the SSID field. As such, when the sensor and/or tracking database (*e.g*., **1110** of FIG. **11**) receives a request from, for example, a client portal (*e.g.,* **1120** of FIG. **11**) to provide the sensor data of a specific sensor, the sensor tracking database (*e.g*., **1110** of FIG. **11**) may query the unique identifying information of the Wi-Fi access point (*e.g.,* **500** or **600** of FIG. **7A**) associated with the sensor (*e.g.,* **710** of FIG. **7A**) and obtain the data from the SSID field and report it as the last reported sensor data value. In this instance, it would report that the lightbulb of the streetlight (*e.g*., **910** of FIG. **9A**) is burned out. Advantageously, a sensor (*e.g.,* **710** of FIG. **7A**) may be deployed, without any inherent communication capabilities, in a location with no network connectivity of any kind, and passively track the sensor (*e.g.,* **710** of FIG. **7A**). The one or more wireless devices (*e.g.,* **150)** that merely happen to come into range of the Wi-Fi access point (*e.g.,* **500** or **600** of FIG. **7A**) become the passive sensor tracking infrastructure, potentially without awareness that they are doing so, thereby enabling the determination of sensor data of remote sensors that are potentially disposed in areas where there is network connectivity of any kind.

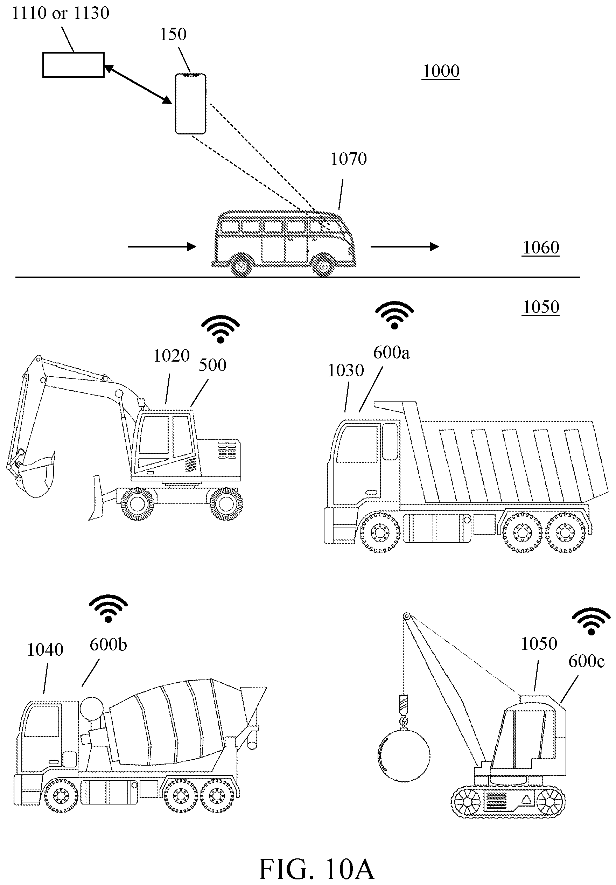

FIG. **10A** shows an example of an application of passive sensor and/or asset tracking **1000** in accordance with one or more embodiments of the present invention. In addition to conveying sensor data, in one or more embodiments of the present invention, the location of the sensor may be tracked using one or more methods of passive asset tracking. In one or more embodiments of the present invention, one or more Wi-Fi access points (*e.g.,* **500, 600a, 600b, 600c**) may be disposed on, attached to, or integrated with one or more moveable sensors/assets (*e.g.,* **1020, 1030, 1040, 1050**) to be passively tracked in accordance with one or more embodiments of the present invention. As previously discussed, in one or more embodiments of the present invention, one or more conventional Wi-Fi access points (*e.g.,* **500** of FIG. **7A**) may be exclusively used, one or more pseudo Wi-Fi access points (*e.g.,* **600** of FIG. **7A**) may be exclusively used, or a mixture of one or more conventional Wi-Fi access points (*e.g.,* **500** of FIG. **7A**) and one or more pseudo Wi-Fi access points (*e.g.,* **600** of FIG. **7A**) may be used. As such, the example showing use of a conventional Wi-Fi access point **500** and a plurality of pseudo Wi-Fi access points **600a, 600b, 600c** is merely for the purpose of illustration and is not limiting. Notwithstanding, one of ordinary skill in the art will appreciate that any combination of one or more conventional Wi-Fi access points (*e.g.,* **500** of FIG. **7A**) and/or one or more pseudo Wi-Fi access points (*e.g.,* **600** of FIG. **7A**), some of which may be sensor enabled, may be used in accordance with one or more embodiments of the present invention. Advantageously, one or more moveable sensors/assets (*e.g*., **1020, 1030, 1040, 1050**) may be passively tracked by one or more wireless devices **150** that merely happen to come in range, even if only temporarily, of a Wi-Fi access point (*e.g.,* **500, 600a, 600b, 600c**) even though a wireless device **150,** or user thereof, may not even know that they are participating in the sensor and/or asset tracking task.

For example, in the example depicted in the figure, wireless device **150** may be a smartphone carried on a user's person while in a motor vehicle **1070** driving down a street **1060.** The user's smartphone **150** may, without requiring awareness on the part of the user, report observations of the in-range conventional Wi-Fi access points (*e.g.,* **500**) and/or pseudo Wi-Fi access points (*e.g.,* **600a, 600b, 600c**) it encounters, even if only temporarily, to a sensor and/or asset tracking database (*e.g.,* **1110** of FIG. **11**) and/or a Wi-Fi AP Database (*e.g.,* **1130** of FIG. **11**), depending on an application or design. The sensor and/or asset tracking database (*e.g.,* **1110** of FIG. **11**) may use one or more observations to determine a location of a sensor/asset (*e.g*., **1020, 1030, 1040, 1050**). Advantageously, the moveable sensors/assets (*e.g.,* **1020, 1030, 1040, 1050**) and associated Wi-Fi access point (*e.g.,* **500, 600a, 600b, 600c**) do not require *any* network connectivity, may be deployed anywhere in the world, and the existing installation/infrastructure of users of smartphones **150** may be used to passively track the sensor data, in some embodiments, locations of the moveable sensors/assets (*e.g*., **1020, 1030, 1040, 1050**) in an open-network configuration. For the sake of clarity, each sensor/asset may include a conventional Wi-Fi access point (*e.g.,* **500** of FIG. **7A**) or a pseudo Wi-Fi access point (*e.g.,* **600** of FIG. **7A**) and in some applications, some sensors/assets (*e.g*., **1020**) may be deployed with a conventional Wi-Fi access point (*e.g.,* **500** of FIG. **7A**) and other sensor/assets (*e.g.,* **1030, 1040, 1050**) may be deployed with a pseudo Wi-Fi access point (*e.g.,* **600** of FIG. **7A**).

As such, for the purpose of this disclosure, passive sensor or asset tracking means tracking a sensor/asset (*e.g*., **1020, 1030, 1040, 1050**) based on observations of one or more Wi-Fi access points (*e.g.,* **500** or **600** of FIG. **7A**) without requiring any particular wireless device **150** to authenticate to, associate with, or establish connectivity with any particular Wi-Fi access points (*e.g.,* **500, 600a, 600b, 600c**). Moreover, passive asset tracking does not require a Wi-Fi access point (*e.g.,* **500** or **600** of FIG. **7A**) associated with a sensor/asset (*e.g*., **1020, 1030, 1040, 1050**) to provide any network connectivity of any kind at any time.

In certain embodiments, one or more wireless devices **150** may report observation data of an encounter with a Wi-Fi access point (*e.g.,* **500, 600a, 600b, 600c**) associated with a moveable sensor/asset (*e.g*., **1020, 1030, 1040, 1050**) to a Wi-Fi AP Database (*e.g*., **1130** of FIG. **11**). A sensor and/or asset tracking database (*e.g.,* **1110** of FIG. **11**) may receive observation data from the Wi-Fi AP Database (*e.g.,* **1130** of FIG. **11**) comprising unique identifying information, sensor data, and in some embodiments, location information that may be used to determine a location of one or more moveable sensors/assets (*e.g*., **1020, 1030, 1040, 1050**).

In other embodiments, one or more direct reporting wireless devices **150** may report first observation data of an encounter with a Wi-Fi access points (*e.g.,* **500, 600a, 600b, 600c**) associated with a moveable sensor/asset (*e.g*., **1020, 1030, 1040, 1050**) to the sensor and/or asset tracking database (*e.g*., **1110** of FIG. **11**) and one or more indirect reporting wireless devices (*e.g.,* **150**) may report second observation data to a Wi-Fi AP Database (*e.g.,* **1130** of FIG. **11**). The Wi-Fi AP Database (*e.g.,* **1130** of FIG. **11**) may receive second observation data from one or more indirect reporting wireless devices (*e.g.,* **150**) that encounter one or more Wi-Fi access points (*e.g.,* **500, 600a, 600b, 600c**) associated with one or more sensors/assets (*e.g.,* **1020, 1030, 1040, 1050**).

In still other embodiments, one or more wireless devices **150** may report observation data of an encounter with a Wi-Fi access point (*e.g.,* **500, 600a, 600b, 600c**) associated with a sensor/asset (*e.g*., **1020, 1030, 1040, 1050**) to the sensor and/or asset tracking database (*e.g*., **1110** of FIG. **11**). In all such embodiments, the Wi-Fi wireless network discovery process, as well as the reporting of observations of Wi-Fi access points (*e.g.,* **500, 600a, 600b, 600c**) may be advantageously used to passively track one or more sensors/assets (*e.g*., **1020, 1030, 1040, 1050**) without requiring that any wireless device **150** authenticate to, associate with, or join any particular Wi-Fi access point (*e.g.,* **500, 600a, 600b, 600c**), using publicly accessible Wi-Fi signals, and in passive scanning applications, anonymously with respect to the sensor and/or asset tracking task. In addition, a Wi-Fi access point (*e.g.,* **500, 600a, 600b, 600c**) associated with one or more sensors/assets (*e.g.,* **1020*,* 1030, 1040, 1050**) are not required to provide any network connectivity of any kind at any time.

Returning to the example depicted in the figure, one or more Wi-Fi access points *(e.g.,* 500, 600a, 600b, 600c) may be disposed on, attached to, or integrated with one or more sensors/assets 1020, 1030, 1040, 1050 that may be deployed in the field 1050. For the purpose of illustration only, capital construction equipment is shown as examples of moveable assets to be tracked. However, one of ordinary skill in the art will recognize that any moveable asset may be tracked in accordance with one or more embodiments of the present invention. It is important to recognize that Wi-Fi access points *(e.g.,* 500, 600a, 600b, 600c) are not required to participate in any particular wireless network or provide any upstream network connectivity or any network connectivity of any kind. Advantageously, the Wi-Fi access points (*e.g.,* **500, 600a, 600b, 600c**) are only be required to participate in a portion of the Wi-Fi wireless network discovery process as part of the sensor or asset tracking task. Specifically, each conventional Wi-Fi access point (*e.g.,* **500**) may broadcast beacon frames (*e.g.,* **220** of FIG. **2C**) in passive scanning mode (*e.g.,* **200** of FIG. **2A**) and/or respond to probe request frames (*e.g.,* **240** of FIG. **2C**) with probe response frames (*e.g.,* **240** of FIG. **2C**) as part of active scanning mode (*e.g.,* **205** of FIG. **2B**). Similarly, each pseudo Wi-Fi access point (*e.g.,* **600a, 600b, 600c**) may be disposed on, attached to, or integrated with assets **1030, 1040, 1050** may broadcast pseudo, spoofed, or emulated beacon frames (e.g., **220s** of FIG. **8**) in passive scanning mode (*e.g.,* **200** of FIG. **2A**) and/or respond to probe request frames (*e.g.,* **230** of FIG. **8**) with pseudo, spoofed, or emulated probe response frames (*e.g.,* **240s** of FIG. **8**) as part of active scanning mode (*e.g.,* **205** of FIG. **2B**). The beacon frames, conventional or pseudo, (*e.g.,* **220** of FIG. **2C** or **220s** of FIG. **8**) or probe response frames, conventional or pseudo, (*e.g.,* **240** of FIG. **2C** or **240s** of FIG. **8**) include information that uniquely identifies the Wi-Fi access point (*e.g.,* **500, 600a, 600b, 600c**), and by proxy, a particular sensor/asset (*e.g*., **1020, 1030, 1040, 1050**) itself. It is important to recognize that each moveable sensor/asset (*e.g*., **1020, 1030, 1040, 1050**) to be tracked is not required to have any communications capabilities of any kind whatsoever other than the ability to participate in, at least part of, the Wi-Fi wireless network discovery process. One of ordinary skill in the art will recognize that the beacon frame (*e.g.,* **220** of FIG. **2C** or **220s** of FIG. **8**), probe response frame (*e.g.,* **240** of FIG. **2C** or **240s** of FIG. **8****)**, or other management frame (not shown) may contain other information that may be used as part of the sensor and/or asset tracking task in one or more embodiments of the present invention.

In certain embodiments, in passive scanning mode (*e.g.,* **200** of FIG. **2A**), the Wi-Fi access point (*e.g.,* **500, 600a, 600b, 600c**) may be physically and logically associated with sensors/assets **1020, 1030, 1040, 1050** respectively and broadcast beacon frames (*e.g.,* **220** of FIG. **2C** or **220s** of FIG. **8**) at regular intervals, each of which includes information that uniquely identifies the particular Wi-Fi access point (*e.g.,* **500, 600a, 600b, 600c**) and, to those who recognize the association, the sensor/asset (*e.g*., **1020, 1030, 1040, 1050**) logically associated with it in the sensor and/asset tracking database (*e.g*., **1110** of FIG. **11**). One or more wireless devices **150** may come in-range of one or more Wi-Fi access point (*e.g.,* **500, 600a, 600b, 600c**) and receive one or more beacon frames (*e.g.,* **220** of FIG. **2C** or **220s** of FIG. **8**)**.** As previously discussed, wireless devices **150** report, via a cellular or other connection, observation data. Each report of observation data includes, at least, unique identifying information, such as, for example, the BSSID, of a Wi-Fi access point (*e.g.,* **500, 600a, 600b, 600c**) encountered, sensor data, and in some embodiments, location information of the Wi-Fi access point (*e.g.,* **500, 600a, 600b, 600c**) encountered. The location information may include coordinates such as latitude and longitude or other information that may be used to determine a location. In certain embodiments, the observation data for a given Wi-Fi access point (*e.g.,* **500, 600a, 600b, 600c**) may include one or more of the time, date, current location, speed, and direction of travel of the reporting wireless device **150** at or near the time of the encounter, and SSID, received signal strength, or other information pertaining to the Wi-Fi access point (*e.g.,* **500, 600a, 600b, 600c**) encountered. In addition, observation data may include any of the above-noted information from other in-range conventional Wi-Fi access points (*e.g.,* **500**) or pseudo Wi-Fi access point (*e.g.,* **600)** encountered at or near the same time that the given Wi-Fi access point (*e.g.,* **500, 600a, 600b, 600c**) of interest was encountered. The observation data is reported to an original equipment manufacturer of the wireless device **150,** an operating system developer of an operating system executing on the wireless device **150,** or third-party software developer that maintain a Wi-Fi AP Database (*e.g*., **1130** of FIG. **11**), and/or a dedicated sensor and/or asset tracking database (*e.g.*, **1110** of FIG. **11**) of the present invention that is used to track assets.

While the observation reporting aspect of wireless devices **150** is typically used to improve the accuracy of location-based services, here, the observation data provides data and, in some embodiments, information that may be used to estimate the location of one or more Wi-Fi access point (*e.g.,* **500, 600a, 600b, 600c**) at a particular time and date without requiring the purposeful participation of any particular wireless device **150** in any particular Wi-Fi wireless network. As such, this information may be used to determine the location of one or more Wi-Fi access points (*e.g.,* **500, 600a, 600b, 600c**) and, by proxy, one or more moveable sensors/assets **1020, 1030, 1040, 1050** with substantial accuracy, that may be further refined with well-known location refinement techniques typically used by wireless devices **150** in place of, or to enhance, GPS location determination or location-based services.

In other embodiments, in active scanning mode (e*.g.,* **205** of FIG. **2B**)**,** one or more wireless devices **150** may transmit a probe request frame (*e.g.,* **230** of FIG. **2C****)** that is not directed to any particular Wi-Fi access point (*e.g.,* **500, 600a, 600b, 600c**), requesting that all in-range Wi-Fi access points announce their presence. In response, in-range Wi-Fi access point (*e.g.,* **500, 600a, 600b, 600c**) may transmit a probe response frame (*e.g.,* **240** of FIG. **2C** or **240s** of FIG. **8**) which includes information that uniquely identifies the responding Wi-Fi access point (*e.g.,* **500*,* 600a, 600b, 600c**)**,** sensor data, and, in some embodiments, location information. As previously discussed, wireless devices **150** report, via a cellular or other connection, observation data including, at least, unique identifying information, such as, for example, the BSSID, of one or more Wi-Fi access points (*e.g.,* **500, 600a, 600b, 600c)** encountered and location information of the one or more Wi-Fi access point (*e.g.,* **500, 600a, 600b, 600c**) encountered. The location information may include coordinates such as latitude and longitude or other information that may be used to determine a location. In certain embodiments, the observation data for a given Wi-Fi access point (*e.g.,* **500, 600a, 600b, 600c**) may include one or more of the time, date, current location, speed, and direction of travel of the reporting wireless device **150** at or near the time of the encounter, and SSID, received signal strength, or other information pertaining to the Wi-Fi access point (*e.g.,* **500, 600a, 600b, 600c**) encountered. In addition, observation data may include any of the above-noted information from other in-range Wi-Fi access points (*e.g.,* **500** or **600**) encountered at or near the same time that the given Wi-Fi access point (*e.g.,* **500, 600a, 600b, 600c**) of interest was encountered. The observation data may be reported to an original equipment manufacturer of the wireless device **150,** an operating system developer of an operating system executing on the wireless device **150,** or third-party software developer that maintain a Wi-Fi AP Database (*e.g*., **1130** of FIG. **11**), and/or a dedicated sensor and/or asset tracking database (*e.g*., **1110** of FIG. **11**) of the present invention that is used to track sensors/assets. Mobile operating systems used on smartphones **150** typically include existing infrastructure to report observation data to the operating system developer's Wi-Fi AP Database (*e.g*., **1130** of FIG. **11**) in the background without requiring awareness on the part of the user.

While a single wireless device **150** is depicted in the figure, one of ordinary skill in the art will recognize that any number of wireless devices **150** may come in and out of range of the sensors/assets **1020, 1030, 1040, 1050** over time, each of which may independently report observation data of in-range Wi-Fi access point (*e.g.,* **500, 600a, 600b, 600c**) they encounter (and other information that may be useful to the sensor and/or asset tracking task). In fact, the tracking accuracy may improve as a function of the number of observations that take place over time, or potentially provide additional information such as movement of sensors/assets **1020, 1030, 1040, 1050** throughout the day, or the speeds at which they are moving, or even when they leave a boundary of the job site **1050.**

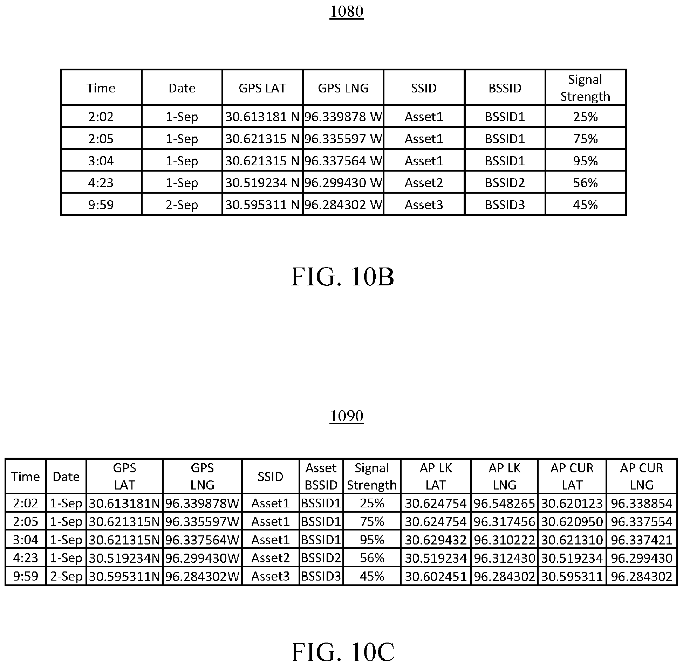

Continuing, FIG. **10B** shows an example of observation data **1080** of one or more Wi-Fi access point (*e.g.,* **500, 600a, 600b, 600c**) reported by a wireless device (*e.g.,* **150** of FIG. **10A****)** based on an encounter in accordance with one or more embodiments of the present invention. As previously discussed, wireless devices (*e.g.,* **150** of FIG. **10A****)** may report, via a cellular or any other network connection, observation data. Each report of observation data may include, at least, unique identifying information, such as, for example, the BSSID, of one or more Wi-Fi access point (*e.g.,* **500, 600a, 600b, 600c**) encountered, sensor data, and in some embodiments, location information of the one or more Wi-Fi access point *(e.g.,* ***500,* 600a, 600b, 600c**) encountered. In certain embodiments, the observation data for a given Wi-Fi access point (*e.g.,* **500, 600a, 600b, 600c**) may include one or more of the time, date, current location, speed, and direction of travel of the reporting wireless device (*e.g.,* **150** of FIG. **10A**) at or near the time of the encounter, and SSID, received signal strength, or other information pertaining to the Wi-Fi access point (*e.g.,* **500, 600a, 600b, 600c**) encountered. In addition, observation data may include any of the above-noted information from other in-range Wi-Fi access points (*e.g.,* **500** or **600**) encountered at or near the same time that the given Wi-Fi access point (*e.g.,* **500, 600a, 600b, 600c**) of interest was encountered. The observation data may be reported directly to the sensor and/or asset tracking database (*e.g*., **1110** of FIG. **11**) or to a Wi-Fi AP Database (*e.g*., **1130** of FIG. **11**)**.**

The unique identifying information may include any information that may be used to uniquely identify a Wi-Fi access point (*e.g.,* **500, 600a, 600b, 600c**) encountered including any unique fields of the beacon frames (*e.g.,* **220** of FIG. **2C** or **220s** of FIG. **8**), probe response frames (*e.g.,* **240** of FIG. **2C** or **240s** of FIG. **8**)**,** or other management frames transmitted therefrom that may be used or repurposed to convey sensor data or other information regarding the Wi-Fi access point (*e.g.,* **500, 600a, 600b, 600c**) or the sensor/asset (*e.g*., **1020, 1030, 1040, 1050**) associated therewith. For example, due to the unique nature of the BSSID, the BSSID of a Wi-Fi access point (*e.g.,* **500, 600a, 600b, 600c**) may be used to uniquely identify Wi-Fi access point (*e.g.,* **500, 600a, 600b, 600c**) encountered and a sensor/asset (*e.g.,* **1020, 1030, 1040, 1050**) it is physically disposed on, attached or, or integrated with and logically associated with in the sensor and/or asset tracking database (*e.g*., **1110** of FIG. **11**). However, the MAC address, SSID, and/or other fields contained with the management frames may be used to further identify a Wi-Fi access point (*e.g.,* **500, 600a, 600b, 600c**) as a sensor and/or asset tracking type of Wi-Fi access point or otherwise exploited for use in the sensor and/or asset tracking task. One of ordinary skill in the art will recognize any information transmitted from a Wi-Fi access point (*e.g.,* **500, 600a, 600b, 600c**) as part of a beacon frame (*e.g.,* **220** of FIG. **2C** or **220s** of FIG. **8**), probe response frame (*e.g.,* **240** of FIG. **2C** or **240s** of FIG. **8**), or other management frame that may be used to uniquely identify the Wi-Fi access point (*e.g.,* **500, 600a, 600b, 600c**) may be used in accordance with one or more embodiments of the present invention.

The location information may include coordinates representing a location such as latitude and longitude reported for the Wi-Fi access point (*e.g.,* **500, 600a, 600b,** 600c) or any other information that may be used to determine the location of the Wi-Fi access point (*e.g.,* **500, 600a, 600b, 600c**)**.** For example, other information that may be used to determine a location of a particular Wi-Fi access point (*e.g.,* **500, 600a, 600b, 600c**) may include RSSI, fingerprinting, angle of arrival, time of flight, or other data related to the Wi-Fi access point (*e.g.,* **500, 600a, 600b, 600c)** of interest or any information related to other nearby in-range Wi-Fi access points (*e.g.,* **500 or 600**) that facilitate positioning.

One of ordinary skill in the art will recognize that the type and kind of information reported by a reporting wireless device (*e.g.,* **150** of FIG. **11**) based on an encounter with a Wi-Fi access point (*e.g.,* **500, 600a, 600b, 600c**) may vary based on an application or design in accordance with one or more embodiments of the present invention, but must include at least unique identifying information of the encountered Wi-Fi access point (*e.g.,* **500, 600a, 600b, 600c**) and location information related thereto.

Continuing, FIG. **10C** shows an example of asset data **1090** stored or generated by sensor and/or asset tracking database (*e.g*., **1110** of FIG. **11****)** in accordance with one or more embodiments of the present invention. Sensor and/or asset tracking database (*e.g*., **1110** of FIG. **11****)** may associate unique identifying information, such as, for example, the BSSID, of a particular Wi-Fi access point (*e.g.,* **500** of FIG. **10A****)** with a particular asset (e*.g.,* **1020** of FIG. **10A****)** on which it is disposed, attached to, or integrated with to identify the sensor/asset (*e.g*., **1020** of FIG. **10A****).** Once associated, sensor and/or asset tracking database (*e.g*., **1110** of FIG. **11****)** may use observation data that is reported, directly or indirectly, by one or more wireless devices (*e.g.,* **150** of FIG. **11****)** that encounter the Wi-Fi access point (*e.g.,* **500** of FIG. **10A****)** to passively track the sensor/asset (*e.g.,* **1020** of FIG. **10A****),** in many instances without an awareness by wireless devices (*e.g.,* **150** of FIG. **11**), or users thereof, that they are participating in the asset tracking task.

Sensor and/or asset tracking database (e.g., **1110** of FIG. **11**) may receive and store observation data obtained directly from a direct reporting wireless device (*e.g.,* **150a** of FIG. **11**) that reports an encounter with a Wi-Fi access point (*e.g.,* **500 or 600** of FIG. **11**) or observation data obtained from a Wi-Fi AP Database (*e.g*., **1130** of FIG. **11**)**.** The observation data includes, at least, unique identifying information, such as, for example, the BSSID, of one or more Wi-Fi access point (*e.g.,* **500 or 600** of FIG. **11**) encountered and location information of the one or more Wi-Fi access point (*e.g.,* **500** or **600** of FIG. **11**) encountered. Senso and/or asset tracking database (*e.g*., **1110** of FIG. **11**) may also store one or more of a last known location for a Wi-Fi access point (*e.g.,* **500** of FIG. **10A**) and sensor/asset (*e.g.,* **1020** of FIG. **10A**) associated therewith, a history of last known locations for the Wi-Fi access point (*e.g.,* **500** of FIG. **10A**) and sensor/asset (*e.g.,* **1020** of FIG. **10A**) associated therewith, and a current location for the Wi-Fi access point (*e.g.,* **500** of FIG. **10A**) and sensor/asset (*e.g*., **1020** of FIG. **10A**) associated therewith. Sensor and/or asset tracking database (*e.g*., **1110** of FIG. **11**) may also receive and store one or more of the time, date, current location, speed, and direction of travel of the reporting wireless device (*e.g.,* **150** of FIG. **11**) at or near the time of the encounter, and SSID, received signal strength, or other information pertaining to the Wi-Fi access point (*e.g.,* **500** or **600** of FIG. **11**) encountered. In addition, sensor and/or asset tracking database (*e.g*., **1110** of FIG. **11**) may receive and store any of the above-noted information from other in-range Wi-Fi access points (*e.g.,* **500** or **600**) encountered at or near the same time that the Wi-Fi access point (*e.g.,* **500** or **600** of FIG. **11**) of interest was encountered.

In certain embodiments, sensor and/or asset tracking database (*e.g*., **1110** of FIG. **11**) may determine a location for a moveable sensor/asset (*e.g*., **700** of FIG. **11**) to be tracked based on the last known reported location of its associated Wi-Fi access point (*e.g.,* **500** or **600** of FIG. **11**). However, sensor and/or asset tracking database (*e.g*., **1010** of FIG. **11**) may use one or more of historical data about the location of the Wi-Fi access point (*e.g.,* **500** or **600** of FIG. **11**), the times, dates, last known locations, and received signal strengths to the Wi-Fi access point (*e.g.,* **500** or **600** of FIG. **11**), and the times, dates, locations, last known locations, and received signal strengths to known Wi-Fi access points (*e.g.,* **500** or **600**) in the vicinity of the Wi-Fi access point (*e.g.,* **500** or **600** of FIG. **11**) of interest. Depending on the information available, well known GPS, Wi-Fi, location services, trilateration, triangulation, and any other positioning techniques may be used to determine or refine the accuracy of the location determination of the particular Wi-Fi access point (*e.g.,* **500** or **600** of FIG. **11**) of interest and, by association, the location of the sensor/asset (*e.g*., **700** of FIG. **11**). As such, sensor and/or asset tracking database (*e.g*., **1110** of FIG. **11**) may develop a historical trend of location and potentially other information relating to the particular sensor/asset (*e.g*., **700** of FIG. **11**) over a period of time. Thus, tracking accuracy may increase based on the number of observations obtained by the sensor and/or asset tracking database (*e.g*., **1110** of FIG. **11**).

For purposes of example, sensor and/or asset tracking database (*e.g*., **1110** of FIG. **11**) may include a data structure that includes a time, a date, a GPS or current location, for example, a latitude ("GPS LAT") and a longitude ("GPS LNG"), SSID, BSSID, and a received signal strength of an discovered conventional Wi-Fi access point (*e.g.,* **500** of FIG. **11**) or pseudo Wi-Fi access point (*e.g.,* **600** of FIG. **11**) as part of each report, received directly or indirectly, from a wireless device (*e.g.,* **150** of FIG. **11**) that encounters an in-range conventional Wi-Fi access point (*e.g.,* **500** of FIG. **11**) or pseudo Wi-Fi access point (*e.g.,* **600 of** FIG. **11**). The BSSID of the discovered conventional Wi-Fi access point (*e.g.,* **500** of FIG. **11**) or pseudo Wi-Fi access point (*e.g.,* **600** of FIG. **11**) may be associated with, or used to reference, a particular sensor/asset (*e.g*., **700)** being tracked within sensor and/or asset tracking database (*e.g.,* **1110** of FIG. **11****).** Sensor and/or asset tracking database (*e.g.,* **1110** of FIG. **11**) may receive, calculate, or estimate a last known ("AP LK") position of the discovered Wi-Fi access point (*e.g.,* **500** or **600** of FIG. **11**). If a last know position of a Wi-Fi access point (*e.g.,* **500** or **600** of FIG. **11**) is not known, it may be estimated by the GPS or current location of the most recent wireless device (*e.g.,* **150** of FIG. **11**) that reported an observation of Wi-Fi access point (*e.g.,* **500** or **600** of FIG. **11**) or determined or further refined with well-known positioning techniques. Sensor and/or asset tracking database (*e.g*., **1110** of FIG. **11**) may, based on available information, calculate a current ("AP CUR") location for one or more Wi-Fi access point (*e.g.,* **500** or **600** of FIG. **11**), and by relation, the associated sensors/assets (*e.g*., **700** of FIG. **11**) thereof. One of ordinary skill in the art will appreciate that calculating a location based on the last known location of one or more Wi-Fi access points (*e.g.,* **500** or **600**), if any, the GPS or current locations of one or more wireless devices (*e.g.,* **150** of FIG. **11**) reporting the encounter with the Wi-Fi access point (*e.g.,* **500** or **600** of FIG. **11**), if available, and their relative received signal strengths, and potentially other information relating thereto, may be used to determine and/or refine the location determination of one or more Wi-Fi access point (*e.g.,* **500** or **600** of FIG. **11**), and sensors/assets (*e.g.,* **700** of FIG. **11**) associated therewith, using well-known positioning and location refinement techniques. The calculated current location may be stored in a sensor and/or asset tracking database (*e.g*., **1110** of FIG. **11**) as the best estimate of where a particular Wi-Fi access point (*e.g.,* **500** or **600** of FIG. **11**), and by relation, the associated sensor/asset (*e.g*., **700** of FIG. **11**) may be located. The accuracy of the location determination may be enhanced with more observations by other wireless devices (*e.g.,* **150**) that come into range of the Wi-Fi access point (*e.g.,* **500** or **600** of FIG. **11**) over time.

One of ordinary skill in the art will recognize that sensor and/or asset tracking database (*e*.*g*., **1110** of FIG. **11**) may receive, generate, or store any other relevant data relating to a Wi-Fi access point (*e.g.,* **500** or **600** of FIG. **11**), a sensor/asset (*e.g.,* **700** of FIG. **11**) associated therewith, or any other information relevant to the asset tracking task based on an application or design in accordance with one or more embodiments of the present invention.

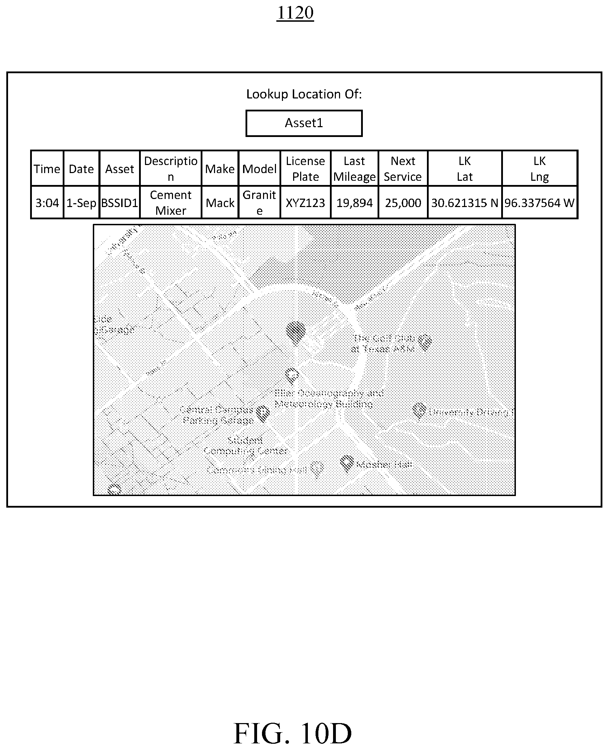

FIG. **10D** shows an example of a client portal **1120** to a sensor and/or asset tracking database (*e.g.*, **1110** of FIG. **11**) in accordance with one or more embodiments of the present invention. A user (not shown) may access the data contained within sensor and/or asset tracking database (*e.g*., **1110** of FIG. **11**) via client portal **1120.** Client portal **1120** may provide the user with the ability to access at least some of the data stored in sensor and/or asset tracking database (*e.g.*, **1110** of FIG. **11**). For example, a user may inquire as to the value of sensor data or a location of a specific sensor/asset, such as, for example, *Asset1,* which is a cement mixer truck. Client portal **1120** lodges the query with sensor and/or asset tracking database (*e.g*., **1110** of FIG. 1**1**), receives the requested data, which in this case, may include the unique identifying information of the asset (*e.g.,* **1120** of FIG. **11**) as well as its last known location and optionally a map showing the last known location. One of ordinary skill in the art will recognize that the interface, interaction with, and display of, data by client portal **1120** may vary based on an application or design in accordance with one or more embodiments of the present invention.

FIG. **11** shows a system **1100** for passive sensor and/or asset tracking using observations of one or more Wi-Fi access point **500** or **600** in accordance with one or more embodiments of the present invention. The system **1100** may include a software application comprising a sensor and/or asset tracking database **1110** executing on a computing system **1200** and a client portal **1120** that provides sensor and/or asset tracking clients (not shown) access to data stored in sensor and/or asset tracking database **1110.**

In certain embodiments, sensor and/or asset tracking database **1110** may be a database software application comprising a backend that performs housekeeping software functions, a database management system ("DBMS") that provides data processing functions, a data store (the literal database) that contains observation and other data, one or more administrative interfaces, and one or more other interfaces to the data contained in database **1110.** One of ordinary skill in the art will recognize that sensor and/or asset tracking database **1110** may include other software, functions, and features, well known in the art, necessary to deploy a database-type application in accordance with one or more embodiments of the present invention. In certain embodiments, client portal **1120** may be a web-based portal (not independently illustrated) that provides access to data stored in sensor and/or asset tracking database **1110.** In other embodiments, client portal **1120** may be a stand-alone software application (not independently illustrated) that provides access to data stored in sensor and/or asset tracking database **1110.** In still other embodiments, client portal **1120** may be an interface integrated with sensor and/or asset tracking database **1110** to provide frontend access to sensor and/or asset tracking database **1110.** One of ordinary skill in the art will recognize that client portal **1120** may include other software, functions, and features, well known in the art, necessary to access and use data contained in the database in accordance with one or more embodiments of the present invention.

At the outset, it is important to recognize that everything depicted to the right of the symbolic line of demarcation **1140** in the figure (included solely to enhance understanding), with the exception of conventional Wi-Fi access point **500** or pseudo Wi-Fi access point **600** disposed on, attached to, or integrated with sensor **720,** represents existing infrastructure representative of the smartphone ecosystem of users and infrastructure. The behavior of the wireless devices (*e.g.,* **150**) that participate in this ecosystem, including their inherent reporting features of Wi-Fi access points encountered, may be leveraged to passively track assets, potentially without awareness, in accordance with one or more embodiments of the present invention. Importantly, wireless devices (*e.g.,* **150**) cannot distinguish between a conventional Wi-Fi access point (*e.g.,* **500**) and a pseudo Wi-Fi access point (*e.g.,* **600**) with respect to the identification of Wi-Fi wireless networks and associated Wi-Fi access points.

In certain embodiments, sensor and/or asset tracking database **1110** may obtain observation data indirectly from a third-party Wi-Fi AP Database **1130** that receives observations from one or more wireless devices (*e.g.,* **150b, 150c, 150d**), typically based on reports of observation data used to improve the accuracy of location services. In such embodiments, Wi-Fi AP Database **1130** may be a database independently established, operated, and maintained separate and apart from sensor and/or asset tracking database **1110** by an original equipment manufacturer of a wireless device (*e.g.,* **150**), an operating system developer of an operating system executing on a wireless device (*e.g.,* **150**), or a third-party software developer. For example, in certain embodiments, Wi-Fi AP Database **1130** may be Apple^{®} iOS^{®}, Google^{®} Android^{®}, or Microsoft^{®} location-based services databases typically used to improve location determination accuracy for their respective end users. In other embodiments, Wi-Fi AP Database **1130** may be a database of observations including the unique identifying information of Wi-Fi access points (*e.g.,* **500** or **600** of FIG. **11**) and information relating to the locations of Wi-Fi access points (*e.g.,* **500** or **600** of FIG. **11**) that are commercially offered by third-parties including, for example Cisco Systems^{®}, Facebook^{®}, WhatsApp^{®}, X-Mode^{®}, Ruckus^{®}, and Skyhook^{®}. One or more wireless devices (*e.g.,* **150a**) may report observation data to Wi-Fi AP Database **1130** for storage in their database and sensor and/or asset tracking database **1110** may obtain observation data from Wi-Fi AP Database **1130** for use with the asset tracking task, without requiring an awareness on the part of the Wi-Fi AP Database **1130,** the reporting wireless devices (*e.g.,* **150b, 150c, 150d**), or users thereof, that they are participating in the asset tracking task. The observation data reported to the Wi-Fi AP Database **1130** and the observation data obtained by the sensor and/or asset tracking database **1110** may or may not be the same, but the observation data obtained by sensor and/or asset tracking database **1110** includes at least the unique identifying information and location information of a Wi-Fi access point (*e.g.,* **500** or **600** of FIG. **11**) encountered that is associated with a sensor/ asset **720.** As such, observation data obtained by sensor and/or asset tracking database **1110** may be subset, superset, or different that observation data stored by Wi-Fi AP Database **1130** in accordance with one or more embodiments of the present invention.

In other embodiments, sensor and/or asset tracking database **1110** may obtain observation data directly from one or more direct reporting wireless devices (*e.g*., **150a**) and may also obtain observation data from Wi-Fi AP Database **1130,** that receives observations from one or more indirect reporting wireless devices (*e.g*., **150b, 150c, 150d**). In such hybrid embodiments, observation data may be reported directly to sensor and/or asset tracking database **1110** and/or reported indirectly to sensor and/or asset tracking database **1110** by way of Wi-Fi AP Database **1130.** Sensor and/or asset tracking database **1110** may give preference to, or value, observation data reported directly differently from observation data reported indirectly. The preference may be used in the location determination made by sensor and/or asset tracking database **1110.**

In still other embodiments, sensor and/or asset tracking database **1110** may obtain observation data directly from one or more direct reporting wireless devices (*e.g.,* **150a**). In such embodiments, one or more wireless devices (*e.g.,* **150a**) may report observation data directly to sensor and/or asset tracking database **1110** for use in the asset tracking task. The report of observation data may be received and processed as discussed in more detail herein and stored in sensor and/or asset tracking database **1110,** which may serve as the functional equivalent, and in lieu of, a Wi-Fi AP Database **1130.**

For purposes of illustration, one or more Wi-Fi access point (*e.g.,* **500** or **600** of FIG. **11**) may be disposed on, attached to, or integrated with one or more moveable sensors/assets (*e.g*., **700**) that are desired to be tracked. The unique identifying information of a Wi-Fi access point (*e.g.,* **500** or **600** of FIG. **11**) may be used to uniquely identify a sensor/asset **700** that it is physically and logically associated with the sensor **700** in the sensor and/or asset tracking database **1110.** The one or more sensors/assets **700** may then be deployed in the field and need not be co-located. Advantageously, the deployed Wi-Fi access points (*e.g.,* **500** or **600** of FIG. **11**) do not require any network or communication connectivity of any kind, nor are they required to receive GPS signals, they simply must either broadcast conventional or pseudo beacon frames (*e.g.,* **220** of FIG. **2C** or **220s** of FIG. **8**) or respond to probe request frames (*e.g.,* **230** of FIG. **2C**) with conventional or pseudo probe response frames (*e.g.,* **240** of FIG. **2C** **or 240s** of FIG. **8**) as part of the Wi-Fi wireless network discovery process, each frame of which includes unique identifying information of the conventional Wi-Fi access point **500** or pseudo Wi-Fi access point **600,** depending on a given application.

When one or more wireless devices (*e.g.,* **150**) come into range of one or more Wi-Fi access point (*e.g.,* **500** or **600** of FIG. **11**) disposed on, attached to, or integrated with one or more sensors/assets **700**, each in-range Wi-Fi access point (*e.g.,* **500** or **600** of FIG. **11**) may either broadcast, conventional or pseudo, their respective beacon frame (*e.g.,* **220** of FIG. **2C** or **220s** of FIG. **8**) or respond to a probe request frame (*e.g.,* **230** of FIG. **2C**) with a probe response frame (*e.g.,* **240** of FIG. **2C** or **240s** of FIG. **8**), each of which includes information that may be used by sensor and/or asset tracking database **1110** to uniquely identify the Wi-Fi access point (*e.g.,* **500** or **600** of FIG. **11**) and other information that may be useful to the asset tracking task, including custom use of certain information in the beacon frame (*e.g.,* **220** of FIG. **2C** or **220s** of FIG. **8**) or probe response frame (*e.g.,* **240** of FIG. **2C** or **240s** of FIG. **8**). The one or more wireless devices **150** may report observation data of the in-range Wi-Fi access point (*e.g.,* **500** or **600** of FIG. **11**) encountered directly to the sensor and/or asset tracking database **1110** and/or to the Wi-Fi AP Database **1130** based on an application or design.

As previously discussed, wireless devices **150** report, via a cellular or other connection, observation data. Observation data includes, at least, unique identifying information, such as, for example, the BSSID, of the one or more Wi-Fi access point (*e.g.,* **500** or **600** of FIG. **11**) encountered and location information of the one or more Wi-Fi access point (*e.g.,* **500** or **600** of FIG. **11**) encountered. The location information may include coordinates such as latitude and longitude or other information that may be used to determine a location of a Wi-Fi access point (*e.g.,* **500** or **600** of FIG. **11**) encountered. In certain embodiments, the observation data for a given Wi-Fi access point (*e.g.,* **500** or **600** of FIG. **11**) may include one or more of the time, date, current location, speed, and direction of travel of the reporting wireless device **150** at or near the time of the encounter, and SSID, received signal strength, or other information pertaining to the Wi-Fi access point (*e.g.,* **500** or **600** of FIG. **11**) encountered. In addition, observation data may include any of the above-noted information from other in-range Wi-Fi access points (*e.g.,* **500** or **600**) encountered at or near the same time that the given Wi-Fi access point (*e.g.,* **500** or **600** of FIG. **11**) of interest was encountered. In some cases, the current location of the reporting wireless device **150** at or near the time of the encounter may be used, potentially in combination with other information, to establish a location of an encountered Wi-Fi access point (*e.g.,* **500** or **600** of FIG. **11**) as of the time and date of the encounter.

The observation data may be reported directly to a Wi-Fi AP Database **1130** maintained by an original equipment manufacturer of the wireless device **150,** an operating system developer of an operating system executing on the wireless device **150,** or third-party software developer and/or a dedicated sensor and/or asset tracking database **1110** of the present invention that is used to track assets. The one or more wireless devices **150** may report their encounter with in-range Wi-Fi access point (*e.g.,* **500** or **600** of FIG. **11**) at approximately the time of the encounter or at a later time if a wireless device 150 does not have network capabilities at the time of the encounter. Sensor and/or asset tracking database **1110** may use observation data obtained directly from one or more wireless devices *(e.g.,* **150a)** and/or data obtained from Wi-Fi AP Database **1130** (e.g., originating from **150b, 150c, 150d)** to identify and locate one or more sensors/assets (e.g., 700), the data of which may be stored in sensor and/or asset tracking database **1110.** Depending on the type of data received, sensor and/or asset tracking database **1110** may manipulate, extrapolate, or generate additional data stored therein based on available relevant information.

While various embodiments of system **1200** have been disclosed, one of ordinary skill in the art will recognize that a subset, superset, or combination of functions or features thereof, may be integrated, distributed, or excluded, in whole or in part, based on an application or design in accordance with one or more embodiments of the present invention and the disclosure is not intended to limit the types, kinds, or arrangements of system **1200** that may be implemented, including those that include, integrate, distribute, separate, or exclude various aspects or features in accordance with one or more embodiments of the present invention.

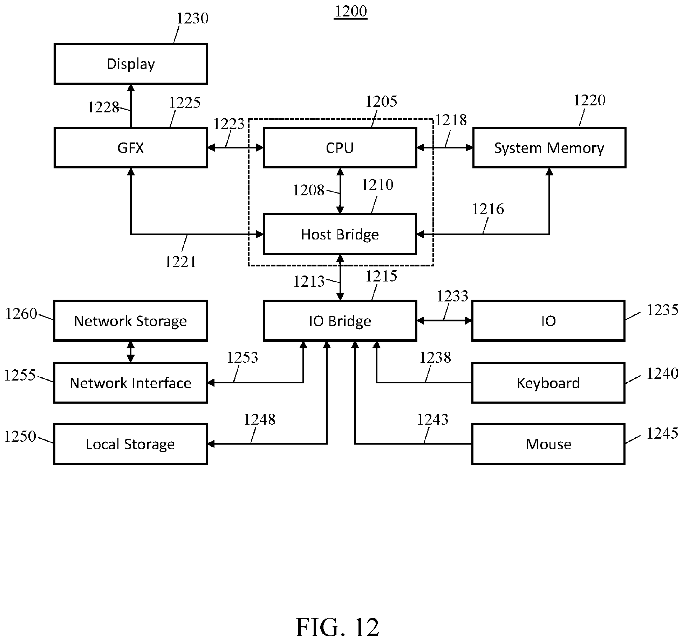

FIG. **12** shows a computing system **1200** in accordance with one or more embodiments of the present invention. One or more of sensor and/or asset tracking database (*e.g.,* **1110** of Figure **11**) and client portal (*e.g.,* **1120** of Figure **11**) may be software applications containing software instructions that, when executed by a processor of one or more computing systems **1200,** perform one or more of the methods described herein. One of ordinary skill in the art will recognize that a computing system **1200** disclosed herein is merely exemplary of a computing system that may be used to execute any of the above-noted software methods and other computing systems that are well known in the art may be used in accordance with one or more embodiments of the present invention.

Computing system **1200** may include one or more central processing units, sometimes referred to as processors (hereinafter referred to in the singular as "CPU" or plural as "CPUs") **1205,** host bridge **1210,** input/output ("IO") bridge **1215,** graphics processing units (singular "GPU" or plural "GPUs") **1225,** and/or application-specific integrated circuits (singular "ASIC or plural "ASICs") (not shown) disposed on one or more printed circuit boards (not shown) that perform computational operations. Each of the one or more CPUs **1205,** GPUs **1225,** or ASICs (not shown) may be a single-core (not independently illustrated) device or a multi-core (not independently illustrated) device. Multi-core devices typically include a plurality of cores (not shown) disposed on the same physical die (not shown) or a plurality of cores (not shown) disposed on multiple die (not shown) that are collectively disposed within the same mechanical package (not shown).

CPU **1205** may be a general-purpose computational device typically configured to execute software instructions. CPU **1205** may include an interface **1208** to host bridge **1210,** an interface **FIG** to system memory **1220,** and an interface **1223** to one or more IO devices, such as, for example, one or more GPUs **1225.** GPU **1225** may serve as a specialized computational device typically configured to perform graphics functions related to frame buffer manipulation. However, one of ordinary skill in the art will recognize that GPU **1225** may be used to perform non-graphics related functions that are computationally intensive. In certain embodiments, GPU **1225** may interface **1223** directly with CPU **1205** (and interface **1218** with system memory **1220** through CPU **1205**). In other embodiments, GPU **1225** may interface **1221** with host bridge **1210** (and interface **1216** or **1218** with system memory **1220** through host bridge **1210** or CPU **1205** depending on the application or design). In still other embodiments, GPU **1225** may interface **1233** with IO bridge **1215** (and interface **1216** or **1218** with system memory **1220** through host bridge **1210** or CPU **1205** depending on the application or design). The functionality of GPU **1225** may be integrated, in whole or in part, with CPU **1205.**

Host bridge **1210** may be an interface device that interfaces between the one or more computational devices and IO bridge **1215** and, in some embodiments, system memory **1220.** Host bridge **1210** may include an interface **1208** to CPU **1205,** an interface **1213** to IO bridge **1215,** for embodiments where CPU **1205** does not include an interface **1218** to system memory **1220,** an interface **1216** to system memory **1220,** and for embodiments where CPU **1205** does not include an integrated GPU **1225** or an interface **1223 to** GPU **1225,** an interface **1221** to GPU **1225.** The functionality of host bridge **1210** may be integrated, in whole or in part, with CPU **1205.** IO bridge **1215** may be an interface device that interfaces between the one or more computational devices and various IO devices (*e.g.,* **1240, 1245**) and IO expansion, or add-on, devices (not independently illustrated). IO bridge **1215** may include an interface **1213** to host bridge **1210,** one or more interfaces **1233** to one or more IO expansion devices **1235,** an interface **1238** to keyboard **1240,** an interface **1243** to mouse **1245,** an interface **1248** to one or more local storage devices **1250,** and an interface **1253** to one or more network interface devices **1255.** The functionality of IO bridge **1215** may be integrated, in whole or in part, with CPU **1205** and/or host bridge **1210.** Each local storage device **1250,** if any, may be a solid-state memory device, a solid-state memory device array, a hard disk drive, a hard disk drive array, or any other non-transitory computer readable medium. Network interface device **1255** may provide one or more network interfaces including any network protocol suitable to facilitate networked communications.

Computing system **1200** may include one or more network-attached storage devices **1260** in addition to, or instead of, one or more local storage devices **1250.** Each network-attached storage device **1260,** if any, may be a solid-state memory device, a solid-state memory device array, a hard disk drive, a hard disk drive array, or any other non-transitory computer readable medium. Network-attached storage device **1260** may or may not be collocated with computing system **1200** and may be accessible to computing system **1200** via one or more network interfaces provided by one or more network interface devices **1255.**

One of ordinary skill in the art will recognize that computing system **1200** may be a conventional computing system or an application-specific computing system (not shown). In certain embodiments, an application-specific computing system (not shown) may include one or more ASICs (not shown) that perform one or more specialized functions in a more efficient manner. The one or more ASICs (not shown) may interface directly with CPU **1205,** host bridge **1210,** or GPU **1225** or interface through IO bridge **1215.** Alternatively, in other embodiments, an application-specific computing system (not shown) may be reduced to only those components necessary to perform a desired function in an effort to reduce one or more of chip count, printed circuit board footprint, thermal design power, and power consumption. The one or more ASICs (not shown) may be used instead of one or more of CPU **1205,** host bridge **1210,** IO bridge **1215,** or GPU **1225.** In such systems, the one or more ASICs may incorporate sufficient functionality to perform certain network and computational functions in a minimal footprint with substantially fewer component devices.

As such, one of ordinary skill in the art will recognize that CPU **1205,** host bridge **1210,** IO bridge **1215,** GPU **1225,** or ASIC (not shown) or a subset, superset, or combination of functions or features thereof, may be integrated, distributed, or excluded, in whole or in part, based on an application, design, or form factor in accordance with one or more embodiments of the present invention. Thus, the description of computing system **1200** is merely exemplary and not intended to limit the type, kind, or configuration of component devices that constitute a computing system **1200** suitable for executing software methods in accordance with one or more embodiments of the present invention. Notwithstanding the above, one of ordinary skill in the art will recognize that computing system **1200** may be a standalone, laptop, desktop, industrial, server, blade, or rack mountable system and may vary based on an application or design.

In one or more embodiments of the present invention, a method of passive sensor tracking may only use observations of conventional Wi-Fi access points (*e.g.,* **500** of FIG. **7A**) or pseudo Wi-Fi access points (*e.g.,* **600** of FIG. **7A**) received from a Wi-Fi AP Database (*e.g*., **1130** of FIG. **11**). A conventional Wi-Fi access point (*e.g.,* **500** of FIG. **7A**) or a pseudo Wi-Fi access point (*e.g.,* **600** of FIG. **7A**) may transmit a management frame (*e.g.,* **300** of FIG. **7B**) that includes sensor data of a sensor (*e.g.,* **710** of FIG. **7A**) as part of Wi-Fi wireless network discovery.

In one or more embodiments of the present invention, Wi-Fi AP Database (*e.g.,* **1130** of FIG. **11**) may be a database of observation data reported by one or more reporting wireless devices (*e.g.,* **150b, 150c, 150d** of FIG. **11**) of one or more Wi-Fi access points (*e.g.,* **500 or 600** of FIG. **7A**) encountered. The observation data reported may include the unique identifying information of the one or more Wi-Fi access points (*e.g.,* **500 or 600** of FIG. **7A**) encountered and additional data associated therewith, potentially including sensor data and/or location information of the one or more Wi-Fi access points (*e.g.,* **500 or 600** of FIG. **7A**) encountered. A Wi-Fi AP Database (*e.g*., **1130** of FIG. **11**) may be established, operated, and maintained separate and apart from a sensor and/or asset tracking database (*e.g*., **1110** of FIG. **11**). In certain embodiments, a Wi-Fi AP Database (*e.g.*, **1130** of FIG. **11**) may be a database of observation data maintained by an original equipment manufacturer of a wireless device (*e.g.,* **150** of FIG. **11**). In other embodiments, a Wi-Fi AP Database (*e.g*., **1130** of FIG. **11**) may be a database of observation data maintained by an operating system developer of an operating system executing on a wireless device (*e.g.,* **150** of FIG. **11**). For example, the Wi-Fi AP Database (*e.g.,* **1130** of FIG. **11**) may be an Apple^{®} iOS^{®}, Google^{®} Android^{®}, or Microsoft^{®} location services database typically used to improve the location determination accuracy for their respective end users. In still other embodiments, a Wi-Fi AP Database (*e*.*g*., **1130** of FIG. **11****)** may be a database of observation data maintained by a software developer. For example, the Wi-Fi AP Database (*e*.*g*., **1130** of FIG. **11****)** may be a database of observation data commercially offered by Cisco Systems^{®}, Facebook^{®}, WhatsApp^{®}, X-Mode^{®}, Ruckus^{®}, and Skyhook^{®}. In still other embodiments, Wi-Fi AP Database (*e*.*g*., **1130** of FIG. **11****)** may be any other type or kind of database of observation data in accordance with one or more embodiments of the present invention.

For the purpose of this disclosure, a conventional Wi-Fi access point (*e.g.,* **500** of FIG. **7A****)** or a pseudo Wi-Fi access point (*e.g.,* **600** of FIG. **7A****)** point that spoofs, or emulates, at least portions of the Wi-Fi wireless network discovery process may be used. Notwithstanding, one of ordinary skill in the art will recognize that any type or kind of device capable of spoofing, or emulating, at least portions of the Wi-Fi network discovery process by either broadcasting beacon frames (*e.g.,* **220** of FIG. **2C****)** or probe response frames (*e.g.,* **240** of FIG. **2C****)** may be used in accordance with one or more embodiments of the present invention.

The method may include associating unique identifying information of a Wi-Fi access point (*e.g.,* **500** or **600** of FIG. **7A****)** with a sensor (*e.g.,* **710** of FIG. **7A****)** in an sensor and/or asset tracking database (*e*.*g*., **1110** of FIG. **11****).** The Wi-Fi access point-coupled sensor system (*e*.*g*., **700** of FIG. **7A****)** may be disposed on, attached to, or otherwise integrated with an asset or placed in a location where sensing is desired. The unique identifying information may be any information that uniquely identifies the Wi-Fi access point (*e.g.,* **500** or **600** of FIG. **7A****)** including, for example, the BSSID of the Wi-Fi access point (*e.g.,* **500** or **600** of FIG. **7A****).** The unique identifying information may be entered into the sensor and/or asset tracking database (*e.g.,* **1110** of FIG. **11****)** and logically associated with the sensor (*e.g.,* **710** of FIG. **7A****)** for purposes of participating in the sensor and/or asset tracking task. In addition, any other information relating to the Wi-Fi access point (*e.g.,* **500** or **600** of FIG. **7A****),** sensor (*e.g.,* **710** of FIG. **7A****),** or potentially asset may be stored in the same or a related record of the sensor and/or asset tracking database (e.*g*., **1110** of FIG. **11****).**

The method may include receiving, at the sensor and/or asset tracking database (*e.g.,* **1110** of FIG. **11****),** observation data (*e.g.,* **940** of FIG. **9C****)** from a Wi-Fi AP Database (*e.g*., **1130** of FIG. **11****)** comprising the unique identifying information of the Wi-Fi access point (*e.g.,* **500 or 600** of FIG. **7A****),** sensor data, and in some embodiments, location information of the Wi-Fi access point (*e.g.,* **500 or 600** of FIG. **7A****).** The Wi-Fi AP Database (*e*.*g*., **1130** of FIG. **11****)** may receive observation data from one or more wireless devices (*e.g.,* **150b, 150c,** and **150d** of FIG. **11****)** that encounter the Wi-Fi access point (*e.g.,* **500 or 600** of FIG. **7A****)** and report unique identifying information of the Wi-Fi access point (*e.g.,* **500 or 600** of FIG. **7A****),** sensor data, and in some embodiments, location information of the Wi-Fi access point (*e.g.,* **500 or 600** of FIG. **7A****)** to the Wi-Fi AP Database (*e.g.,* **1130** of FIG. **11****).** In certain embodiments, the location information of the Wi-Fi access point (*e.g.,* **500 or 600** of FIG. **7A****)** may comprise a latitude and a longitude of the Wi-Fi access point (*e.g.,* **500 or 600** of FIG. **7A****).** In other embodiments, the location information of the Wi-Fi access point (*e.g.,* **500 or 600** of FIG. **7A****)** may comprise a latitude and a longitude of the reporting wireless device (*e.g.,* **150b, 150c, 150d** of FIG. **11****)** at or near the time of its encounter with the Wi-Fi access point (*e.g.,* **500 or 600** of FIG. **7A****)** of interest. In still other embodiments, the location information of the Wi-Fi access point (*e.g.,* **500 or 600** of FIG. **7A****)** may comprise a received signal strength of the Wi-Fi access point (*e.g.,* **500 or 600** of FIG. **7A****)** measured by the reporting wireless device (*e.g.,* **150b, 150c, or 150d** of FIG. **11****)** at or near the time of its encounter with the Wi-Fi access point (*e.g.,* **500 or 600** of FIG. **7A****)** of interest. In still other embodiments, the location information of the Wi-Fi access point *(*e*.g.,* **500** or **600** of FIG. **7A****)** may comprise a latitude and a longitude of one or more other Wi-Fi access points (*e*.*g*., other nearby **500** or **600** not shown in FIG. **11****)** near the Wi-Fi access point (*e.g.,* **500** or **600** of FIG. **7A****)** at or near the time of a reporting wireless device's (*e.g.,* **150b, 150c, 150d** of FIG. **11****)** encounter with the Wi-Fi access point (*e.g.,* **500** or **600** of FIG. **7A****).** In still other embodiments, the location information of the Wi-Fi access point *(e.g.,* **500 or 600** of FIG. **7A****)** may comprise a location, a received signal strength, any of the above-noted information, or any other information related to one or more other Wi-Fi access points (*e.g.,* other nearby **500 or 600** not shown in FIG. **11****)** near the Wi-Fi access point (*e.g.,* **500 or 600** of FIG. **7A****)** at or near the time of a reporting wireless device's (*e*.*g*., **150b, 150c, 150d** of FIG. **11****)** encounter with the Wi-Fi access point (*e.g.,* **500 or 600** of FIG. **7A****).**

The method may include storing the sensor data in the sensor and/or asset tracking database (*e*.*g*., **1110** of FIG. **11****).** The method may include providing a user access to sensor data in the sensor and/or asset tracking database (*e*.*g*., **1110** of FIG. **11****).** The method may include determining, by the sensor and/or asset tracking database (*e.g.,* **1110** of FIG. **11****),** a location of the sensor (*e.g.,* **710** of FIG. **7A****)** based, at least in part, on observation data of the Wi-Fi access point (*e.g.,* **500 or 600** of FIG. **7A****).** In certain embodiments, determining the location of the sensor (*e.g.,* **710** of FIG. **7A****)** may include using a latitude and longitude of Wi-Fi access point (*e.g.,* **500 or 600** of FIG. **7A****)** as the location of the sensor (*e.g.,* **710** of FIG. **7A****).** In other embodiments, determining the location of the sensor (*e.g.,* **710** of FIG. **7A****)** may include using a latitude and longitude of a reporting wireless device (*e.g.,* **150b, 150c, 150d** of FIG. **11****)** at or near the time of its encounter with Wi-Fi access point (*e.g.,* **500 or 600** of FIG. **7A****)** as the location of the sensor (*e.g.,* **710** of FIG. **7A****).** In still other embodiments, determining the location of the sensor (*e.g.,* **710** of FIG. **7A****)** may include using a received signal strength of the Wi-Fi access point (*e.g.,* **500 or 600** of FIG. **7A****)** measured by a reporting wireless device (*e.g.,* **150b, 150c, or 150d** of FIG. **11****)** at or near the time of its encounter with the Wi-Fi access point (*e.g.,* **500 or 600** of FIG. **7A****)** to determine the location of sensor (*e.g.,* **710** of FIG. **7A****).** Using well-known Wi-Fi positioning techniques, the received signal strength may be used to determine or enhance the location determination of the Wi-Fi access point (*e.g.,* **500 or 600** of FIG. **7A****).** For example, the received signal strength may be used to determine a radius of a location of a reporting wireless device (*e.g.,* **150b, 150c, or 150d** of FIG. **11****)** which may be used by itself or in combination with other location information to determine or enhance the location determination of the Wi-Fi access point (*e.g.,* **500 or 600** of FIG. **7A****).** In still other embodiments, determining the location of the sensor (*e.g.,* **710** of FIG. **7A****)** may include using a latitude and longitude of one or more other Wi-Fi access points (*e*.*g*., other nearby **500 or 600** not shown in FIG. **11****)** encountered by a reporting wireless device (*e.g.,* **150b, 150c, 150d** of FIG. **11****)** at or near the time of its encounter with the Wi-Fi access point (*e.g.,* **500 or 600** of FIG. **7A****)** to determine the location of the sensor (*e.g.,* **710** of FIG. **7A****).** Using well known Wi-Fi positioning techniques, the locations of nearby Wi-Fi access points (*e*.*g*., other nearby **500 or 600** not shown in FIG. **11****)** may be used alone or in combination to determine or enhance the location determination of the Wi-Fi access point (*e.g.,* **500 or 600** of FIG. **7A****).** In still other embodiments, determining the location of the sensor (*e*.*g*., **710** of FIG. **7A****)** may include using a location, a received signal strength, any of the above-noted information, or any other information related to one or more other Wi-Fi access points (*e.g*., other nearby **500 or 600** not shown in FIG. **11****)** near the Wi-Fi access point (*e.g.,* **500 or 600** of FIG. **7A****)** at or near the time of a reporting wireless device's (*e.g.,* **150b, 150c, 150d** of FIG. **11****)** encounter with the Wi-Fi access point (*e.g.,* **500 or 600** of FIG. **7A****)** to determine the location of the sensor (*e.g.,* **710** of FIG. **7A****).** Using well known Wi-Fi positioning techniques, the received signal strengths of nearby Wi-Fi access points (*e*.*g*., other nearby **500 or 600** not shown in FIG. **11****)** may be used alone or in combination to determine or enhance the location determination of the Wi-Fi access point (*e.g.,* **500 or 600** of FIG. **7A****).**

One of ordinary skill in the art will recognize that historical location information, reporting wireless device (*e.g.,* **150b, 150c, 150d** of FIG. **11****)** location information, conventional Wi-Fi access point (*e.g.,* **500** of FIG. **7A****)** or pseudo Wi-Fi access point (*e.g.,* **600** of FIG. **7A****)** location information, other nearby Wi-Fi access point (*e.g.,* other nearby **500 or 600** not shown in FIG. **11****)** location information, received signal strength of the Wi-Fi access point (*e.g.,* **500 or 600** of FIG. **7A****)** location information, received signal strength of other nearby Wi-Fi access point (*e.g.,* other nearby **500 or 600** not shown in FIG. **11****)** location information, and any other information may be used, alone or in combination, with known positioning techniques, including, but not limited to, smartphone positioning, network-based positioning, hybrid positioning, GPS positioning, cellular positioning, Wi-Fi positioning, triangulation, trilateration, time of arrival, angle of arrival, and any other positioning technique or combination thereof may be used in accordance with one or more embodiments of the present invention. Further, one of ordinary skill in the art will recognize that the positioning technique(s) used may vary based on the type or kind of observation data available at the time of the location determination.

The method may further include storing the location of the sensor (*e.g.,* **710** of FIG. **7A****)** in the sensor and/or asset tracking database (*e*.*g*., **1110** of FIG. **11****).** The method may further include providing a user access, via a client portal (*e.g.,* **1120** of FIG. **11****),** to the location of the sensor (*e.g.,* **710** of FIG. **7A****)** stored in the sensor and/or asset tracking database (*e*.*g*., **1110** of FIG. **11****).** In certain embodiments, a client portal (*e.g.,* **1120** of FIG. **11****)** may include a software interface for querying and receiving information from the sensor and/or asset tracking database (*e*.*g*., **1110** of FIG. **11****).** The client portal *(*e*.g.,* **1120** of FIG. **11****)** may be part of the same computing system as that of the sensor and/or asset tracking database (*e*.*g*., **1010** of FIG. **10A****)** or a separate and distinct computing system (*e*.*g*., **1200** of FIG. **12****)** or wireless device (*e.g.,* **150)** that connects to the sensor and/or asset tracking database (*e.g.,* **1110** of FIG. **11****)** over a network connection. The client portal (*e.g.,* **1120** of FIG. **11****)** may be a web-based portal to the sensor and/or asset tracking database (*e.g.,* **1110** of FIG. **11****)** or a stand-alone software application providing access to the sensor and/or asset tracking database (*e*.*g*., **1110** of FIG. **11****)** via a network connection.

Advantageously, there is no communication between the sensor and/or asset tracking database (*e.g.,* **1110** of FIG. **11****)** and the one or more wireless devices (*e.g.,* **150b, 150c,** or **150d** of FIG. **11****)** that report an encounter with the Wi-Fi access point (*e.g.,* **500** or **600** of FIG. **7A****),** comprising observation data, to the Wi-Fi AP Database (*e.g*., **1130** of FIG. **11****),** thereby enabling passive sensor and/or asset tracking in an open network environment where there is no required network connectivity. In this open network configuration, the existing infrastructure represented by the ecosystem of wireless devices (*e.g.,* **150),** such as, for example, smartphones, and the inherent reporting features wireless device operating systems or other software (*e.g.,* **150)** to report observation data of the Wi-Fi access point (*e.g.,* **500** or **600** of FIG. **7A****)** they encounter may be leveraged to passive track assets (*e.g.,* **1020** of FIG. **11****),** without requiring an awareness on the part of the wireless device (*e.g.,* **150),** or user thereof, that they are participating in the asset tracking task. Further, the one or more wireless devices (*e.g.,* **150b, 150c, 150d** of FIG. **11****),** or users thereof, may not be aware that they are participating in the asset tracking task. The wireless devices (*e.g.,* **150b, 150c, 150d** of FIG. **11****)** simply report observation data of Wi-Fi access points *(e.g.,* **500** or **600** of FIG. **7A****)** they encounter to the Wi-Fi AP Database (*e*.*g*., **1130** of FIG. **11****),** typically as part of their participation in location services.

In one or more embodiments of the present invention, a method of passive sensor tracking may use first observation data received directly from one or more direct reporting wireless devices *(e.g.,* **150a** of FIG. **11****)** and second observation data received from a Wi-Fi AP Database (*e*.*g*., **1130** of FIG. **11****)** that receives observation data from one or more indirect reporting wireless devices *(e.g.,* **150b, 150c, 150d** of FIG. **11****).** A conventional Wi-Fi access point (*e.g.,* **500** of FIG. **7A****)** or a pseudo Wi-Fi access point (*e.g.,* **600** of FIG. **7A****)** may transmit a management frame *(e.g.,* **300** of FIG. **7B****)** that includes sensor data of a sensor (*e.g.,* **710** of FIG. **7A****)** as part of Wi-Fi wireless network discovery.

In one or more embodiments of the present invention, a Wi-Fi AP Database (*e.g.,* **1130** of FIG. **11****)** may be a database of observation data including the unique identifying information of Wi-Fi access points (*e.g.,* **500** or **600** of FIG. **7A****),** sensor data, and in some embodiments, location information of the Wi-Fi access points (*e.g.,* **500** or **600** of FIG. **7A****)** encountered by one or more indirect reporting wireless devices (*e.g.,* **150b, 150c, 150d** of FIG. **11****).** A Wi-Fi AP Database (*e.g.,* **1130** of FIG. **11****)** may be established, operated, and maintained separate and apart from a sensor and/or asset tracking database (*e*.*g*., **1110** of FIG. **11****).** In certain embodiments, a Wi-Fi AP Database (*e*.*g*., **1130** of FIG. **11****)** may be a database of observation data maintained by an original equipment manufacturer of a wireless device (*e.g.,* **150** of FIG. **11****).** In other embodiments, a Wi-Fi AP Database (*e.g.,* **1130** of FIG. **11****)** may be a database of observation data maintained by an operating system developer of an operating system executing on a wireless device (*e.g.,* **150** of FIG. **11****).** For example, the Wi-Fi AP Database (*e*.*g*., **1130** of FIG. 11) may be an Apple^{®} iOS^{®}, Google^{®} Android^{®}, or Microsoft^{®} location services database typically used to improve the location determination accuracy for their respective end users. In still other embodiments, a Wi-Fi AP Database (*e*.*g*., **1130** of FIG. **11****)** may be a database of observation data maintained by a software developer. For example, the Wi-Fi AP Database (*e*.*g*., **1130** of FIG. **11****)** may be a database of observation data commercially offered by Cisco Systems^{®}, Facebook^{®}, WhatsApp^{®}, X-Mode^{®}, Ruckus^{®}, and Skyhook^{®}. In still other embodiments, Wi-Fi AP Database (*e*.*g*., **1130** of FIG. **11****)** may be any other type or kind of database of observation data in accordance with one or more embodiments of the present invention.

For the purpose of this disclosure, a Wi-Fi access point (*e.g.,* **500** or **600** of FIG. **7A****)** that spoofs, or emulates, at least portions of the Wi-Fi wireless network discovery process may be used. Notwithstanding, one of ordinary skill in the art will recognize that any type or kind of device capable of spoofing, or emulating, at least portions of the Wi-Fi network discovery process by either broadcasting beacon frames (*e.g.,* **220** of FIG. **2C** or **220s** of FIG. **8****)** or probe response frames (*e.g*., **240** of FIG. **2C** or **240s** of FIG. **8****)** including sensor data may be used in accordance with one or more embodiments of the present invention.

The method may include associating unique identifying information of a Wi-Fi access point (*e.g.,* **500** or **600** of FIG. **7A****)** with a sensor (*e.g.,* **710** of FIG. **7A****)** in an sensor and/or asset tracking database (*e.g.,* **1110** of FIG. **11****).** The sensor (*e.g.,* **710** of FIG. **7A****)** may be disposed on, attached to, or integrated with an asset or placed in a location where sensing is desired. The unique identifying information may be any information that uniquely identifies Wi-Fi access point (*e.g.,* **500** or **600** of FIG. **7A****)** including, for example, the BSSID of the Wi-Fi access point (*e.g.,* **500** or **600** of FIG. **7A****).** The unique identifying information may be entered into the sensor and/or asset tracking database (*e*.*g*., **1110** of FIG. **11****)** and logically associated with the sensor (*e.g.,* **710** of FIG. **7A****)** for purposes of participating in the sensor and/or asset tracking task. In addition, any other information relating to the Wi-Fi access point *(e.g.,* **500** or **600** of FIG. **7A****)** or asset associated therewith may be stored in the same or a related record of the sensor and/or asset tracking database (*e.g.,* **1110** of FIG. **11****).**

The method may include receiving, at the sensor and/or asset tracking database (*e*.*g*., **1110** of FIG. **11****),** first observation data observation data from one or more direct reporting wireless devices (*e.g.,* **150a** of FIG. **11****)** that encounter the Wi-Fi access point (*e.g.,* **500** or **600** of FIG. **7A****)** comprising the unique identifying information of the Wi-Fi access point (*e.g.,* **500** or **600** of FIG. **7A****),** sensor data of the sensor (*e.g.,* **710** of FIG. **7A****),** and in some embodiments, first location information of the Wi-Fi access point (*e.g.,* **500** or **600** of FIG. **7A****).**

The method may include receiving, at the sensor and/or asset tracking database (*e*.*g*., **1110** of FIG. **11****),** second observation data from a Wi-Fi AP Database (*e.g.,* **1130** of FIG. **11****)** comprising the unique identifying information of the Wi-Fi access point (*e.g.,* **500** or **600** of FIG. **7A****),** sensor data of the sensor (*e.g.,* **710** of FIG. **7A****),** and in some embodiments, location information of the Wi-Fi access point (*e.g.,* **500** or **600** of FIG. **7A****).** The Wi-Fi AP Database (*e.g.,* **1130** of FIG. **11****)** may receive observation data from one or more indirect reporting wireless devices (*e*.*g*., **150b, 150c, 150d** of FIG. **11****)** that encounter the Wi-Fi access point *(e.g.,* **500** or **600** of FIG. **7A****)** and report unique identifying information of the Wi-Fi access point *(e.g.,* **500** or **600** of FIG. **7A****),** sensor data of the sensor *(e.g.,* **710** of FIG. **7A****)** and, in some embodiments, location information of the Wi-Fi access point (*e.g.,* **500** or **600** of FIG. **7A****)** to the Wi-Fi AP Database (*e*.*g*., **1030** of FIG. **10A****).**

In certain embodiments, the location information of the Wi-Fi access point (*e.g.,* **500** or **600** of FIG. **7A****)** may a latitude and a longitude of the Wi-Fi access point (*e.g.,* **500** or **600** of FIG. **7A****).** In other embodiments, the location information of the Wi-Fi access point (*e.g.,* **500** or **600** of FIG. **7A****)** may comprise a latitude and a longitude of a reporting wireless device (*e.g.,* **150b, 150c, 150d** of FIG. **10A****)** at or near the time of its encounter with the Wi-Fi access point (*e.g.,* **500** or **600** of FIG. **7A****).** In still other embodiments, the location information of the Wi-Fi access point (*e.g.,* **500** or **600** of FIG. **7A****)** may comprise a received signal strength of the Wi-Fi access point (*e.g.,* **500** or **600** of FIG. **7A****)** measured by a reporting wireless device (*e.g.,* **150b, 150c, 150d** of FIG. **10A****)** at or near the time of its encounter with the Wi-Fi access point (*e.g.,* **500** or **600** of FIG. **7A****).** In still other embodiments, the location information of Wi-Fi access point (*e.g.,* **500** or **600** of FIG. **7A****)** may comprise a latitude and a longitude of one or more other Wi-Fi access points (*e.g.,* other nearby **500** or **600** not shown in FIG. **10A****)** near the Wi-Fi access point (*e.g.,* **500** or **600** of FIG. **7A****)** at or near the time of a reporting wireless device's (*e*.*g*., **150b, 150c, 150d** of FIG. **10A****)** encounter with Wi-Fi access point (*e.g.,* **500** or **600** of FIG. **7A****).** In still other embodiments, the location information of the Wi-Fi access point (*e.g.,* **500** or **600** of FIG. 7A) may comprise a location, a received signal strength, any of the above-noted information, or any other information related to one or more other Wi-Fi access points (*e*.*g*., other nearby **500** or **600** not shown in FIG. **11****)** near the Wi-Fi access point (*e.g.,* **500** or **600** of FIG. **7A****)** at or near the time of a reporting wireless device's (*e.g.,* **150b, 150c, 150d** of FIG. **10A****)** encounter with the Wi-Fi access point (*e.g.,* **500** or **600** of FIG. **7A****).**

The method may include determining, by the sensor and/or asset tracking database (*e.g.,* **1110** of FIG. **11****),** a location of the sensor (*e.g.,* **710** of FIG. **7A****)** based, at least in part, on the first and/or the second observation data of the Wi-Fi access point (*e.g.,* **500** or **600** of FIG. **7A****).** In certain embodiments, determining the location of the sensor (*e.g.,* **710** of FIG. **7A****)** may include using a latitude and longitude of the Wi-Fi access point (*e.g.,* **500** or **600** of FIG. **7A****)** as the location of the sensor (*e.g.,* **710** of FIG. **7A****).** In other embodiments, determining the location of the sensor (*e.g.,* **710** of FIG. **7A****)** may include using a latitude and longitude of a reporting wireless device (*e.g.,* **150b, 150c, 150d** of FIG. **10A****)** at or near the time of its encounter with the Wi-Fi access point (*e.g.,* **500** or **600** of FIG. **7A****)** as the location of the sensor (*e.g.,* **710** of FIG. **7A****).** In still other embodiments, determining the location of the sensor (*e.g.,* **710** of FIG. **7A****)** may include using a received signal strength of the Wi-Fi access point (*e.g.,* **500** or **600** of FIG. 7A) measured by a reporting wireless device (*e.g.,* **150b, 150c,** or **150d** of FIG. **10A****)** at or near the time of its encounter with the Wi-Fi access point (*e.g.,* **500** or **600** of FIG. **7A****)** to determine the location of the sensor (*e.g.,* **710** of FIG. 7A). Using well-known Wi-Fi positioning techniques, the received signal strength may be used to determine or enhance the location determination of the Wi-Fi access point *(*e*.g.,* **500** or **600** of FIG. **7A****).** For example, the received signal strength may be used to determine a radius of a location of a reporting wireless device (*e.g.,* **150b, 150c, 150d** of FIG. **11****)** which may be used by itself or in combination with other location information to determine or enhance the location determination of the Wi-Fi access point (*e.g.,* **500** or **600** of FIG. **7A****).** In still other embodiments, determining the location of the sensor (*e.g.,* **710** of FIG. **7A****)** may include using a latitude and longitude of one or more other Wi-Fi access points (*e*.*g*., other nearby **500** or **600** not shown in FIG. **11****)** encountered by a reporting wireless device (*e.g.,* **150b, 150c, 150d** of FIG. **11****)** at or near the time of its encounter with the Wi-Fi access point (*e*.*g*., **500** or **600** of FIG. **7A****)** to determine the location of the sensor (e.g., **710** of FIG. 7A). Using well known Wi-Fi positioning techniques, the locations of nearby Wi-Fi access points (*e*.*g*., other nearby **500** or **600** not shown in FIG. **11****)** may be used by itself or in combination to determine or enhance the location determination of the Wi-Fi access point (*e.g.,* **500** or **600** of FIG. **7A****).** In still other embodiments, determining the location of the moveable asset (*e.g.,* **920** of FIG. **10A****)** may include using a location, a received signal strength, any of the above-noted information, or any other information related to one or more other Wi-Fi access points (*e*.*g*., other nearby **500** or **600** not shown in FIG. **10A****)** near the Wi-Fi access point (*e.g.,* 500 or **600** of FIG. **7A****)** at or near the time of a reporting wireless device's (*e.g.,* 150b, **150c, 150d** of FIG. **11****)** encounter with the Wi-Fi access point (*e.g.,* **500** or **600** of FIG. **7A****)** to determine the location of the sensor (*e.g.,* **710** of FIG. **7A****).** Using well known Wi-Fi positioning techniques, the received signal strengths of nearby Wi-Fi access points (*e*.*g*., other nearby **500** or **600** not shown in FIG. **11****)** may be used by itself or in combination to determine or enhance the location determination of the Wi-Fi access point (*e.g.,* **500** or **600** of FIG. **7A****).**

One of ordinary skill in the art will recognize that historical location information, reporting wireless device (*e.g.,* **150b, 150c, 150d** of FIG. **11****)** location information, conventional Wi-Fi access point (*e.g.,* **500** of FIG. **11****)** or pseudo Wi-Fi access point (*e.g.,* **600** of FIG. **11****)** location information, other nearby Wi-Fi access point (*e.g.,* other nearby **500** or **600** not shown in FIG. **11****)** location information, received signal strength of the Wi-Fi access point (*e.g.,* **500** or **600** of FIG. **7A****)** location information, received signal strength of other nearby Wi-Fi access point (*e.g.,* other nearby **500** or **600** not shown in FIG. 11) location information, and any other information relating to the Wi-Fi access point (*e.g.,* **500** or **600** of FIG. **7A****)** or nearby Wi-Fi access points (*e*.*g*., other nearby **500** or **600** not shown in FIG. **11****)** may be used, alone or in combination, with known positioning techniques, including, but not limited to, smartphone positioning, network-based positioning, hybrid positioning, GPS positioning, cellular positioning, triangulation, trilateration, time of arrival, angle of arrival, and any other positioning technique or combination of positioning techniques may be used in accordance with one or more embodiments of the present invention. Further, one of ordinary skill in the art will recognize that, the positioning technique or techniques used may vary based on the type or kind of observation data available at the time of the location determination.

The method may further include storing the location of the moveable asset (*e.g.,* **920** of FIG. **11****)** in the sensor and/or asset tracking database (*e.g.,* **1110** of FIG. **11****).** The method may further include providing a user access, via a client portal (*e.g.,* **1120** of FIG. **11****),** to the location of the moveable asset (*e.g.,* **920** of FIG. **11****)** stored in the sensor and/or asset tracking database (*e*.*g*., **1110** of FIG. **11****).** In certain embodiments, a client portal (*e.g.,* **1120** of FIG. **11****)** may include a software interface for querying and receiving information from the sensor and/or asset tracking database (*e.g.,* **1110** of FIG. **11****).** The client portal (*e.g.,* **1120** of FIG. **11****)** may be part of the same computing system as that of the sensor and/or asset tracking database (*e.g.,* **1110** of FIG. **11****)** or a separate and distinct computing system (*e.g.,* **1200** of FIG. **12****)** or wireless device (*e.g.,* **150)** that connects to the sensor and/or asset tracking database (*e*.*g*., **1110** of FIG. **11****)** over a network connection. The client portal (*e.g.,* **1120** of FIG. **11****)** may be a web-based portal to the sensor and/or asset tracking database (*e*.*g*., **1110** of FIG. **11****)** or a stand-alone software application providing access to the sensor and/or asset tracking database (*e*.*g*., **1110** of FIG. 11) via a network connection.

Advantageously, there is no communication between the sensor and/or asset tracking database (*e*.*g*., **1110** of FIG. **11****)** and the one or more indirect reporting wireless devices (*e.g.,* **150b, 150c, 150d** of FIG. **11****)** that report an encounter with the conventional Wi-Fi access point (*e.g.,* **500** of FIG. **11****)** or pseudo Wi-Fi access point (*e.g.,* **600** of FIG. **11****),** comprising observation data, to the Wi-Fi AP Database (*e.g.,* **1130** of FIG. **11****),** thereby enabling passive, and potentially anonymous, asset tracking in areas where there is no network connectivity. In this hybrid open-network configuration, the existing infrastructure represented by the ecosystem of wireless devices (*e.g.,* 150), such as, for example, smartphones, and the inherent reporting features wireless device operating systems or other software (*e.g.,* **150)** to report observation data of conventional Wi-Fi access points (*e.g.,* **500** of FIG. **11****)** or pseudo Wi-Fi access points (*e.g.,* **600** of FIG. **11****)** they encounter may be leveraged to passive track sensors and/or assets (*e*.*g*., **920** of FIG. **11****),** without requiring an awareness on the part of the wireless device (*e.g.,* **150),** or user thereof, that they are participating in the asset tracking task. Further, the one or more wireless devices (*e.g.,* **150b, 150c, 150d** of FIG. **11****),** or users thereof, may not be aware that they are participating in the asset tracking task. The wireless devices (*e.g.,* **150b, 150c, 150d** of FIG. **11****)** simply report observation data of Wi-Fi access points (*e.g.,* **500** or **600** of FIG. **7A****)** they encounter to the Wi-Fi AP Database (*e*.*g*., **1130** of FIG. 11), typically as part of their participation in location services.

In one or more embodiments of the present invention, a method of passive sensor tracking may use observation data received directly from one or more direct reporting wireless devices (*e.g.,* **150a** of FIG. **11****)** that encounter a Wi-Fi access point (*e.g.,* **500** or **600** of FIG. **7A****).** A conventional Wi-Fi access point (*e.g.,* **500** of FIG. **7A****)** or a pseudo Wi-Fi access point *(e.g.,* **600** of FIG. **7A****)** may transmit a management frame (*e.g.,* **300** of FIG. **7B****)** that includes sensor data of a sensor (*e.g.,* **710** of FIG. **7A****)** as part of Wi-Fi wireless network discovery.

For the purpose of this disclosure, a Wi-Fi access point (*e.g.,* **500** or **600** of FIG. **7A****)** that spoofs, or emulates, at least portions of the Wi-Fi wireless network discovery process may be used. Notwithstanding, one of ordinary skill in the art will recognize that any type or kind of device capable of spoofing, emulating, or participating in, at least portions of the Wi-Fi network discovery process by either broadcasting beacon frames (*e.g.,* **220** of FIG. **2C** or **220s** of FIG. **8****)** or probe response frames (*e.g.,* **240** of FIG. **2C** or **240s** of FIG. **8****)** may be used in accordance with one or more embodiments of the present invention.

The method may include associating unique identifying information of Wi-Fi access point (*e.g.,* **500** or **600** of FIG. **7A****)** with a sensor (*e.g.,* **710** of FIG. **7A****)** in a sensor and/or asset tracking database (*e*.*g*., **1110** of FIG. **11****),** wherein the Wi-Fi access point (*e.g.,* **500** or **600** of FIG. **7A****)** is disposed on, attached to, or integrated. The unique identifying information may be any information that uniquely identifies a Wi-Fi access point *(*e*.g.,* **500** or **600** of FIG. **7A****)** including, for example, the BSSID of the Wi-Fi access point (*e.g.,* **500** or **600** of FIG. **7A****).** The unique identifying information may be entered into the sensor and/or asset tracking database (*e.g.,* **1110** of FIG. **11****)** and logically associated with the sensor (*e.g.,* 710 of FIG. **7A****)** for purposes of participating in the sensor and/or asset tracking task. In addition, any other information relating to the Wi-Fi access point (*e.g.,* **500** or **600** of FIG. **7A****),** sensor, or asset may be stored in the same or a related record of the sensor and/or asset tracking database (*e*.*g*., **1110** of FIG. **11****).**

The method may include receiving, at the sensor and/or asset tracking database (*e*.*g*., **1110** of FIG. **11****),** observation data from one or more direct reporting wireless devices (*e.g.,* **150a** of FIG. **11****)** that encounter the Wi-Fi access point (*e.g.,* **500** or **600** of FIG. **7A****)** comprising the unique identifying information of the Wi-Fi access point (*e.g.,* **500** or **600** of FIG. **7A****),** sensor data, and in some embodiments, location information of the Wi-Fi access point (*e.g.,* **500** or **600** of FIG. **7A****).**

In certain embodiments, the location information of Wi-Fi access point (*e.g.,* **500** or **600** of FIG. **7A****)** may include a latitude and a longitude of the Wi-Fi access point (*e.g.,* **500** or **600** of FIG. **7A****).** In other embodiments, the location information of the Wi-Fi access point (*e.g.,* **500** or **600** of FIG. **7A****)** may comprise a latitude and a longitude of a reporting wireless device (*e.g.,* **150a** of FIG. **11****)** at or near the time of its encounter with the Wi-Fi access point (*e.g.,* **500** or **600** of FIG. **7A****).** In still other embodiments, the location information of the Wi-Fi access point (*e.g.,* **500** or **600** of FIG. **7A****)** may comprise a received signal strength of the Wi-Fi access point (*e*.*g*., **500** or **600** of FIG. 7A) measured by a reporting wireless device (*e*.g*.*, **150a** of FIG. **11****)** at or near the time of its encounter with the Wi-Fi access point (*e.g.,* **500** or **600** of FIG. **7A****).** In still other embodiments, the location information of the Wi-Fi access point (*e.g.,* **500** or **600** of FIG. **7A****)** may comprise a latitude and a longitude of one or more other Wi-Fi access points (*e*.*g*., other nearby **500** or **600** not shown in FIG. **11****)** near the Wi-Fi access point (*e.g.,* **500** or **600** of FIG. **7A****)** at or near the time of a reporting wireless device's (*e.g.,* **150a** of FIG. **11****)** encounter with the Wi-Fi access point (*e.g.,* **500** or **600** of FIG. **7A****).** In still other embodiments, the location information of the Wi-Fi access point (*e.g.,* **500** or **600** of FIG. **7A****)** may comprise a location, a received signal strength, any of the above-noted information, or any other information relating to one or more other Wi-Fi access points (*e.g.,* other nearby **500** or **600** not shown in FIG. **11****)** near the Wi-Fi access point (*e.g.,* **500** or **600** of FIG. **7A****)** at or near the time of a reporting wireless device's (*e*.*g*., **150a** of FIG. **10A****)** encounter with the Wi-Fi access point (*e.g.,* **500** or **600** of FIG. **7A****).**

The method may include determining a location of the sensor (*e.g.,* **710** of FIG. **7A****)** based, at least in part, on the observation data of the Wi-Fi access point (*e.g.,* **500** or **600** of FIG. **7A****).** In certain embodiments, determining the location of the sensor (*e.g.,* **710** of FIG. **7A****)** may include using a latitude and longitude of the Wi-Fi access point (*e.g.,* **500** or **600** of FIG. **7A****)** as the location of the sensor (*e.g.,* **710** of FIG. **7A****).** In other embodiments, determining the location of the sensor (*e*.*g*., 710 of FIG. **7A****)** may include using a latitude and longitude of a reporting wireless device (*e.g.,* **150a** of FIG. **11****)** at or near the time of its encounter with the Wi-Fi access point (*e.g.,* **500** or **600** of FIG. **7A****)** as the location of the sensor (*e.g.,* **710** of FIG. 7A). In still other embodiments, determining the location of the sensor (*e*.*g*., **710** of FIG. **7A****)** may include using a received signal strength of the Wi-Fi access point (*e.g.,* **500** or **600** of FIG. **7A****)** measured by a reporting wireless device (*e.g.,* **150a** of FIG. **11****)** at or near the time of its encounter with the Wi-Fi access point (*e.g.,* **500** or **600** of FIG. **7A****)** to determine the location of the sensor (*e.g.,* **710** of FIG. **7A****).** Using well-known Wi-Fi positioning techniques, the received signal strength may be used to determine or enhance the location determination of the Wi-Fi access point (*e.g.,* **500** or **600** of FIG. **7A****).** For example, the received signal strength may be used to determine a radius of a location of a reporting wireless device (*e.g.,* **150a** of FIG. **11****)** which may be used by itself or in combination with other location information to determine or enhance the location determination of the Wi-Fi access point (*e.g.,* **500** or **600** of FIG. **7A****).** In still other embodiments, determining the location of the sensor (*e.g.,* **710** of FIG. **7A****)** may include using a latitude and longitude of one or more other Wi-Fi access points (*e*.*g*., other nearby **500** or **600** not shown in FIG. **11****)** encountered by a reporting wireless device (*e.g.,* **150a** of FIG. **11****)** at or near the time of its encounter with the Wi-Fi access point (*e.g.,* **500** or **600** of FIG. **7A****)** to determine the location of the sensor (*e.g.,* **710** of FIG. 7A). Using well known Wi-Fi positioning techniques, the locations of nearby Wi-Fi access points (*e*.*g*., other nearby **500** or **600** not shown in FIG. **11****)** may be used by itself or in combination to determine or enhance the location determination of the Wi-Fi access point (*e.g.,* **500** or **600** of FIG. **7A****).** In still other embodiments, determining the location of the sensor (*e.g.,* **710** of FIG. **7A****)** may include using a location, a received signal strength, any of the above-noted information, or any other information related to one or more other Wi-Fi access points (*e*.*g*., other nearby **500** or **600** not shown in FIG. **11****)** near the Wi-Fi access point (*e.g.,* **500** or **600** of FIG. **7A****)** at or near the time of a reporting wireless device's (*e.g.,* **150a)** encounter with the Wi-Fi access point (*e.g.,* **500** or **600** of FIG. **7A****)** to determine the location of the sensor (*e.g.,* **710** of FIG. **7A****).** Using well known Wi-Fi positioning techniques, the received signal strengths of nearby Wi-Fi access points (*e*.*g*., other nearby **500** or **600** not shown in FIG. **11****)** may be used by itself or in combination to determine or enhance the location determination of the Wi-Fi access point (*e.g.,* **500** or **600** of FIG. **7A****).**

One of ordinary skill in the art will recognize that historical location information, reporting wireless device (*e.g.,* **150a** of FIG. **11****)** location information, Wi-Fi access point (*e.g.,* **500** or **600** of FIG. **7A****)** location information, other nearby Wi-Fi access point *(e.g.,* other nearby **500** or **600** not shown in FIG. **11****)** location information, received signal strength of the Wi-Fi access point *(e.g.,* **500** or **600** of FIG. **7A****)** location information, received signal strength of other nearby Wi-Fi access point *(e.g.,* other nearby **500** or **600** not shown in FIG. **11****)** location information, and any other information relating to the Wi-Fi access point *(e.g.,* **500** or **600** of FIG. **7A****)** or nearby Wi-Fi access points (*e*.*g*., other nearby **500** or 600 not shown in FIG. **11****)** may be used, alone or in combination, with known positioning techniques, including, but not limited to, smartphone positioning, network-based positioning, hybrid positioning, GPS positioning, cellular positioning, triangulation, trilateration, time of arrival, angle of arrival, and any other positioning technique or combination of positioning techniques may be used in accordance with one or more embodiments of the present invention. Further, one of ordinary skill in the art will recognize that, the positioning technique or techniques used may vary based on the type or kind of observation data available at the time of the location determination.

The method may further include storing the location of the (*e.g.,* **710** of FIG. **7A****)** in the sensor and/or asset tracking database (*e*.*g*., **1110** of FIG. **11****).** The method may further include providing a user access, via the client portal (*e.g.,* **1120** of FIG. **11****),** to the location of the (*e.g.,* **710** of FIG. **7A****)** stored in the sensor and/or asset tracking database (*e*.*g*., **1110** of FIG. **11****).** In certain embodiments, a client portal (*e.g.,* **1120** of FIG. 11) may include a software interface for querying and receiving information from the sensor and/or asset tracking database (*e*.*g*., **1110** of FIG. **11****).** The client portal (*e.g.,* **1120** of FIG. **11****)** may be part of the same computing system as that of the sensor and/or asset tracking database (*e*.*g*., **1110** of FIG. **11****)** or a separate and distinct computing system (*e*.*g*., **1100** of FIG. **11****)** or wireless device (*e.g.,* **150)** that connects to the sensor and/or asset tracking database (*e.g.,* **1110** of FIG. **11****)** over a network connection. The client portal (*e.g.,* **1120** of FIG. **11****)** may be a web-based portal to the sensor and/or asset tracking database (*e*.*g*., **1110** of FIG. **11****)** or a stand-alone software application providing access to the sensor and/or asset tracking database (*e*.*g*., **1110** of FIG. **11****)** via a network connection.

The method may further include providing one or more wireless devices (*e*.*g*., **150a** of FIG. **11****),** from the sensor and/or asset tracking database (*e*.*g*., **1110** of FIG. **11****),** with the unique identifying information of the Wi-Fi access point (*e.g.,* **500** or **600** of FIG. **7A****)** to limit observation data reported by the one or more wireless devices *(e.g.,* **150a** of FIG. **10A****)** to data relevant to the Wi-Fi access point (*e.g*., **500** or **600** of FIG. **7A****)** associated with the sensor (*e.g.,* **710** of FIG. **7A****)** to be tracked. The one or more wireless devices (*e.g.,* **150a** of FIG. **11****)** may limit the observation data reported directly to the sensor and/or asset tracking database (*e*.*g*., **1110** of FIG. **11****)** to observation data relevant to Wi-Fi access point (*e.g.,* **500** or **600** of FIG. **7A****)** associated with the sensor (*e.g.,* **710** of FIG. **7A****)** to be tracked. The unique identifying information may be provided at any time, including, prior to receiving observation data from the one or more wireless devices (*e.g.,* **150a** of FIG. **11****)** that encounter the Wi-Fi access point (*e.g.,* **500** or **600** of FIG. **7A****).**

The method may further include filtering, at the sensor and/or asset tracking database (*e*.*g*., **1110** of FIG. **11****),** observation data received from one or more wireless devices (*e.g.,* **150a** of FIG. 11) to data relevant to the Wi-Fi access point (*e.g.,* **500** or **600** of FIG. **7A****)** associated with the sensor (*e.g.,* **710** of FIG. **7A****)** to be tracked. Filtering may be performed by the sensor and/or asset tracking database (*e.g.,* **1110** of FIG. **11****)** at any time, including, after receiving observation data from the one or more wireless devices (*e.g.,* **150a** of FIG. **11****)** that encounter the Wi-Fi access point (*e.g.,* **500** or **600** of FIG. **7A****).**

In this configuration, limiting and/or filtering observation data to data relevant to the Wi-Fi access point (*e.g.,* **500** or **600** of FIG. **7A****)** associated with the sensor *(*e*.g.,* 710 of FIG. **7A****)** to be tracked may enhance tracking capabilities and reduce latency in both reporting observation data and querying the sensor and/or asset tracking database (*e*.*g*., **1110** of FIG. **11****).**

In one or more embodiments of the present invention, a method of passive sensor tracking with existing infrastructure may include associating, in a sensor tracking database, unique identifying information of a Wi-Fi access point of a passive sensor with a physical property to be sensed by the passive sensor. The unique identifying information may be any information that uniquely identifies the Wi-Fi access point of the passive sensor and is reported by a Wi-Fi client that encounters the Wi-Fi access point, typically as part of location services, but potentially a direct or indirect report. The sensor data may be placed or encoded in one or more fields of the spoofed beacon frame, probe response frame, or other management frame transmitted by the Wi-Fi access point as part of Wi-Fi wireless network discovery. In certain embodiments, the Wi-Fi access point of the passive sensor may be a dummy Wi-Fi access point that does not allow the wireless device to authenticate to, or associate with, the dummy Wi-Fi access point and the dummy Wi-Fi access point does not provide upstream network connectivity.

In certain embodiments, the unique identifying information may be, for example, the BSSID of the Wi-Fi access point of the passive sensor. However, one of ordinary skill in the art will recognize that any field or subfield of the spoofed beacon frame, probe response frame, or other management frame may be used to uniquely identify the Wi-Fi access point, and by association the passive sensor, in accordance with one or more embodiments of the present invention. Notwithstanding the above, to avoid potential overlap or confusion, using the standardized BSSID that are guaranteed to be unique, may provide the simplest solution to uniquely identifying the Wi-Fi access point of the passive sensor.

The method may also include receiving, at the sensor tracking database, sensor data, comprising the physical property sensed by the passive sensor, placed or encoded in the spoofed beacon frame, probe response frame, or other management frame that the passive sensor transmits, as part of Wi-Fi wireless network discovery, to a wireless device that encounters the passive sensor. As noted above, the sensor data may be numeric or alphanumeric, explicit or encoded, and stored in any suitable field or subfield or combination or portions thereof of the spoofed beacon frame, probe response frame, or other management frame, provided it is a field or subfield that is reported by the Wi-Fi client that reports the encounter with the Wi-Fi access point of the passive sensor to a Wi-Fi AP Database or sensor tracking database. The wireless device may report, either directly or indirectly, the unique identifying information of the Wi-Fi access point of the passive sensor encountered and the sensor data encoded in the spoofed beacon frame, probe response frame, or other management frame to a Wi-Fi AP Database, typically as part of location services, or direct or indirect report to sensor tracking database.

In certain embodiments, the sensor data may be received by the sensor tracking database from the wireless device that encounters the passive sensor. In other embodiments, the sensor data may be received by the sensor tracking database from a Wi-Fi AP Database that receives the sensor data from the wireless device that encounters the passive sensor. The Wi-Fi AP Database may comprise a database managed by an original equipment manufacturer, an operating system developer, or a third-party software developer that compiles and makes information relating to reported Wi-Fi access points available to third-parties, typically to enhance location services, but potentially for other uses.

The wireless device may not be required to authenticate to, associate with, or establish a network connection with the Wi-Fi access point or the dummy Wi-Fi access point of the passive sensor. In addition, the wireless device, or user thereof, is not required to knowingly participate in the passive sensor tracking task. The method may optionally include disposing the passive sensor in a location where the physical property is to be sensed. The method may optionally include providing a user access to the sensed physical property of the passive sensor. In one or more embodiments of the present invention, a non-transitory computer readable medium comprising software instructions, when executed by a processor, may perform any of the above-noted methods.

In one or more embodiments of the present invention, a non-transitory computer readable medium comprising software instructions, when executed by a processor, may perform any of the above-noted methods in accordance with one or more embodiments of the present invention.

Advantages of one or more embodiments of the present invention may include one or more of the following:
In one or more embodiments of the present invention, a method and system for passive sensor and/or asset tracking allows for passively tracking moveable sensors/assets by one or more potentially unrelated wireless devices that are in-range of assets broadcasting Wi-Fi signals even though the wireless device, or user thereof, may not even know they are participating in the sensor and/or asset tracking task. In this way, every smartphone in the vicinity of an asset that is desired to be tracked may, anonymously, and without awareness, participate in the asset tracking task.

In one or more embodiments of the present invention, a method and system for passive sensor and/or asset tracking leverages already existing devices, systems, and networks to passively track sensor data and, in some embodiments, the locations of sensors/assets without requiring the sensor/asset itself to have any connectivity to the Internet or other network connection.

In one or more embodiments of the present invention, a method and system for passive sensor and/or asset tracking may use Wi-Fi access points that do not require connectivity to any particular network, to identify one or more sensors/assets in the field using Wi-Fi wireless network discovery and Wi-Fi access point reporting features of modern smartphones and location services to passively identify sensor data and, in some embodiments, the location of the one or more sensors/assets. The moveable sensors/assets may be passively tracked by one or more wireless devices that may be independent and unrelated whenever any one or more of the wireless devices merely come into range of a sensor/asset associated with a pseudo Wi-Fi access point broadcasting Wi-Fi signals, without any intent or awareness on the part of the wireless device, or user thereof, that they are participating in the sensor/asset tracking task due to the nature of the Wi-Fi wireless network discovery protocol.

In one or more embodiments of the present invention, a method and system for passive sensor and/or asset tracking leverages existing infrastructure inherent in smartphones, operating systems, and software applications to their location as well as the unique identifying information, and other information, of Wi-Fi access points they encounter for improving the accuracy of location-based services that may be advantageously used for the sensor and/or asset tracking task without awareness.

In one or more embodiments of the present invention, a method and system for passive sensor and/or asset tracking uses the Wi-Fi wireless network discovery protocol as well as the Wi-Fi access point reporting feature of smartphones to passively track sensors/assets associated with Wi-Fi access points by one or more wireless devices without requiring that the wireless devices associate with any particular Wi-Fi access point, using publicly accessibly Wi-Fi signals, and in passive scanning applications, completely anonymously with respect to the asset tracking task.

In one or more embodiments of the present invention, a method and system for passive sensor and/or asset tracking uses a Wi-Fi access point associated with a sensor that does not require any connectivity to the Internet or any other network connection and does not require a GPS receiver, relying instead on the one or more wireless devices to report the time, date, and relative location of the in-range pseudo Wi-Fi access point associated with the asset.

In one or more embodiments of the present invention, a method and system for passive sensor and/or asset tracking, a sensor and/or asset tracking database receives unique information identifying, sensor data, and in some embodiments, information relating to the location of one or more pseudo Wi-Fi access points received directly or indirectly from one or more wireless devices or a Wi-Fi AP Database. The sensor data values and/or location of the sensor/asset may be tracked in the sensor and/or asset tracking database by the location of the Wi-Fi access point.

In one or more embodiments of the present invention, a method and system for passive sensor and/or asset tracking may use a Wi-Fi access point that allows for the assignment of alternative meanings to various parts of the beacon frame, probe response frame, or other management frame corresponding to sensor data or other information.

In one or more embodiments of the present invention, a method and system for passive sensor and/or asset tracking reduces theft by providing a trackable sensor/asset without conventional asset tracking hardware or software systems. If the perpetrator of the theft moves a trackable asset within range of any one or more wireless devices, the discovery of the Wi-Fi access point will be reported, and the sensor and/or asset tracking database may be able to locate the associated sensor/asset without the perpetrator knowing that the asset has been tracked.

In one or more embodiments of the present invention, a method and system for passive sensor and/or asset tracking substantially reduces the complexity and cost associated with deploying a comprehensive sensor and/or asset tracking system. As opposed to conventional asset tracking systems, one or more wireless devices, which may be completely independent of and unrelated to the sensor and/or asset tracking task, serve as the tracking infrastructure.

While the present invention has been described with respect to the above-noted embodiments, those skilled in the art, having the benefit of this disclosure, will recognize that other embodiments may be devised that are within the scope of the invention as disclosed herein. Accordingly, the scope of the invention should be limited only by the appended claims.

## Claims

1. A method of passive sensor tracking comprising:
associating, in a sensor tracking database (1110), unique identifying information (330) of a Wi-Fi access point (500, 600) with a sensor (710);
wherein the Wi-Fi access point (500, 600) transmits a management frame (300) comprising sensor data (375) of the sensor (710) as part of Wi-Fi wireless network discovery and is not required to provide any network connectivity of any kind at any time;
wherein one or more wireless devices (150) that encounter the Wi-Fi access point (500, 600) report observation data including the unique identifying information (330) of the Wi-Fi access point (500, 600) and the sensor data (375) of the management frame (300) to a Wi-Fi AP Database (1130), without requiring any particular wireless device (150) to authenticate to, associate with, or establish connectivity with any particular Wi-Fi access point (500, 600); and
wherein there is no communication between the sensor tracking database (1110) and the one or more wireless devices (150) that report encounters with the Wi-Fi access point (500, 600) to the Wi-Fi AP Database (1130);
receiving, at the sensor tracking database (1110), first observation data from the Wi-Fi AP Database (1130), the first observation data comprising the unique identifying information (330) of the Wi-Fi access point (500, 600) and the sensor data (375) of the sensor (710);
storing the sensor data (375) in the sensor tracking database (1110); and
providing a user access to the sensor data (375) in the sensor tracking database (1110).

2. The method of claim 1, further comprising: receiving, at the sensor tracking database (1110), second observation data of the Wi-Fi access point (500, 600) from one or more direct reporting wireless devices (150) that encounter the Wi-Fi access point (500, 600), the second observation data comprising the unique identifying information (330) of the Wi-Fi access point (500, 600) and second sensor data (375) of the sensor (710); and storing the second sensor data (375) in the sensor tracking database (1110).

3. The method of any of claims 1 to 2, wherein the sensor (710) is disposed on, attached to, or integrated with an asset or placed in a location where sensing is desired.

4. The method of any of claims 1 to 2, wherein the Wi-Fi access point (600) is a pseudo Wi-Fi access point.

5. The method of any of claims 1 to 2, wherein the unique identifying information (330) of the Wi-Fi access point (500, 600) comprises a BSSID of the Wi-Fi access point (500, 600).

6. The method of any of claims 1 to 2, wherein the sensor data (375) of the sensor (710) is stored in an SSID field of the management frame (300) transmitted by the Wi-Fi access point (500, 600).

7. The method of any of claims 1 to 2, wherein observation data further comprises location information of the Wi-Fi access point (500, 600).

8. The method of claim 7, further comprising:
determining a location of the sensor (710) based, at least in part, on observation data of the Wi-Fi access point (500, 600).

9. The method of claim 8, wherein the location information of the Wi-Fi access point (500, 600) comprises a latitude and a longitude of the Wi-Fi access point (500, 600).

10. The method of claim 7, wherein the location information of the Wi-Fi access point (500, 600) comprises a latitude and a longitude of a reporting wireless device (150) at or near the time of an encounter with the Wi-Fi access point (500, 600).

11. The method of claim 7, wherein the location information of the Wi-Fi access point (500, 600) comprises a received signal strength of the Wi-Fi access point (500, 600) measured by a reporting wireless device (150) at or near the time of an encounter with the Wi-Fi access point (500, 600).

12. The method of claim 7, wherein the location information of the Wi-Fi access point (500, 600) comprises a latitude and a longitude of one or more Wi-Fi access points (500, 600) near the Wi-Fi access point (500, 600) at or near the time of a reporting wireless device's (150) encounter with the Wi-Fi access point (500, 600).

13. The method of claim 7, wherein the location information of the Wi-Fi access point (500, 600) comprises a received signal strength of one or more other Wi-Fi access points (500, 600) near the Wi-Fi access point (500, 600) at or near the time of a reporting wireless device's (150) encounter with the Wi-Fi access point (500, 600).

14. The method of claim 8, wherein determining the location of the sensor (710) comprises using a latitude and longitude of the Wi-Fi access point (500, 600) as the location of the sensor (710).

15. The method of claim 8, wherein determining the location of the sensor (710) comprises using a latitude and longitude of a reporting wireless device (150) as the location of the sensor (710).

16. The method of claim 8, wherein determining the location of the sensor (710) comprises using a received signal strength of the Wi-Fi access point (500, 600) measured by a reporting wireless device (150) at or near the time of its encounter with the Wi-Fi access point (500, 600) to determine the location of the sensor (710).

17. The method of claim 8, wherein determining the location of the sensor (710) comprises using a latitude and longitude of one or more other Wi-Fi access points (500, 600) encountered by a reporting wireless device (150) at or near the time of its encounter with the Wi-Fi access point (500, 600) to determine the location of the sensor (710).

18. The method of claim 8, wherein determining the location of the sensor (710) comprises using a received signal strength of one or more Wi-Fi access points (500, 600) measured by a reporting wireless device (150) at or near the time of its encounter with the Wi-Fi access point (500, 600) to determine the location of the sensor (710).

## Patentansprüche

1. Verfahren zur passiven Sensorverfolgung, umfassend:
Zuordnen eindeutiger Identifizierungsinformationen (330) eines Wi-Fi-Zugangspunkts (500, 600) zu einem Sensor (710) in einer Sensorverfolgungsdatenbank (1110);
wobei der Wi-Fi-Zugangspunkt (500, 600) einen Verwaltungsrahmen (300), umfassend Sensordaten (375) des Sensors (710), als Teil der drahtlosen Wi-Fi-Netzwerkerkennung überträgt und nicht verpflichtet ist, zu irgendeinem Zeitpunkt irgendeine Art von Netzwerkkonnektivität bereitzustellen;
wobei ein oder mehrere drahtlose Vorrichtungen (150), die auf den Wi-Fi-Zugangspunkt (500, 600) treffen, Beobachtungsdaten einschließlich der eindeutigen Identifizierungsinformationen (330) des Wi-Fi-Zugangspunkts (500, 600) und der Sensordaten (375) des Verwaltungsrahmens (300) an eine Wi-Fi-Zugangsdatenbank (1130) melden, ohne dass eine bestimmte drahtlose Vorrichtung (150) sich bei einem bestimmten Wi-Fi-Zugangspunkt (500, 600) authentifizieren, assoziieren oder eine Verbindung zu ihm herstellen muss; und
wobei es keine Kommunikation zwischen der Sensorverfolgungsdatenbank (1110) und dem einen oder mehreren drahtlosen Vorrichtungen (150) gibt, die Begegnungen mit dem Wi-Fi-Zugangspunkt (500, 600) an die Wi-Fi-Zugangsdatenbank (1130) melden;
Empfangen von ersten Beobachtungsdaten von der Wi-Fi-AP-Datenbank (1130) in der Sensorverfolgungsdatenbank (1110), wobei die ersten Beobachtungsdaten die eindeutigen Identifikationsinformationen (330) des Wi-Fi-Zugangspunkts (500, 600) und die Sensordaten (375) des Sensors (710) umfassen; Speichern der Sensordaten (375) in der Sensorverfolgungsdatenbank (1110); und
Bereitstellen eines Benutzerzugangs zu den Sensordaten (375) in der Sensorverfolgungsdatenbank (1110).

2. Verfahren nach Anspruch 1, ferner umfassend:
Empfangen von zweiten Beobachtungsdaten des Wi-Fi-Zugangspunkts (500, 600) in der Sensorverfolgungsdatenbank (1110) von einer oder mehreren drahtlosen Direktmeldevorrichtungen (150), die auf den Wi-Fi-Zugangspunkt (500, 600) treffen, wobei die zweiten Beobachtungsdaten die eindeutigen Identifizierungsinformationen (330) des Wi-Fi-Zugangspunkts (500, 600) und zweite Sensordaten (375) des Sensors (710) umfassen; und Speichern der zweiten Sensordaten (375) in der Sensorverfolgungsdatenbank (1110) .

3. Verfahren nach einem der Ansprüche 1 bis 2, wobei der Sensor (710) auf einem Asset angeordnet, daran befestigt oder in dieses integriert ist oder an einem Ort platziert wird, an dem eine Erfassung gewünscht wird.

4. Verfahren nach einem der Ansprüche 1 bis 2, wobei der Wi-Fi-Zugangspunkt (600) ein Pseudo-Wi-Fi-Zugangspunkt ist.

5. Verfahren nach einem der Ansprüche 1 bis 2, wobei die eindeutigen Identifizierungsinformationen (330) des Wi-Fi-Zugangspunkts (500, 600) eine BSSID des Wi-Fi-Zugangspunkts (500, 600) umfassen.

6. Verfahren nach einem der Ansprüche 1 bis 2, wobei die Sensordaten (375) des Sensors (710) in einem SSID-Feld des vom Wi-Fi-Zugangspunkt (500, 600) übertragenen Verwaltungsrahmens (300) gespeichert werden.

7. Verfahren nach einem der Ansprüche 1 bis 2, wobei die Beobachtungsdaten ferner Ortsinformationen des Wi-Fi-Zugangspunkts (500, 600) umfassen.

8. Verfahren nach Anspruch 7, ferner umfassend:
Bestimmen eines Orts des Sensors (710), mindestens teilweise basierend auf Beobachtungsdaten des Wi-Fi-Zugangspunkts (500, 600).

9. Verfahren nach Anspruch 8, wobei die Standortinformationen des Wi-Fi-Zugangspunkts (500, 600) einen Breitengrad und einen Längengrad des Wi-Fi-Zugangspunkts (500, 600) umfassen.

10. Verfahren nach Anspruch 7, wobei die Standortinformationen des Wi-Fi-Zugangspunkts (500, 600) einen Breitengrad und einen Längengrad einer drahtlosen Meldevorrichtung (150) zum oder in der Nähe des Zeitpunkts einer Begegnung mit dem Wi-Fi-Zugangspunkt (500, 600) umfassen.

11. Verfahren nach Anspruch 7, wobei die Standortinformationen des Wi-Fi-Zugangspunkts (500, 600) eine Empfangssignalstärke des Wi-Fi-Zugangspunkts (500, 600) umfassen, die von einer drahtlosen Meldevorrichtung (150) zum oder nahe dem Zeitpunkt einer Begegnung mit dem Wi-Fi-Zugangspunkt (500, 600) gemessen wurde.

12. Verfahren nach Anspruch 7, wobei die Standortinformationen des Wi-Fi-Zugangspunkts (500, 600) einen Breitengrad und einen Längengrad eines oder mehrerer Wi-Fi-Zugangspunkte (500, 600) in der Nähe des Wi-Fi-Zugangspunkts (500, 600) zum Zeitpunkt oder in der Nähe des Zeitpunkts der Begegnung einer drahtlosen Meldevorrichtung (150) mit dem Wi-Fi-Zugangspunkt (500, 600) umfassen.

13. Verfahren nach Anspruch 7, wobei die Standortinformationen des Wi-Fi-Zugangspunkts (500, 600) eine empfangene Signalstärke eines oder mehrerer anderer Wi-Fi-Zugangspunkte (500, 600) in der Nähe des Wi-Fi-Zugangspunkts (500, 600) zum oder nahe dem Zeitpunkt der Begegnung einer drahtlosen Meldevorrichtung (150) mit dem Wi-Fi-Zugangspunkt (500, 600) umfassen.

14. Verfahren nach Anspruch 8, wobei das Bestimmen des Orts des Sensors (710) das Verwenden eines Breitengrads und eines Längengrads des Wi-Fi-Zugangspunkts (500, 600) als den Ort des Sensors (710) umfasst.

15. Verfahren nach Anspruch 8, wobei das Bestimmen des Orts des Sensors (710) die Verwendung eines Breitengrads und eines Längengrads einer drahtlosen Meldevorrichtung (150) als den Ort des Sensors (710) umfasst.

16. Verfahren nach Anspruch 8, wobei das Bestimmen des Orts des Sensors (710) das Verwenden einer empfangenen Signalstärke des Wi-Fi-Zugangspunkts (500, 600) umfasst, die von einer drahtlosen Meldevorrichtung (150) zu oder nahe dem Zeitpunkt ihrer Begegnung mit dem Wi-Fi-Zugangspunkt (500, 600) gemessen wird, um den Ort des Sensors (710) zu bestimmen.

17. Verfahren nach Anspruch 8, wobei das Bestimmen des Orts des Sensors (710) das Verwenden eines Breitengrads und eines Längengrads eines oder mehrerer anderer Wi-Fi-Zugangspunkte (500, 600) umfasst, die von einer drahtlosen Meldevorrichtung (150) zum oder in der Nähe des Zeitpunkts ihrer Begegnung mit dem Wi-Fi-Zugangspunkt (500, 600) angetroffen werden, um den Ort des Sensors (710) zu bestimmen.

18. Verfahren nach Anspruch 8, wobei das Bestimmen des Orts des Sensors (710) die Verwendung einer empfangenen Signalstärke eines oder mehrerer Wi-Fi-Zugangspunkte (500, 600) umfasst, die von einer drahtlosen Meldevorrichtung (150) zu oder nahe dem Zeitpunkt ihrer Begegnung mit dem Wi-Fi-Zugangspunkt (500, 600) gemessen wird, um den Ort des Sensors (710) zu bestimmen.

## Revendications

1. Procédé de suivi de capteur passif comprenant :
l'association, dans une base de données de suivi de capteur (1110), d'informations d'identification uniques (330) d'un point d'accès Wi-Fi (500, 600) avec un capteur (710) ;
dans lequel le point d'accès Wi-Fi (500, 600) transmet une trame de gestion (300) comprenant des données de capteur (375) du capteur (710) dans le cadre de la découverte de réseau sans fil Wi-Fi et n'est pas tenu de fournir une connectivité réseau de quelque nature que ce soit à aucun moment ;
dans lequel un ou plusieurs dispositifs sans fil (150) qui rencontrent le point d'accès Wi-Fi (500, 600) rapportent des données d'observation comportant les informations d'identification uniques (330) du point d'accès Wi-Fi (500, 600) et les données de capteur (375) de la trame de gestion (300) à une base de données AP Wi-Fi (1130), sans nécessiter qu'un dispositif sans fil (150) particulier s'authentifie, s'associe, ou établisse une connectivité avec un quelconque point d'accès Wi-Fi particulier (500, 600) ; et
dans lequel il n'y a aucune communication entre la base de données de suivi de capteur (1110) et les un ou plusieurs dispositifs sans fil (150) qui rapportent des rencontres avec le point d'accès Wi-Fi (500, 600) à la base de données AP Wi-Fi (1130) ;
la réception, au niveau de la base de données de suivi de capteur (1110), de premières données d'observation provenant de la base de données AP Wi-Fi (1130), les premières données d'observation comprenant les informations d'identification uniques (330) du point d'accès Wi-Fi (500, 600) et les données de capteur (375) du capteur (710) ; le stockage des données de capteur (375) dans la base de données de suivi de capteur (1110) ; et la fourniture d'un accès utilisateur aux données de capteur (375) dans la base de données de suivi de capteur (1110) .

2. Procédé selon la revendication 1, comprenant également : la réception, au niveau de la base de données de suivi de capteur (1110), de secondes données d'observation du point d'accès Wi-Fi (500, 600) provenant d'un ou plusieurs dispositifs sans fil (150) de rapport direct qui rencontrent le point d'accès Wi-Fi (500, 600), les secondes données d'observation comprenant les informations d'identification uniques (330) du point d'accès Wi-Fi (500, 600) et de secondes données de capteur (375) du capteur (710) ; et le stockage des secondes données de capteur (375) dans la base de données de suivi de capteur (1110).

3. Procédé selon l'une quelconque des revendications 1 et 2, dans lequel le capteur (710) est disposé sur, fixé à, ou intégré à un actif ou est placé dans un emplacement où la détection est souhaitée.

4. Procédé selon l'une quelconque des revendications 1 et 2, dans lequel le point d'accès Wi-Fi (600) est un pseudo-point d'accès Wi-Fi.

5. Procédé selon l'une quelconque des revendications 1 et 2, dans lequel les informations d'identification uniques (330) du point d'accès Wi-Fi (500, 600) comprennent un BSSID du point d'accès Wi-Fi (500, 600).

6. Procédé selon l'une quelconque des revendications 1 et 2, dans lequel les données de capteur (375) du capteur (710) sont stockées dans un champ SSID de la trame de gestion (300) transmise par le point d'accès Wi-Fi (500, 600) .

7. Procédé selon l'une quelconque des revendications 1 et 2, dans lequel les données d'observation comprennent également des informations de localisation du point d'accès Wi-Fi (500, 600).

8. Procédé selon la revendication 7, comprenant également :
la détermination d'un emplacement du capteur (710) sur la base, au moins en partie, de données d'observation du point d'accès Wi-Fi (500, 600).

9. Procédé selon la revendication 8, dans lequel les informations de localisation du point d'accès Wi-Fi (500, 600) comprennent une latitude et une longitude du point d'accès Wi-Fi (500, 600).

10. Procédé selon la revendication 7, dans lequel les informations de localisation du point d'accès Wi-Fi (500, 600) comprennent une latitude et une longitude d'un dispositif sans fil de rapport (150) au moment ou à proximité du moment d'une rencontre avec le point d'accès Wi-Fi (500, 600).

11. Procédé selon la revendication 7, dans lequel les informations de localisation du point d'accès Wi-Fi (500, 600) comprennent une intensité de signal reçue du point d'accès Wi-Fi (500, 600) mesurée par un dispositif sans fil de rapport (150) au moment ou à proximité du moment d'une rencontre avec le point d'accès Wi-Fi (500, 600).

12. Procédé selon la revendication 7, dans lequel les informations de localisation du point d'accès Wi-Fi (500, 600) comprennent une latitude et une longitude d'un ou plusieurs points d'accès Wi-Fi (500, 600) à proximité du point d'accès Wi-Fi (500, 600) au moment ou à proximité du moment de la rencontre d'un dispositif sans fil de rapport (150) avec le point d'accès Wi-Fi (500, 600).

13. Procédé selon la revendication 7, dans lequel les informations de localisation du point d'accès Wi-Fi (500, 600) comprennent une intensité de signal reçue d'un ou plusieurs autres points d'accès Wi-Fi (500, 600) à proximité du point d'accès Wi-Fi (500, 600) au moment ou à proximité du moment de la rencontre d'un dispositif sans fil de rapport (150) avec le point d'accès Wi-Fi (500, 600) .

14. Procédé selon la revendication 8, dans lequel la détermination de l'emplacement du capteur (710) comprend l'utilisation d'une latitude et d'une longitude du point d'accès Wi-Fi (500, 600) comme emplacement du capteur (710) .

15. Procédé selon la revendication 8, dans lequel la détermination de l'emplacement du capteur (710) comprend l'utilisation d'une latitude et d'une longitude d'un dispositif sans fil de rapport (150) comme emplacement du capteur (710).

16. Procédé selon la revendication 8, dans lequel la détermination de l'emplacement du capteur (710) comprend l'utilisation d'une intensité de signal reçue du point d'accès Wi-Fi (500, 600) mesurée par un dispositif sans fil de rapport (150) au moment ou à proximité du moment de sa rencontre avec le point d'accès Wi-Fi (500, 600) pour déterminer l'emplacement du capteur (710).

17. Procédé selon la revendication 8, dans lequel la détermination de l'emplacement du capteur (710) comprend l'utilisation d'une latitude et d'une longitude d'un ou plusieurs autres points d'accès Wi-Fi (500, 600) rencontrés par un dispositif sans fil de rapport (150) au moment ou à proximité du moment de sa rencontre avec le point d'accès Wi-Fi (500, 600) pour déterminer l'emplacement du capteur (710).

18. Procédé selon la revendication 8, dans lequel la détermination de l'emplacement du capteur (710) comprend l'utilisation d'une intensité de signal reçue d'un ou plusieurs points d'accès Wi-Fi (500, 600) mesurée par un dispositif sans fil de rapport (150) au moment ou à proximité du moment de de sa rencontre avec le point d'accès Wi-Fi (500, 600) pour déterminer l'emplacement du capteur (710).
